(19) **Europäisches Patentamt / European Patent Office / Office européen des brevets**

(11) **EP 4 380 265 A1**

(12) **EUROPEAN PATENT APPLICATION**
published in accordance with Art. 153(4) EPC

(43) Date of publication:
**05.06.2024 Bulletin 2024/23**

(21) Application number: **22851870.0**

(22) Date of filing: **19.07.2022**

(51) International Patent Classification (IPC):
**H04W 68/02** (2009.01)

(52) Cooperative Patent Classification (CPC):
**H04W 68/02**

(86) International application number:
**PCT/CN2022/106353**

(87) International publication number:
**WO 2023/011156 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2021 CN 202110876785**

(71) Applicant: **Huawei Technologies Co., Ltd.
Shenzhen, Guangdong 518129 (CN)**

(72) Inventors:
• **ZHOU, Han**
  **Shenzhen, Guangdong 518129 (CN)**
• **TIE, Xiaolei**
  **Shenzhen, Guangdong 518129 (CN)**
• **HUANG, Wenwen**
  **Shenzhen, Guangdong 518129 (CN)**
• **ZHANG, Zhanzhan**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **METHOD AND APPARATUS FOR PAGING**

(57) This application provides a paging method and apparatus, to resolve a problem of how to perform mapping between a paging early indication PEI and a plurality of paging occasions POs or a plurality of PO sub-groups. The method includes: A first terminal device UE receives first information, where the first information indicates whether a paging occasion PO sub-group configured for a first paging frame PF carries paging data, the first PF is located in a first time window, the first UE corresponds to a first PO sub-group, and the first PO sub-group belongs to one of PO sub-groups configured for the first PF. The first UE determines, based on the first PO sub-group and a first association relationship, that the first information indicates whether the first PO sub-group carries paging data, where the first association relationship indicates a correspondence between the first information and the PO sub-group configured for the first PF.

200

First terminal device — First network device

S210: Send first information, where the first information indicates whether a PO sub-group configured for a first PF carries paging data

S220: Determine that the first information indicates whether a first PO sub-group carries paging data, where the first PO sub-group corresponds to the first terminal device

FIG. 9

EP 4 380 265 A1

**Description**

This application claims priority to Chinese Patent Application No. 202110876785.9, filed with the China National Intellectual Property Administration on July 31, 2021 and entitled "PAGING METHOD AND APPARATUS", which is incorporated herein by reference in its entirety.

**TECHNICAL FIELD**

This application relates to the communication field, and more specifically, to a paging method and apparatus.

**BACKGROUND**

In new radio (new radio, NR), there are three states of user equipment (user equipment, UE): a radio resource control idle (radio resource control idle, RRC_IDLE) state, an RRC inactive (RRC_INACTIVE) state, and an RRC connected (RRC_CONNECTED) state. When a network device needs to send downlink data to UE in an RRC_IDLE state or an RRC_INACTIVE state, the network device needs to first page the UE through a paging (paging) procedure, to indicate the UE to establish or resume an RRC connection, and then can perform data transmission.

Before receiving paging, the UE does not know whether the network device actually sends paging to the UE. Therefore, the UE in the RRC_IDLE or the RRC_INACTIVE state attempts to receive paging downlink control information (downlink control information, DCI) on a paging occasion (paging occasion, PO) in each paging frame (paging frame, PF), and receives a paging physical downlink shared channel (physical downlink shared channel, PDSCH) based on scheduling of the paging DCI. Only after the UE completely parses paging PDSCH data, the UE knows whether the network device actually sends paging data to the UE. If the network device does not send paging to the UE on one PO, a waste of resources is caused when the UE receives and parses data on the PO.

To resolve a power consumption problem of receiving paging by a terminal device in an idle state or an inactive state, first information is planned to be introduced in an NR system. The first information may be referred to as a paging advance indication (paging early indication, PEI), and is also referred to as a paging indication (paging indication, PI) in the 3rd generation partnership project (3rd generation partnership project, 3GPP). The first information is sent before the PO; and the UE may receive the first information before the PO, and determine, based on an indication of the first information, whether to receive the paging DCI and the paging PDSCH on the PO, to reduce power consumption. Currently, 3GPP is designing a PEI for the NR. On a physical level, the PEI may be sent through a downlink control channel (physical downlink control channel, PDCCH) or based on DCI, or may be sent by using a secondary synchronization signal (secondary synchronization signal, SSS), a tracking reference signal (tracking reference signal, TRS), or a channel state information reference signal (channel state information reference signal, CSI-RS).

However, in actual application of the first information, the DCI used by the PEI may carry a plurality of bits, and the SSS and the CSI-RS may also use a plurality of sequences. This means that one PEI may correspond to a plurality of POs, in other words, one PEI may be sent to separately indicate whether paging exists on a plurality of consecutive POs. How one PEI indicates a plurality of POs or a plurality of sub-groups (sub-group) in one PO does not provided in a current solution. Therefore, how to design a manner of mapping between a PEI and a plurality of POs or a plurality of PO sub-groups becomes an urgent problem to be resolved.

**SUMMARY**

This application provides a paging method and apparatus, to resolve a problem of how to perform mapping between a PEI and a plurality of POs or a plurality of PO sub-groups.

According to a first aspect, a paging method is provided, and includes: A first terminal device UE receives first information, where the first information indicates whether a paging occasion PO sub-group configured for a first paging frame PF carries paging data, the first PF is located in a first time window, the first UE corresponds to a first PO sub-group, and the first PO sub-group belongs to one of PO sub-groups configured for the first PF. The first UE determines, based on the first PO sub-group and a first association relationship, that the first information indicates whether the first PO sub-group carries paging data, where the first association relationship indicates a correspondence between the first information and the PO sub-group configured for the first PF.

For example, the first information indicates whether a PO sub-group configured for one or more PFs in the first time window carries paging data. The PO sub-group configured for the one or more PFs may or may not be located in the first time window.

For example, the first information may indicate whether PO sub-groups configured for all PFs in the first time window carry paging data.

It should be understood that the PO sub-group configured for the PF may also be referred to as a PO sub-group defined for the PF, and is all PO sub-groups defined or configured for the PF.

It should be noted that a sub-group on the PO may be understood as grouping UEs that monitor a paging PDCCH on the PO, and each group may be referred to as a PO sub-group. When paging UE in an idle state or an inactive state exists on the PO, paging may or may not exist in the PO sub-group on the PO. The PO sub-group in the solution of this application may be replaced with the PO. To be specific, when a PO to which the PO sub-group belongs is not divided, the PO sub-group is the PO. In other words, a solution related to the PO sub-group is also applicable to the PO.

In the foregoing solution, content indicated by the first information is defined, so that the UE can obtain, based on the first association relationship, the correspondence between the first information and the PO sub-group configured for the first PF, and further, the UE can learn whether the PO or the PO sub-group corresponding to the UE indicated by the first information carries paging data (or referred to as whether paging exists). According to the foregoing solution, a problem of how to perform mapping when the first information indicates a plurality of POs or PO sub-groups can be resolved.

In a possible implementation, a part of the PO sub-groups configured for the first PF are included in a second time window, and the second time window is different from the first time window.

In this manner, when a large quantity of POs or PO sub-groups are configured for the first PF or a large quantity of monitoring occasions are included in each PO or PO sub-group, the first PF may cross a plurality of time windows. In this case, the PO or the PO sub-group indicated by the first information crosses a plurality of time windows. In this manner, a manner of configuring the PO or the PO sub-group for the first PF is extended.

In a possible implementation, a type of the first information is downlink control information DCI, and that the first association relationship indicates a correspondence between the first information and the PO sub-group configured for the first PF includes: The first association relationship indicates a correspondence between a bit index of the first information and a number of the PO sub-group configured for the first PF.

It should be noted that the number of the PO sub-group may be an index of a PO sub-group calculated by using a formula in the current solution, or may be a number corresponding to a PO sub-group obtained by further sorting the index in a specific order. This is not limited in this application.

In a possible implementation, a quantity of bits of the first information is greater than or equal to a quantity of PO sub-groups configured for the first PF, and the bits of the first information is in a one-to-one correspondence with the PO sub-groups configured for the first PF; or a quantity of bits of the first information is less than a quantity of PO sub-groups configured for the first PF, and each of at least one bit of the first information corresponds to a plurality of PO sub-groups in the PO sub-groups configured for the first PF.

In the foregoing manner, when the first information is sent by using DCI, a mapping relationship may be formed by associating a bit index (or numbering the bit of the first information, which is not limited in this application) of the first information with a number (or an index, and a manner of numbering the PO sub-group or designing an index of the PO sub-group is not limited in this application) of the PO sub-group configured for the first PF. In the foregoing manner, a problem of how to perform mapping between a plurality of bits of the first information and a PO or a PO sub-group configured for the first PF can be resolved.

In a possible implementation, a type of the first information is a secondary synchronization signal SSS, a tracking reference signal TRS, or a channel state information reference signal CSI-RS, and that the first association relationship indicates a correspondence between the first information and the PO sub-group configured for the first PF includes: The first association relationship indicates a correspondence between a sequence index of the first information and a number of the PO sub-group configured for the first PF.

In a possible implementation, a quantity of sequences configured for the first information is greater than or equal to a quantity of PO sub-groups configured for the first PF, and the sequences of the first information are in a one-to-one correspondence with the PO sub-groups configured for the first PF; or a quantity of sequences configured for the first information is less than a quantity of PO sub-groups configured for the first PF, and each of at least one sequence of the first information corresponds to a plurality of PO sub-groups in the PO sub-groups configured for the first PF.

It should be understood that the sequence configured for the first information means that a network side configures one or more sequences for sending the first information, and selects one or more sequences from the sequences to send the first information.

In the foregoing manner, when the first information is sent in a sequence manner, a mapping relationship may be formed by associating a sequence index (or numbering the sequence configured for the first information, which is not limited in this application) of the first information with a number (or an index, and a manner of numbering the PO sub-group or designing an index of the PO sub-group is not limited in this application) of the PO sub-group configured for the first PF. In the foregoing manner, a problem of how to perform mapping between a plurality of sequences configured for the first information and a PO or a PO sub-group configured for the first PF can be resolved.

In a possible implementation, a type of the first information is a secondary synchronization signal SSS, a tracking reference signal TRS, or a channel state information reference signal CSI-RS, and that the first association relationship indicates a correspondence between the first information and the PO sub-group configured for the first PF includes: The first association relationship indicates a correspondence between a location of a resource configured for the first information and a number of the PO sub-group configured for the first PF.

In a possible implementation, a quantity of locations of resources configured for the first information is greater than or equal to a quantity of PO sub-groups configured for the first PF, and the locations of the resources configured for the first information are in a one-to-one correspondence with the PO sub-groups configured for the first PF; or a quantity of locations of resources configured for the first information is less than a quantity of PO sub-groups configured for the first PF, and each of at least one location of at least one resource configured for the first information corresponds to a plurality of PO sub-groups in the PO sub-groups configured for the first PF.

It should be understood that, the location of the resource configured for the first information means that a network side configures one or more resources for sending the first information, where each resource corresponds to one time-frequency location, and the network side selects one or more resources from the resources to send the first information.

In the foregoing manner, when the first information is sent in a sequence manner, a mapping relationship may be formed by associating a location of a resource configured for the first information with a number (or an index, and a manner of numbering the PO sub-group or designing an index of the PO sub-group is not limited in this application) of the PO sub-group configured for the first PF. In the foregoing manner, a problem of how to perform mapping between a plurality of resources configured for the first information and a PO or a PO sub-group configured for the first PF can be resolved. Therefore, the UE can determine, based on a resource location at which a PO or a PO sub-group corresponding to the UE is located and the first association relationship, whether paging exists in the PO or the PO sub-group.

In a possible implementation, a type of the first information is a secondary synchronization signal SSS, a tracking reference signal TRS, or a channel state information reference signal CSI-RS, and that the first association relationship indicates a correspondence between the first information and the PO sub-group configured for the first PF includes: The first association relationship indicates a correspondence between a number of the PO sub-group configured for the first PF and a combination of a sequence index of the first information and a location of a resource configured for the first information.

In a possible implementation, a product of a quantity of sequences configured for the first information and a quantity of locations of resources configured for the first information is greater than or equal to a quantity of PO sub-groups configured for the first PF, and the sequences of the first information are in a one-to-one correspondence with the PO sub-groups configured for the first PF; or a product of a quantity of sequences configured for the first information and a quantity of locations of resources configured for the first information is less than a quantity of PO sub-groups configured for the first PF, and each of at least one sequence of the first information corresponds to a plurality of PO sub-groups in the PO sub-groups configured for the first PF.

In the foregoing manner, when a plurality of sequences may be sent on each resource, a mapping relationship between the first information and the PO sub-group configured for the first PF is determined based on the product of the quantity of sequences configured for the first information and the quantity of locations of the resources configured for the first information and the quantity of PO sub-groups configured for the first PF. In the foregoing manner, a problem of how to perform mapping between the first information and a PO or a PO sub-group configured for the first PF can be resolved when each of a plurality of resources configured for the first information is configured to send a plurality of sequences.

According to a second aspect, a paging method is provided, and includes: A first network device determines first information based on a first association relationship, where the first association relationship indicates a correspondence between the first information and a paging occasion PO sub-group configured for a first paging frame PF, the first PF is located in a first time window, and the first information indicates whether the PO sub-group configured for the first PF carries paging data. The first network device sends the first information.

For example, the first information indicates whether a PO sub-group configured for one or more PFs in the first time window carries paging data. The PO sub-group configured for the one or more PFs may or may not be located in the first time window.

For example, the first information may indicate whether PO sub-groups configured for all PFs in the first time window carry paging data.

It should be understood that the PO sub-group configured for the PF may also be referred to as a PO sub-group defined for the PF, and is all PO sub-groups defined or configured for the PF.

It should be noted that a sub-group on the PO may be understood as grouping UEs that monitor a paging PDCCH on the PO, and each group may be referred to as a PO sub-group. When paging UE in an idle state or an inactive state exists on the PO, paging may or may not exist in the PO sub-group on the PO. The PO sub-group in the solution of this application may be replaced with the PO. To be specific, when a PO to which the PO sub-group belongs is not divided, the PO sub-group is the PO. In other words, a solution related to the PO sub-group is also applicable to the PO.

In the foregoing solution, content indicated by the first information is defined, so that a network side can obtain, based on the first association relationship, the correspondence between the first information and the PO sub-group configured for the first PF, and further, determine the first information based on the first association relationship, to indicate whether the PO or the PO sub-group configured for the first PF carries paging data (or referred to as whether paging exists). According to the foregoing solution, a problem of how to perform mapping when the first information indicates a plurality of POs or PO sub-groups can be resolved.

In a possible implementation, a part of the PO sub-groups configured for the first PF are included in a second time window, and the second time window is different from the first time window.

In this manner, when a large quantity of POs or PO sub-groups are configured for the first PF or a large quantity of monitoring occasions are included in each PO or PO sub-group, the first PF may cross a plurality of time windows. In this case, the PO or the PO sub-group indicated by the first information crosses a plurality of time windows. In this manner, a manner of configuring the PO or the PO sub-group for the first PF is extended.

In a possible implementation, a type of the first information is downlink control information DCI, and that the first association relationship indicates a correspondence between the first information and a paging occasion PO sub-group configured for a first paging frame PF includes: The first association relationship indicates a correspondence between a bit index of the first information and a number of the PO sub-group configured for the first PF.

In a possible implementation, a quantity of bits of the first information is greater than or equal to a quantity of PO sub-groups configured for the first PF, and the bits of the first information is in a one-to-one correspondence with the PO sub-groups configured for the first PF; or a quantity of bits of the first information is less than a quantity of PO sub-groups configured for the first PF, and each of at least one bit of the first information corresponds to a plurality of PO sub-groups in the PO sub-groups configured for the first PF.

In the foregoing manner, when the first information is sent by using DCI, a mapping relationship may be formed by associating a bit index (or numbering the bit of the first information, which is not limited in this application) of the first information with a number (or an index, and a manner of numbering the PO sub-group or designing an index of the PO sub-group is not limited in this application) of the PO sub-group configured for the first PF. In the foregoing manner, a problem of how to perform mapping between a plurality of bits of the first information and a PO or a PO sub-group configured for the first PF can be resolved.

In a possible implementation, a type of the first information is a secondary synchronization signal SSS, a tracking reference signal TRS, or a channel state information reference signal CSI-RS, and that the first association relationship indicates a correspondence between the first information and a paging occasion PO sub-group configured for a first paging frame PF includes: The first association relationship indicates a correspondence between a sequence index of the first information and a number of the PO sub-group configured for the first PF.

In a possible implementation, a quantity of sequences configured for the first information is greater than or equal to a quantity of PO sub-groups configured for the first PF, and the sequences of the first information are in a one-to-one correspondence with the PO sub-groups configured for the first PF; or a quantity of sequences configured for the first information is less than a quantity of PO sub-groups configured for the first PF, and each of at least one sequence of the first information corresponds to a plurality of PO sub-groups in the PO sub-groups configured for the first PF.

It should be understood that the sequence configured for the first information means that a network side configures one or more sequences for sending the first information, and selects one or more sequences from the sequences to send the first information.

In the foregoing manner, when the first information is sent in a sequence manner, a mapping relationship may be formed by associating a sequence index (or numbering the sequence configured for the first information, which is not limited in this application) of the first information with a number (or an index, and a manner of numbering the PO sub-group or designing an index of the PO sub-group is not limited in this application) of the PO sub-group configured for the first PF. In the foregoing manner, a problem of how to perform mapping between a plurality of sequences configured for the first information and a PO or a PO sub-group configured for the first PF can be resolved.

In a possible implementation, a type of the first information is a secondary synchronization signal SSS, a tracking reference signal TRS, or a channel state information reference signal CSI-RS, and that the first association relationship indicates a correspondence between the first information and a paging occasion PO sub-group configured for a first paging frame PF includes: The first association relationship indicates a correspondence between a location of a resource configured for the first information and a number of the PO sub-group configured for the first PF.

In a possible implementation, a quantity of locations of resources configured for the first information is greater than or equal to a quantity of PO sub-groups configured for the first PF, and the locations of the resources configured for the first information are in a one-to-one correspondence with the PO sub-groups configured for the first PF; or a quantity of locations of resources configured for the first information is less than a quantity of PO sub-groups configured for the first PF, and each of at least one location of at least one resource configured for the first information corresponds to a plurality of PO sub-groups in the PO sub-groups configured for the first PF.

It should be understood that, the location of the resource configured for the first information means that a network side configures one or more resources for sending the first information, where each resource corresponds to one time-frequency location, and the network side selects one or more resources from the resources to send the first information.

In the foregoing manner, when the first information is sent in a sequence manner, a mapping relationship may be formed by associating a location of a resource configured for the first information with a number (or an index, and a manner of numbering the PO sub-group or designing an index of the PO sub-group is not limited in this application) of the PO sub-group configured for the first PF. In the foregoing manner, a problem of how to perform mapping between a plurality of resources configured for the first information and a PO or a PO sub-group configured for the first PF can be resolved. Therefore, the UE can determine, based on a resource location at which a PO or a PO sub-group corresponding to the UE is located and the first association relationship, whether paging exists in the PO or the PO sub-group.

In a possible implementation, a type of the first information is a secondary synchronization signal SSS, a tracking reference signal TRS, or a channel state information reference signal CSI-RS, and that the first association relationship indicates a correspondence between the first information and a paging occasion PO sub-group configured for a first paging frame PF includes: The first association relationship indicates a correspondence between a number of the PO sub-group configured for the first PF and a combination of a sequence index of the first information and a location of a resource configured for the first information.

In a possible implementation, a product of a quantity of sequences configured for the first information and a quantity of locations of resources configured for the first information is greater than or equal to a quantity of PO sub-groups configured for the first PF, and the sequences of the first information are in a one-to-one correspondence with the PO sub-groups configured for the first PF; or a product of a quantity of sequences configured for the first information and a quantity of locations of resources configured for the first information is less than a quantity of PO sub-groups configured for the first PF, and each of at least one sequence of the first information corresponds to a plurality of PO sub-groups in the PO sub-groups configured for the first PF.

In the foregoing manner, when a plurality of sequences may be sent on each resource, a mapping relationship between the first information and the PO sub-group configured for the first PF is determined based on the product of the quantity of sequences configured for the first information and the quantity of locations of the resources configured for the first information and the quantity of PO sub-groups configured for the first PF. In the foregoing manner, a problem of how to perform mapping between the first information and a PO or a PO sub-group configured for the first PF can be resolved when each of a plurality of resources configured for the first information is configured to send a plurality of sequences.

According to a third aspect, a paging method is provided, and includes: A first terminal device UE receives first information, where the first information indicates whether a paging occasion PO sub-group included in a first time window carries paging data, the first UE corresponds to a first PO sub-group, and the first PO sub-group belongs to one of PO sub-groups included in the first time window. The first UE determines a first association relationship based on a quantity of PO sub-groups included in the first time window, where the first association relationship indicates a correspondence between the first information and the PO sub-group included in the first time window. The first UE determines, based on the first PO sub-group and the first association relationship, that the first information indicates whether the first PO sub-group carries paging data.

It should be understood that the PO sub-group included in the first time window is all PO sub-groups included in the first time window, that is, all PO sub-groups in the first time window in time domain.

It should be noted that, in the foregoing manner, quantities of PO sub-groups included in different time windows may be different, that is, quantities of PO sub-groups indicated by different first information may be different. Therefore, the UE needs to obtain a quantity of PO sub-groups included in each time window, which may be calculated by the UE, or the network side may send indication information to indicate a quantity of PO sub-groups included in the time window, to determine a mapping relationship between the first information and the PO sub-group included in the time window.

It should be noted that a sub-group on the PO may be understood as grouping UEs that monitor a paging PDCCH on the PO, and each group may be referred to as a PO sub-group. When paging UE in an idle state or an inactive state exists on the PO, paging may or may not exist in the PO sub-group on the PO. The PO sub-group in the solution of this application may be replaced with the PO. To be specific, when a PO to which the PO sub-group belongs is not divided, the PO sub-group is the PO. In other words, a solution related to the PO sub-group is also applicable to the PO.

In the foregoing solution, content indicated by the first information is defined, so that the UE can obtain, based on the first association relationship, the correspondence between the first information and the PO sub-group (or the PO) included in the first time window, and further, the UE can learn whether the PO or the PO sub-group corresponding to the UE indicated by the first information carries paging data (or referred to as whether paging exists). According to the foregoing solution, a problem of how to perform mapping when the first information indicates a plurality of POs or PO sub-groups can be resolved. In addition, when an excessive quantity of POs are configured for a PF in the first time window or an excessive quantity of MOs are included in a PO configured for a PF, a paging delay may be caused when the PO configured for the PF spans a long time. According to the foregoing solution, the PO or the PO sub-group indicated by the first information is at a granularity of a time window, so that impact caused by the paging delay can be reduced.

In a possible implementation, a first monitoring occasion MO corresponding to each of the PO sub-groups included in the first time window is included in the first time window.

In this solution, when MOs corresponding to POs or PO sub-groups included in the first time window are located in a plurality of time windows, and the plurality of time windows correspond to a plurality of pieces of first information, it may be specified that the PO or the PO sub-group is indicated by specific first information. As shown in the foregoing solution, the PO or the PO sub-group is indicated by first information corresponding to a time window in which a first MO corresponding to the PO or the PO sub-group is located. According to this solution, content indicated by the first information can be more accurate.

In a possible implementation, a type of the first information is downlink control information DCI, and that the first association relationship indicates a correspondence between the first information and the PO sub-group included in the first time window includes: The first association relationship indicates a correspondence between a bit index of the first information and a number of the PO sub-group included in the first time window.

In a possible implementation, a quantity of bits of the first information is greater than or equal to a quantity of PO sub-groups included in the first time window, and the bits of the first information are in a one-to-one correspondence with the PO sub-groups included in the first time window; or a quantity of bits of the first information is less than a quantity of PO sub-groups included in the first time window, and each of at least one bit of the first information corresponds to a plurality of PO sub-groups in the PO sub-groups included in the first time window.

In the foregoing manner, when the first information is sent by using DCI, a mapping relationship may be formed by associating a bit index (or numbering the bit of the first information, which is not limited in this application) of the first information with a number (or an index, and a manner of numbering the PO sub-group or designing an index of the PO sub-group is not limited in this application) of the PO sub-group included in the first time window. In the foregoing manner, a problem of how to perform mapping between a plurality of bits of the first information and a PO or a PO sub-group included in the first time window can be resolved.

In a possible implementation, a type of the first information is a secondary synchronization signal SSS, a tracking reference signal TRS, or a channel state information reference signal CSI-RS, and that the first association relationship indicates a correspondence between the first information and the PO sub-group included in the first time window includes: The first association relationship indicates a correspondence between a sequence index of the first information and a number of the PO sub-group included in the first time window.

In a possible implementation, a quantity of sequences configured for the first information is greater than or equal to a quantity of PO sub-groups included in the first time window, and the sequences of the first information are in a one-to-one correspondence with the PO sub-groups included in the first time window; or a quantity of sequences configured for the first information is less than a quantity of PO sub-groups included in the first time window, and each of at least one sequence of the first information corresponds to a plurality of PO sub-groups in the PO sub-groups included in the first time window.

It should be understood that the sequence configured for the first information means that a network side configures one or more sequences for sending the first information, and selects one or more sequences from the sequences to send the first information.

In the foregoing manner, when the first information is sent in a sequence manner, a mapping relationship may be formed by associating a sequence index (or numbering the sequence configured for the first information, which is not limited in this application) of the first information with a number (or an index, and a manner of numbering the PO sub-group or designing an index of the PO sub-group is not limited in this application) of the PO sub-group included in the first time window. In the foregoing manner, a problem of how to perform mapping between a plurality of sequences configured for the first information and a PO or a PO sub-group included in the first time window can be resolved.

In a possible implementation, a type of the first information is a secondary synchronization signal SSS, a tracking reference signal TRS, or a channel state information reference signal CSI-RS, and that the first association relationship indicates a correspondence between the first information and the PO sub-group included in the first time window includes: The first association relationship indicates a correspondence between a location of a resource configured for the first information and a number of the PO sub-group included in the first time window.

In a possible implementation, a quantity of locations of resources configured for the first information is greater than or equal to a quantity of PO sub-groups included in the first time window, and the locations of the resources configured for the first information are in a one-to-one correspondence with the PO sub-groups included in the first time window; or a quantity of locations of resources configured for the first information is less than a quantity of PO sub-groups included in the first time window, and each of at least one location of at least one resource configured for the first information corresponds to a plurality of PO sub-groups in the PO sub-groups included in the first time window.

It should be understood that, the location of the resource configured for the first information means that a network side configures one or more resources for sending the first information, where each resource corresponds to one time-frequency location, and the network side selects one or more resources from the resources to send the first information.

In the foregoing manner, when the first information is sent in a sequence manner, a mapping relationship may be formed by associating a location of a resource configured for the first information with a number (or an index, and a manner of numbering the PO sub-group or designing an index of the PO sub-group is not limited in this application) of the PO sub-group included in the first time window. In the foregoing manner, a problem of how to perform mapping between a plurality of resources configured for the first information and a PO or a PO sub-group included in the first time window can be resolved. Therefore, the UE can determine, based on a resource location at which a PO or a PO sub-group corresponding to the UE is located and the first association relationship, whether paging exists in the PO or the PO sub-group.

In a possible implementation, a type of the first information is a secondary synchronization signal SSS, a tracking reference signal TRS, or a channel state information reference signal CSI-RS, and that the first association relationship indicates a correspondence between the first information and the PO sub-group included in the first time window includes: The first association relationship indicates a correspondence between a number of the PO sub-group included in the first time window and a combination of a sequence index of the first information and a location of a resource configured for the first information.

In a possible implementation, a product of a quantity of sequences configured for the first information and a quantity of locations of resources configured for the first information is greater than or equal to a quantity of PO sub-groups included in the first time window, and the sequences of the first information are in a one-to-one correspondence with the PO sub-groups configured for the first PF; or a product of a quantity of sequences configured for the first information and a quantity of locations of resources configured for the first information is less than a quantity of PO sub-groups included in the first time window, and each of at least one sequence of the first information corresponds to a plurality of PO sub-groups in the PO sub-groups included in the first time window.

In the foregoing manner, when a plurality of sequences may be sent on each resource, a mapping relationship between the first information and the PO sub-group included in the first time window is determined based on the product of the quantity of sequences configured for the first information and the quantity of locations of the resources configured for the first information and the quantity of PO sub-groups included in the first time window. In the foregoing manner, a problem of how to perform mapping between the first information and a PO or a PO sub-group included in the first time window can be resolved when each of a plurality of resources configured for the first information is configured to send a plurality of sequences.

According to a fourth aspect, a paging method is provided, and includes: A first network device determines a first association relationship based on a quantity of paging occasion PO sub-groups included in a first time window, where the first association relationship indicates a correspondence between first information and the PO sub-group included in the first time window. The first network device determines the first information based on the first association relationship, where the first information indicates whether the PO sub-group included in the first time window carries paging data. The first network device sends the first information.

It should be understood that the PO sub-group included in the first time window is all PO sub-groups included in the first time window, that is, all PO sub-groups in the first time window in time domain.

It should be noted that, in the foregoing manner, quantities of PO sub-groups included in different time windows may be different, that is, quantities of PO sub-groups indicated by different first information may be different. Therefore, the UE side needs to obtain a quantity of PO sub-groups included in each time window, which may be calculated by the UE, or the network side may send indication information to indicate a quantity of PO sub-groups included in the time window, so that the UE can determine a mapping relationship between the first information and the PO sub-group included in the time window.

It should be noted that a sub-group on the PO may be understood as grouping UEs that monitor a paging PDCCH on the PO, and each group may be referred to as a PO sub-group. When paging UE in an idle state or an inactive state exists on the PO, paging may or may not exist in the PO sub-group on the PO. The PO sub-group in the solution of this application may be replaced with the PO. To be specific, when a PO to which the PO sub-group belongs is not divided, the PO sub-group is the PO. In other words, a solution related to the PO sub-group is also applicable to the PO.

In the foregoing solution, content indicated by the first information is defined, so that a network side can obtain, based on the first association relationship, the correspondence between the first information and the PO sub-group (or the PO) included in the first time window, and further, determine the first information based on the first association relationship, to indicate whether the PO or the PO sub-group included in the first time window carries paging data (or referred to as whether paging exists). According to the foregoing solution, a problem of how to perform mapping when the first information indicates a plurality of POs or PO sub-groups can be resolved. In addition, when an excessive quantity of POs are configured for a PF in the first time window or an excessive quantity of MOs are included in a PO configured for a PF, a paging delay may be caused when the PO configured for the PF spans a long time. According to the foregoing solution, the PO or the PO sub-group indicated by the first information is at a granularity of a time window, so that impact caused by the paging delay can be reduced.

In a possible implementation, a first monitoring occasion MO corresponding to each of the PO sub-groups included in the first time window is included in the first time window.

In this solution, when MOs corresponding to POs or PO sub-groups included in the first time window are located in a plurality of time windows, and the plurality of time windows correspond to a plurality of pieces of first information, it may be specified that the PO or the PO sub-group is indicated by specific first information. As shown in the foregoing solution, the PO or the PO sub-group is indicated by first information corresponding to a time window in which a first MO corresponding to the PO or the PO sub-group is located. According to this solution, content indicated by the first information can be more accurate.

In a possible implementation, a type of the first information is downlink control information DCI, and that the first association relationship indicates a correspondence between the first information and the PO sub-group included in the first time window includes: The first association relationship indicates a correspondence between a bit index of the first information and a number of the PO sub-group included in the first time window.

In a possible implementation, a quantity of bits of the first information is greater than or equal to a quantity of PO sub-groups included in the first time window, and the bits of the first information are in a one-to-one correspondence with the PO sub-groups included in the first time window; or a quantity of bits of the first information is less than a quantity of PO sub-groups included in the first time window, and each of at least one bit of the first information corresponds to a plurality of PO sub-groups in the PO sub-groups included in the first time window.

In the foregoing manner, when the first information is sent by using DCI, a mapping relationship may be formed by associating a bit index (or numbering the bit of the first information, which is not limited in this application) of the first information with a number (or an index, and a manner of numbering the PO sub-group or designing an index of the PO sub-group is not limited in this application) of the PO sub-group included in the first time window. In the foregoing manner, a problem of how to perform mapping between a plurality of bits of the first information and a PO or a PO sub-group included in the first time window can be resolved.

In a possible implementation, a type of the first information is a secondary synchronization signal SSS, a tracking reference signal TRS, or a channel state information reference signal CSI-RS, and that the first association relationship indicates a correspondence between the first information and the PO sub-group included in the first time window includes: The first association relationship indicates a correspondence between a sequence index of the first information and a number of the PO sub-group included in the first time window.

In a possible implementation, a quantity of sequences configured for the first information is greater than or equal to a quantity of PO sub-groups included in the first time window, and the sequences of the first information are in a one-to-one correspondence with the PO sub-groups included in the first time window; or a quantity of sequences configured for the first information is less than a quantity of PO sub-groups included in the first time window, and each of at least one sequence of the first information corresponds to a plurality of PO sub-groups in the PO sub-groups included in the first time window.

It should be understood that the sequence configured for the first information means that a network side configures one or more sequences for sending the first information, and selects one or more sequences from the sequences to send the first information.

In the foregoing manner, when the first information is sent in a sequence manner, a mapping relationship may be formed by associating a sequence index (or numbering the sequence configured for the first information, which is not limited in this application) of the first information with a number (or an index, and a manner of numbering the PO sub-group or designing an index of the PO sub-group is not limited in this application) of the PO sub-group included in the first time window. In the foregoing manner, a problem of how to perform mapping between a plurality of sequences configured for the first information and a PO or a PO sub-group included in the first time window can be resolved.

In a possible implementation, a type of the first information is a secondary synchronization signal SSS, a tracking reference signal TRS, or a channel state information reference signal CSI-RS, and that the first association relationship indicates a correspondence between the first information and the PO sub-group included in the first time window includes: The first association relationship indicates a correspondence between a location of a resource configured for the first information and a number of the PO sub-group included in the first time window.

In a possible implementation, a quantity of locations of resources configured for the first information is greater than or equal to a quantity of PO sub-groups included in the first time window, and the locations of the resources configured for the first information are in a one-to-one correspondence with the PO sub-groups included in the first time window; or a quantity of locations of resources configured for the first information is less than a quantity of PO sub-groups included in the first time window, and each of at least one location of at least one resource configured for the first information corresponds to a plurality of PO sub-groups in the PO sub-groups included in the first time window.

It should be understood that, the location of the resource configured for the first information means that a network side configures one or more resources for sending the first information, where each resource corresponds to one time-frequency location, and the network side selects one or more resources from the resources to send the first information.

In the foregoing manner, when the first information is sent in a sequence manner, a mapping relationship may be formed by associating a location of a resource configured for the first information with a number (or an index, and a manner of numbering the PO sub-group or designing an index of the PO sub-group is not limited in this application) of the PO sub-group included in the first time window. In the foregoing manner, a problem of how to perform mapping between a plurality of resources configured for the first information and a PO or a PO sub-group included in the first time window can be resolved. Therefore, the UE can determine, based on a resource location at which a PO or a PO sub-group corresponding to the UE is located and the first association relationship, whether paging exists in the PO or the PO sub-group.

In a possible implementation, a type of the first information is a secondary synchronization signal SSS, a tracking reference signal TRS, or a channel state information reference signal CSI-RS, and that the first association relationship indicates a correspondence between the first information and the PO sub-group included in the first time window includes: The first association relationship indicates a correspondence between a number of the PO sub-group included in the first time window and a combination of a sequence index of the first information and a location of a resource configured for the first information.

In a possible implementation, a product of a quantity of sequences configured for the first information and a quantity of locations of resources configured for the first information is greater than or equal to a quantity of PO sub-groups included in the first time window, and the sequences of the first information are in a one-to-one correspondence with the PO sub-groups configured for the first PF; or a product of a quantity of sequences configured for the first information and a quantity of locations of resources configured for the first information is less than a quantity of PO sub-groups included in the first time window, and each of at least one sequence of the first information corresponds to a plurality of PO sub-groups in the PO sub-groups included in the first time window.

In the foregoing manner, when a plurality of sequences may be sent on each resource, a mapping relationship between the first information and the PO sub-group included in the first time window is determined based on the product of the quantity of sequences configured for the first information and the quantity of locations of the resources configured for the first information and the quantity of PO sub-groups included in the first time window. In the foregoing manner, a problem of how to perform mapping between the first information and a PO or a PO sub-group included in the first time window can be resolved when each of a plurality of resources configured for the first information is configured to send a plurality of sequences.

According to a fifth aspect, a communication apparatus is provided. The communication apparatus may include a module configured to perform the method according to any one of the first aspect or the possible implementations of the first aspect, or include a module configured to perform the method according to any one of the third aspect or the possible implementations of the third aspect, for example, a processing module and a transceiver module. The transceiver module may include a sending module and a receiving module. The sending module and the receiving module may be different functional modules, or may be a same functional module but can implement different functions. The processing module may be implemented by using a processor. The transceiver module may be implemented by using a transceiver. Correspondingly, the sending module may be implemented by using a transmitter, and the receiving module may be implemented by using a receiver. The communication apparatus may be a terminal device or a chip or a chip system in the terminal device. If the communication apparatus is the terminal device, the transceiver may be a radio frequency transceiver component in the terminal device. If the communication apparatus is the chip or the chip system disposed in the terminal device, the transceiver may be a communication interface in the chip or the chip system. The communication interface is connected to a radio frequency transceiver component in the terminal device, to implement information receiving and sending by using the radio frequency transceiver component.

According to a sixth aspect, a communication apparatus is provided. The communication apparatus may include a module configured to perform the method according to any one of the second aspect or the possible implementations of the second aspect, or include a module configured to perform the method according to any one of the fourth aspect or the possible implementations of the fourth aspect, for example, a processing module and a transceiver module. The transceiver module may include a sending module and a receiving module. The sending module and the receiving module may be different functional modules, or may be a same functional module but can implement different functions. The processing module may be implemented by using a processor. The transceiver module may be implemented by using a transceiver. Correspondingly, the sending module may be implemented by using a transmitter, and the receiving module may be implemented by using a receiver. The communication apparatus may be a network device or a chip or a chip system in the network device. If the communication apparatus is the network device, the transceiver may be a radio frequency transceiver component in the network device. If the communication apparatus is the chip or the chip system disposed in the network device, the transceiver may be a communication interface in the chip or the chip system. The communication interface is connected to a radio frequency transceiver component in the network device, to implement information receiving and sending by using the radio frequency transceiver component.

According to a seventh aspect, a communication apparatus is provided. The communication apparatus includes a processor and a storage medium, the storage medium stores instructions, and when the instructions are run by the processor, the communication apparatus is enabled to perform the method according to any one of the first aspect or the possible implementations of the first aspect and the method according to any one of the second aspect or the possible implementations of the second aspect, or perform the method according to any one of the third aspect or the possible implementations of the third aspect and the method according to any one of the fourth aspect or the possible implementations of the fourth aspect. The communication apparatus may be a terminal device or a network device, or may be a chip or a chip system in the terminal device or the network device.

According to an eighth aspect, a computer-readable storage medium is provided. The computer-readable storage medium stores a computer program, and when the computer program is run, a communication apparatus is enabled to perform the method according to any one of the first aspect or the possible implementations of the first aspect and the method according to any one of the second aspect or the possible implementations of the second aspect, or perform the method according to any one of the third aspect or the possible implementations of the third aspect and the method according to any one of the fourth aspect or the possible implementations of the fourth aspect.

According to a ninth aspect, a computer program product is provided. The computer program product includes a computer program, and when the computer program is run by a computer, the computer is enabled to perform the method according to any one of the first aspect or the possible implementations of the first aspect and the method according to any one of the second aspect or the possible implementations of the second aspect, or perform the method according to any one of the third aspect or the possible implementations of the third aspect and the method according to any one of the fourth aspect or the possible implementations of the fourth aspect.

## BRIEF DESCRIPTION OF DRAWINGS

FIG. 1 is a schematic diagram of a communication system to which an embodiment of this application is applicable;
FIG. 2 is a schematic diagram of content carried in an SSB symbol according to an embodiment of this application;
FIG. 3 is a schematic diagram of an SSB time-domain multiplexing pattern according to an embodiment of this application;
FIG. 4 is a schematic diagram of an example of symbols occupied by an MO according to this application;
FIG. 5 is a schematic diagram of an example of a mapping relationship between an SSB, a PO, and an MO according to this application;
FIG. 6A and FIG. 6B are a schematic diagram of a relationship between a PF, a PO, and an MO;
FIG. 7 is a schematic diagram of an example of a time window according to this application;
FIG. 8 is a schematic diagram of an example of a correspondence between a PEI and a time window according to this application;
FIG. 9 is a schematic flowchart of an example according to an embodiment of this application;
FIG. 10 is a schematic flowchart of another example according to an embodiment of this application;
FIG. 11 is a schematic flowchart of an example according to an embodiment of this application;
FIG. 12A, FIG. 12B, and FIG. 12C are a schematic diagram of an example of configuration of a PEI, a PF, and a PO according to this application;
FIG. 13A, FIG. 13B, and FIG. 13C are a schematic diagram of another example of configuration of a PEI, a PF, and a PO according to this application;
FIG. 14 is a schematic diagram of an example of a mapping relationship between a number of a PO sub-group and a PEI bit index according to this application;
FIG. 15 is a schematic diagram of an example of resource configuration according to this application;
FIG. 16 is a schematic diagram of another example of resource configuration according to this application;
FIG. 17 is a schematic flowchart of another example according to an embodiment of this application;
FIG. 18A, FIG. 18B, and FIG. 18C are a schematic diagram of an example of configuration of a PEI, a PF, and a PO according to this application;
FIG. 19A, FIG. 19B, and FIG. 19C are a schematic diagram of another example of configuration of a PEI, a PF, and a PO according to this application;
FIG. 20A, FIG. 20B, and FIG. 20C are a schematic diagram of still another example of configuration of a PEI, a PF, and a PO according to this application;
FIG. 21 is a schematic diagram of an example of a structure of a communication apparatus according to an embodiment of this application; and
FIG. 22 is a schematic diagram of another example of a structure of a communication apparatus according to an embodiment of this application.

## DESCRIPTION OF EMBODIMENTS

The following describes technical solutions of this application with reference to accompanying drawings.

The technical solutions in embodiments of this application may be applied to various communication systems, for example, a long term evolution (Long Term Evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th Generation, 5G) mobile communication system, a new radio access technology (new radio Access Technology, NR), or a next generation communication system, such as 6G. The 5G mobile communication system may be a non-standalone (non-standalone, NSA) communication system or a standalone (standalone, SA) communication system.

The technical solutions provided in this application may also be applied to a machine type communication (machine type communication, MTC) network, a long term evolution-machine (Long Term Evolution-machine, LTE-M) network, a device-to-device (device-to-device, D2D) network, a machine-to-machine (machine-to-machine, M2M) network, an internet of things (internet of things, IoT) network, or another network. The IoT network may include, for example, the internet of vehicles. Communication manners in an internet of vehicles system are collectively referred to as vehicle-to-X (vehicle-to-X, V2X, where X may represent everything). For example, V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

The technical solutions provided in this application may also be applied to a future communication system, for example, a 6th generation (6th Generation, 6G) mobile communication system. This is not limited in this application.

In embodiments of this application, a network device may be any device having a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, may be a gNB in 5G, for example, an NR system, a transmission point (transmission/reception point, TRP or TP), or one or one group of antenna panels (including a plurality of antenna panels) of a base station in a 5G system, or may be a network node that forms a gNB or a transmission point, for example, a baseband unit (baseband unit, BBU), a distributed unit (distributed unit, DU), a base station in a next-generation communication 6G system, or the like.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer eventually becomes information at the PHY layer, or is converted from information at the PHY layer. Therefore, in this architecture, higher-layer signaling such as RRC layer signaling may also be considered as being sent by the DU or sent by the DU and the CU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device serves a cell, and a terminal device communicates with the cell through a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

In embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity to a user, for example, a handheld device or vehicle-mounted device with a wireless connectivity function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, or a terminal device in a future evolved public land mobile network (public land mobile network, PLMN).

The wearable device may also be referred to as a wearable smart device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In broad sense, wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, the terminal device may alternatively be a terminal device in an internet of things (Internet of things, IoT) system. The IoT is an important part in future development of information technologies. A main technical feature of the IoT is to connect things to a network by using a communication technology, to implement an intelligent network for human-machine interconnection and thing-thing interconnection. IoT technologies can achieve massive connections, intensive coverage, and power saving for terminals by using, for example, a narrow band (narrow band, NB) technology.

In addition, the terminal device may alternatively include sensors such as an intelligent printer, a train detector, and a gas station, and main functions include: collecting data (which is a function of some terminal devices), receiving control information and downlink data of a network device, sending an electromagnetic wave, and transmitting uplink data to the network device.

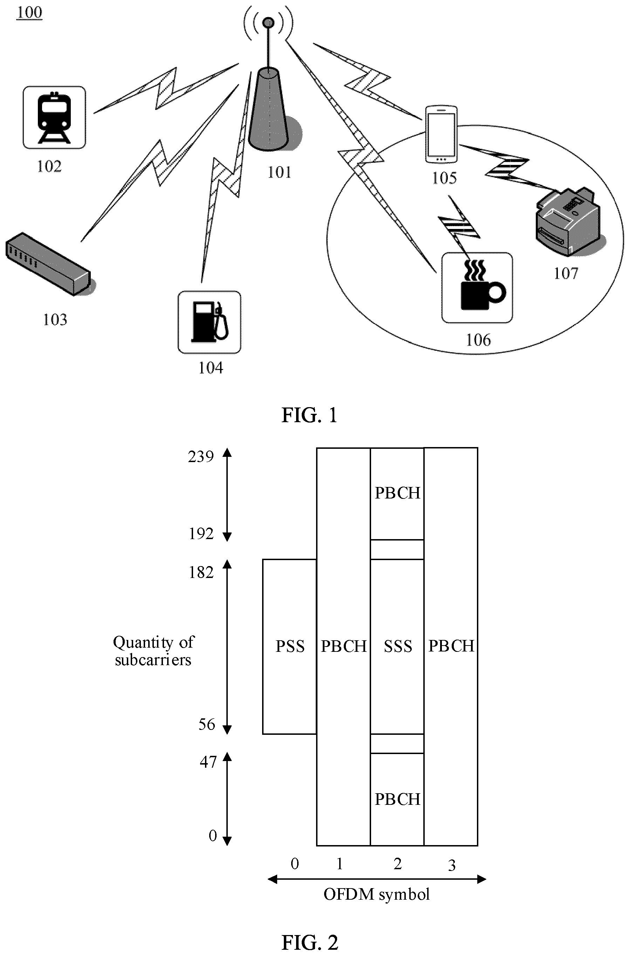

To facilitate understanding of embodiments of this application, a communication system applicable to a method according to embodiments of this application is first described in detail with reference to FIG. 1.

FIG. 1 is a schematic diagram of a communication system to which an embodiment of this application is applicable. As shown in the FIG. 1, the communication system 100 may include at least one network device, for example, a network device 101 in a 5G system shown in FIG. 1. The communication system 100 may further include at least one terminal device, for example, terminal devices 102 to 107 shown in FIG. 1. The terminal devices 102 to 107 may be mobile or stationary. The network device 101 may communicate with one or more of the terminal devices 102 to 107 through a radio link. Each network device may provide communication coverage for a particular geographic area, and may communicate with a terminal device located in the coverage area. For example, the network device may send configuration information to the terminal device, and the terminal device may send uplink data to the network device based on the configuration information. For another example, the network device may send downlink data to the terminal device. Therefore, the network device 101 and the terminal devices 102 to 107 in FIG. 1 form a communication system.

Optionally, the terminal devices may directly communicate with each other. For example, direct communication between the terminal devices may be implemented by using a D2D technology or the like. As shown in the figure, the terminal devices 105 and 106 may directly communicate with each other by using the D2D technology, and the terminal devices 105 and 107 may directly communicate with each other by using the D2D technology. The terminal device 106 and the terminal device 107 may communicate with the terminal device 105 separately or simultaneously.

The terminal devices 105 to 107 may alternatively communicate with the network device 101 separately. For example, the terminal devices 105 to 107 may directly communicate with the network device 101. For example, the terminal devices 105 and 106 in the figure may directly communicate with the network device 101. Alternatively, the terminal devices 105 to 107 may indirectly communicate with the network device 101. For example, the terminal device 107 in the figure communicates with the network device 101 through the terminal device 106.

It should be understood that, FIG. 1 shows an example of one network device, a plurality of terminal devices, and communication links between the communication devices. Optionally, the communication system 100 may include a plurality of network devices, and another quantity of terminal devices, for example, more or fewer terminal devices may be included in coverage of each network device. This is not limited in this application.

A plurality of antennas may be configured for each of the foregoing communication devices, for example, the network device 101 and the terminal devices 102 to 107 in FIG. 1. The plurality of antennas may include at least one transmit antenna for sending a signal and at least one receive antenna for receiving a signal. In addition, each communication device further additionally includes a transmitter chain and a receiver chain. A person of ordinary skill in the art may understand that the transmitter chain and the receiver chain each may include a plurality of components (for example, a processor, a modulator, a multiplexer, a demodulator, a demultiplexer, or an antenna) related to signal transmission and reception. Therefore, a network device and a terminal device may communicate with each other by using a multi-antenna technology.

Optionally, the wireless communication system 100 may further include other network entities such as a network controller or a mobility management entity. This embodiment of this application is not limited thereto.

For ease of understanding embodiments of this application, the following briefly describes a process of processing a downlink signal at a physical layer before the downlink signal is sent. It should be understood that a process of processing a downlink signal described below may be performed by the network device, or may be performed by a component (such as a chip or a chip system) configured in the network device. For ease of description, the network device and the chip or the chip system are collectively referred to as a network device below.

The network device may process a codeword (codeword) on a physical channel. The codeword may be a coded bit obtained through coding (for example, including channel coding). The codeword is scrambled (scrambling) to generate a scrambled bit. Modulation mapping (modulation mapping) is performed on the scrambled bit, to obtain a modulated symbol. The modulated symbol is mapped to a plurality of layers (layer) through layer mapping (layer mapping). The layer is also referred to as a transport layer. The modulated symbol on which the layer mapping is performed is precoded (precoding), to obtain a precoded signal. The precoded signal is mapped to a plurality of resource elements (resource element, RE) through RE mapping. These REs are then transmitted to the outside through an antenna port (antenna port) after orthogonal frequency division multiplexing (orthogonal frequency division multiplexing, OFDM) modulation is performed on the REs.

It should be understood that the process of processing the downlink signal described above is merely an example for description, and shall not constitute any limitation on this application. For a specific process of processing a downlink signal, refer to the conventional technology. For brevity, detailed descriptions of the specific process are omitted herein.

It should be understood that the method provided in embodiments of this application may be applied to a system in which communication is performed by using a multi-antenna technology, for example, the communication system 100 shown in FIG. 1. The communication system may include at least one network device and at least one terminal device. The network device and the terminal device may communicate with each other by using the multi-antenna technology.

It should be further understood that, the method provided in embodiments of this application is not limited to communication between the network device and the terminal device, and may be further applied to communication between terminal devices and the like. A scenario to which the method is applied is not limited in this application. In embodiments shown below, for ease of understanding and description, interaction between the network device and the terminal device is used as an example to describe in detail the method provided in embodiments of this application.

It should be further understood that a specific structure of an execution body of the method provided in embodiments of this application is not specifically limited in embodiments shown below, provided that a program that records code of the method provided in embodiments of this application can be run to perform communication according to the method provided in embodiments of this application. For example, the method provided in embodiments of this application may be performed by a terminal device, a network device, or a functional module that is in a terminal device or a network device and that can invoke and execute the program. For brevity, the following uses an example in which the method is performed by a single entity for description. However, the method provided in embodiments of this application may be performed by a plurality of entities, and these entities may be distributed at different locations. For example, processing performed by the network device may be performed by at least one of an independent central unit (central unit, CU), a distributed unit (distributed unit, DU), and a remote unit (remote unit, RU).

To help understand embodiments of this application, the following briefly describes terms in embodiments of this application.

1. Idle state, connected state, and inactive state

In NR, there are three states of UE: a radio resource control idle (radio resource control idle, RRC_IDLE) state, an RRC inactive (RRC_INACTIVE) state, and an RRC connected (RRC_CONNECTED) state.

The RRC_IDLE state may also be referred to as an idle state, and is a state of a terminal device when the terminal device completes camping in a cell but does not perform a random access process. The terminal device usually enters the idle state after the terminal device is powered on or after the terminal device releases an RRC connection. When the UE is in the idle state, an air interface connection between the UE and a base station is broken, and context information is no longer stored. Therefore, the UE can receive only broadcast information sent by the base station.

The RRC_CONNECTED state may also be referred to as a connected state, and corresponds to the idle state. The connected state is a state of a terminal device that has not released an RRC connection after the terminal device completes a random access process. When the terminal device is in the connected state, the terminal device establishes an air interface connection to a network device, and communicates with the network device through the air interface connection. When the terminal device is in the idle state, after completing the random access process, the terminal device switches to the connected state. When the terminal device is in the connected state, after completing releasing the RRC connection, the terminal device switches to the idle state.

The RRC_INACTIVE state may also be referred to as an inactive state. The inactive state is a state between the connected state and the idle state. For a terminal device in an inactive state, a user plane bearer of an air interface is suspended (suspend), and a user plane bearer and a control plane bearer between a RAN and a CN are still maintained. When the terminal device initiates a call or a service request, the user plane bearer of the air interface needs to be activated, and the existing user plane bearer and the existing control plane bearer between the RAN and the CN are reused. When the UE is in the inactive state, the air interface connection between the UE and the base station is broken, but context information continues to be stored. When the UE enters the connected state from the inactive state, the UE can quickly restore to the connected state based on the stored context information.

2. Paging and paging message

There is no RRC connection between UE in an idle state and a network. Although an RRC connection is established between UE in an inactive state and the network, the connection is suspended. When the network needs to send downlink data to the UE in the idle or inactive state, the network needs to first page the UE through a paging (paging) procedure, to indicate the UE to establish or resume an RRC connection, and then can perform data transmission. That is, paging is initiated by the network. In NR, paging may be initiated by a core network, which is referred to as core network paging (core network paging, CN paging), or may be initiated by a radio access network (radio access network, RAN), which is referred to as RAN paging.

When the UE is in an idle state, there is no RRC connection between the UE and a gNB, and there is no RRC context of the UE. In other words, the gNB does not know existence of the UE. From a perspective of a core network, the UE is in a connection management idle (connection management idle, CM_IDLE) state at this time, for example, a state of the UE in an access and mobility management function (access and mobility management function, AMF). There is no non-access stratum (non-access stratum, NAS) connection between the UE and the core network, but a unique identifier has been allocated to the UE in a tracking area (tracking area, TA), and the UE has registered with the AMF and has a context in the AMF. When the core network needs to send downlink data or downlink NAS signaling to the UE in the CM_IDLE state, the AMF sends a paging message to all gNBs in all TAs with which the UE registers, and then the gNBs send the paging message over the air interface to page the UE. After receiving the paging message, the UE in the idle state usually initiates an RRC connection establishment process to receive the downlink data.

In the inactive state, the RRC connection between the UE and the gNB is suspended although both the UE and the gNB store an RRC context. In addition, a connection between the UE and the core network is still maintained. That is, from a perspective of the core network, the UE is in the CM_CONNECTED state at this time. When the network needs to send data to the UE in the inactive state, for example, when downlink data arrives, the network needs to page the UE because the RRC connection is suspended. In addition, because the core network considers that the UE is in the connected state in this case, the core network does not initiate paging, but a RAN node, for example, a base station (gNB), initiates paging.

In the inactive state, a last gNB node serving the UE stores a UE context and maintains the connection to the core network. If the last gNB serving the UE receives downlink data or UE-related NAS signaling from the core network when the UE is in the inactive state, the gNB pages the UE in all cells included in a RAN-based notification area (RAN-based notification area, RNA) to which the UE belongs. If the RNA includes a cell on a neighboring gNB, the gNB sends an Xn application protocol (Xn application protocol, Xn AP) RAN paging message to the neighboring gNB, to indicate the neighboring gNB to page the UE in the corresponding cell. After receiving the paging message, the UE in the RRC_INACTIVE state usually initiates an RRC connection establishment resume process to receive downlink data. The RAN-based notification area herein is a RAN-based notification area managed by an NG-RAN (for example, a gNB), and the NG-RAN knows an RNA to which the UE belongs.

The UE in the idle or inactive state supports receiving a paging message through discontinuous reception (discontinuous reception, DRX) to reduce power consumption. The DRX is also referred to as paging DRX. A discontinuous reception cycle (DRX cycle) is configured by the network device. The DRX cycle is also referred to as a paging cycle. Based on DRX, the UE in the idle or inactive state "wakes up" to receive the paging message only in a predefined time period, and can stay in a "sleep" state and stop receiving paging in other time periods. This reduces power consumption and prolongs a battery life of the UE.

For paging DRX, the UE in the idle or inactive state attempts to receive, only on a specific paging occasion (paging occasion, PO) in each paging cycle, a PDCCH scrambled by a paging radio network temporary identifier (paging radio network temporary identifier, P-RNTI). In an NR system, the PO is a monitoring occasion (monitoring occasion, MO) of a group of physical downlink control channels (physical downlink control channel, PDCCH). One PO may include a plurality of time slots (time slots). For example, the time slot may be a subframe or an orthogonal frequency division multiplexing (orthogonal frequency division multiplexing, OFDM) symbol. The network device may send, on the PO, downlink control information (downlink control information, DCI) used to schedule a paging message. In addition, a paging frame (paging frame, PF) is a radio frame, and may include one or more POs or start points of POs. When monitoring the PO, the terminal device first determines a location of the PF, and then determines a location of the PO associated with the PF. It should be noted that a PO associated with a PF may start from a time point within the PF, or may start from a time point after the PF. The UE may determine, based on a paging configuration parameter and UE_ID, a location of a PO that needs to be monitored by the UE.

3. Synchronization signal block (Synchronization Signal Block, SSB)

The SSB may also be referred to as a physical broadcast channel (Physical Broadcast Channel, PBCH) block (block), includes a primary synchronization signal (Primary synchronization signal, PSS), a secondary synchronization signal (secondary synchronization signal, SSS), and a broadcast channel (physical broadcast channel, PBCH), and occupies four symbols in time domain.

FIG. 2 is a schematic diagram of content carried in an SSB symbol according to an embodiment of this application. An SSB bandwidth is 20 resource blocks (resource block, RB), and includes 240 subcarriers. The first symbol carries a PSS, which includes 127 subcarriers. In other words, a sequence length of the PSS is 127, the PSS occupies only a middle part of an SSB, and other data or control information is not sent on two sides. The second and fourth symbols each are a broadcast channel (physical broadcast channel, PBCH), and mainly carry system information. The third symbol carries both a PBCH and an SSS, where a sequence length of the SSS is 127 as the sequence length of the PSS, and the PBCH and the SSS both occupy 127 resource elements (resource element, RE) in the middle part of the SSB. 48 REs are used on each of two sides of the SSS to send the PBCH, and there is an interval of eight REs and an interval of nine REs between the SSS and PBCHs.

4. Synchronization signal burst (synchronization signal burst, SS burst)

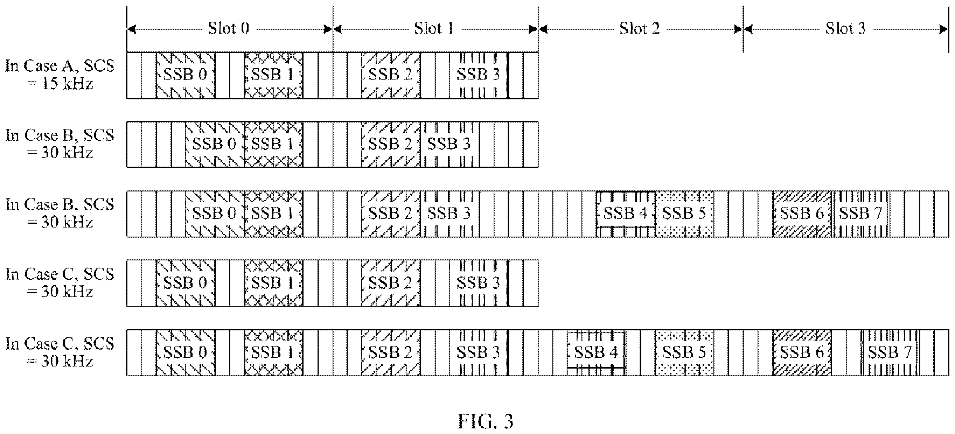

The network device sends an SSB based on a preconfigured SSB time-domain multiplexing pattern in the SS burst. The SSB time-domain multiplexing pattern may be shown in FIG. 3. FIG. 3 is a schematic diagram of an SSB time-domain multiplexing pattern according to an embodiment of this application.

SSBs in an NR network are usually sent through a plurality of beams. There is one sending periodicity for sending the SSB. For example, the sending periodicity of the SSB may be 20 ms. In each SSB periodicity, the network device may send SSBs of a plurality of different beams through time division in a short length. The short length is referred to as an SS burst. In an NR system, SSBs of different beams are multiplexed based on different time-domain patterns and different working frequency bands. For example, in Case A, a subcarrier spacing is 15 kHz, and a length of an SS burst is 2 ms. To be specific, the network device may send an SSB in two slots whose lengths are 1 ms. In the SS burst, SSBs in a maximum of four different directions, namely, an SSB 0, an SSB 1, an SSB 2, and an SSB 3 in the figure, may be sent. A padding part in the figure is a symbol location at which the SSB may be sent. It should be understood that, in an SS burst, the network device does not necessarily need to send the SSBs in all four directions, and the network device may configure, by using a system message, a quantity of actually sent SSBs and a symbol location used for sending the SSB. For example, the network device may send only the SSB 0 and the SSB 1, or may send only the SSB 1 and the SSB 3.

In Case B and Case C, a subcarrier spacing is 30 kHz, and two time-domain multiplexing patterns shown in the figure may be supported. In other words, a length of one SS burst is 2 ms, and the SS burst includes four slots whose lengths are 0.5 ms. The network device may send SSBs in a maximum of eight different directions in one SS burst.

An SSB in each beam direction occupies four OFDM symbols on a time domain resource, and content carried in each OFDM symbol may be shown in FIG. 2.

5. Paging frame (paging frame, PF) and paging occasion (paging occasion, PO)

A specific time point at which the UE receives paging is determined based on a paging frame (paging frame, PF) and a paging occasion (paging occasion, PO). The PF indicates a frame for sending paging. That is, UE in an idle or inactive state receives paging only on a PO configured/associated/defined by the PF. The PO indicates an occasion for receiving paging that is configured by the PF. Because a paging message is actually scheduled by using DCI scrambled by a P-RNTI, one PO actually corresponds to S detection occasions of DCI scrambled by the P-RNTI. S is a quantity of SSBs in an SS burst, and S may be obtained by using system information.

The PF is determined by using Formula (1):

$$(SFN + PF\_offset)\ mod\ T = (T\ div\ N)*(UE\_ID\ mod\ N)\ (1)$$

Herein, SFN represents a system frame number (system frame number, SFN), PF_offset is a frame offset of the PF, and T represents a DRX cycle or a paging cycle, and is a time unit, that is, the UE may have one or more opportunities to attempt to receive paging within the time T. N = min(T, nB), where nB indicates a quantity of PFs in a DRX cycle or a paging cycle. In addition, a value of the SFN ranges from 0 to 1023. A value of T is 32, 64, 128, or 256, and T is expressed in radio frames. A value of nB is 4T, 2T, T, T/2, T/4, T/8, T/16, or T/32, and nB is expressed in radio frames. UE_ID is a UE identifier, and may be a 5th generation system architecture evolution-temporary mobile subscriber identity (5th generation system architecture evolution-temporary mobile subscriber identity, 5G-S-TMSI) mod 1024 or a full inactive-RNTI (full inactive-RNTI, full I-RNTI).

When an SFN satisfies the foregoing formula, the SFN is considered as a PF. The UE attempts to receive paging on a PO configured for the PF. A plurality of POs may be configured for each PF. In NR, a parameter Ns indicates a quantity of POs corresponding to a PF.

In NR, the parameter Ns indicates the quantity of POs corresponding to the PF, where Ns = 1, 2, or 4. Each PO has an index number $i\_s$, and $i\_s$ is determined by using Formula (2):

$$i\_s = floor\ (UE\_ID/N)\ mod\ Ns\ (2)$$

It should be noted that the gNB does not send a paging message to the UE on each PO, and the UE detects paging DCI on the PO to determine whether the gNB sends a paging message.

6. Beam

A beamforming technology can be used to effectively expand a wireless signal transmission range and reduce signal interference, so that higher communication efficiency and a larger network capacity can be achieved. However, in a communication network in which a beamforming technology is used, a transmit beam of a transmit end needs to match a receive beam of a receive end, so that a gain of signal transmission between the transmit end and the receive end is maximized. Otherwise, high communication efficiency may not be achieved.

7. Mapping relationship between an SSB, a PF, and a PO

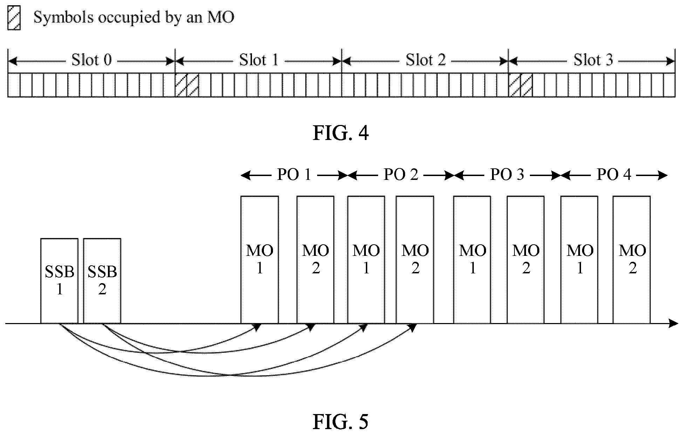

Each PO in a PF includes S paging PDCCH monitoring occasions (monitoring occasion, MO). The MO is defined by using a search space set (search space set) of a PDCCH, and the MO indicates a possible sending time of the PDCCH. Specifically, the MO usually appears periodically, and therefore may be represented by an occurrence periodicity (which may be expressed in slots), a time offset in each periodicity, and a time length (which may be expressed in symbols). FIG. 4 is a schematic diagram of an example of symbols occupied by an MO according to this application. An MO periodicity defined in the search space set is two slots (slot), and a time offset in the periodicity is one slot (that is, the MO appears only in an odd-numbered slot). In each slot, the MO occupies two symbols, and the two symbols are first two symbols of one slot. The UE may learn, by monitoring these symbols, whether to send a paging PDCCH.

The quantity S of MOs included in the PO is the same as a quantity of SSBs configured for a cell, and each SSB corresponds to an MO in the PO. That is, a beam of a paging PDCCH sent in the MO is the same as a corresponding SSB. Content of paging PDCCHs sent on different MOs is the same. Therefore, the UE may select, based on a beam measurement result of the SSB, an MO with best receiving performance to receive the paging PDCCH, or may receive a plurality of paging PDCCHs through beam polling.

FIG. 5 is a schematic diagram of an example of a mapping relationship between an SSB, a PO, and an MO according to this application. In a schematic diagram of symbols occupied by the MO, two SSBs and four POs are configured for a cell. Therefore, there are two MOs that can be used to send a paging PDCCH in each PO, and an SSB 1 and an SSB 2 respectively correspond to an MO 1 and an MO 2 in one PO.

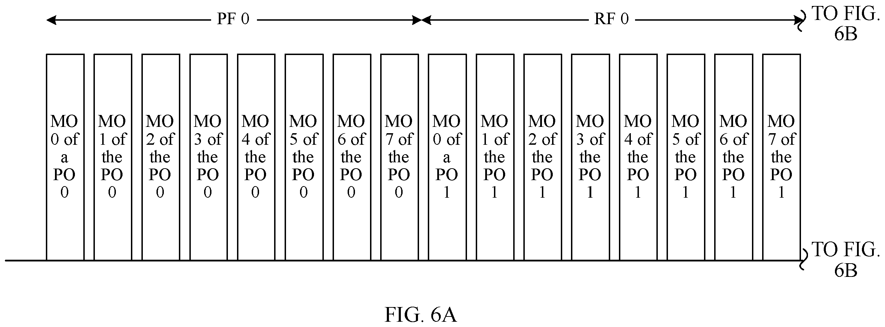

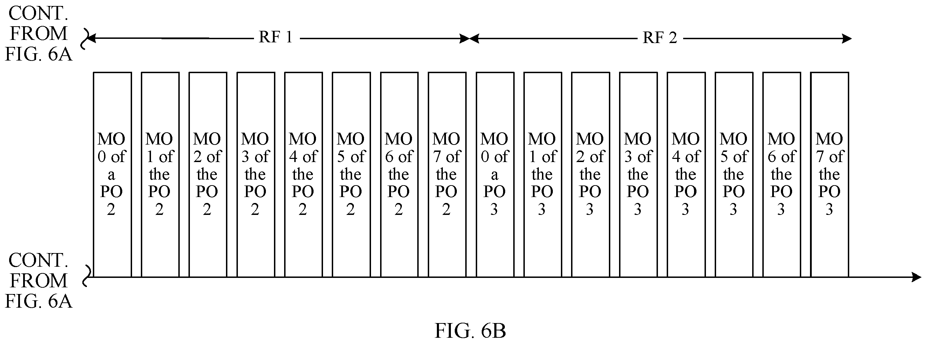

If each PF in a cell includes Ns POs and S SSBs are configured for the cell, an actual quantity of MOs included in a PF needs to be N = Ns x M. A specific arrangement manner of the MOs is that the UE counts starting from the PF, and determines a symbol location of each MO based on a definition of a search space set, until all the NMOs are counted. FIG. 6A and FIG. 6B are a schematic diagram of a relationship between a PF, a PO, and an MO. For example, if four POs are configured for a PF and eight SSBs are configured for a cell, a total of 32 MOs are configured in the PF, and the 32 MOs are arranged forward along a time axis starting from the PF. If each MO occupies two symbols in one slot, a total of 32 slots are required, and one PF (10 ms) includes only 20 slots. Therefore, an actual occurrence time of a part of POs or MOs in a part of POs defined in one PF may not be in the PF.

8. Paging indication (Paging indication, PI) and paging early indication (Paging Early Indication, PEI)

Before receiving paging, UE cannot determine whether a network device actually sends paging to the UE. Therefore, the UE wakes up on each PO, detects paging DCI, and then receives a paging PDSCH based on scheduling of the paging DCI. Only after the UE completely parses paging PDSCH data, the UE knows whether the network device actually sends paging data to the UE. In an actual communication network, a probability that the network device actually sends paging to one UE on each PO is low, for example, may be approximately 1%. Therefore, paging receiving performed by the UE on another PO with approximately 99% is useless power consumption overheads, which is not conducive to power consumption reduction.

Therefore, the PI may be first sent before the PO, and whether to receive paging DCI and/or a paging PDSCH on the PO is determined based on an indication of the PI. If the PI indicates that there is no paging on the PO, the UE may enter a sleep mode after receiving the PI, and does not need to receive the paging DCI and/or the paging PDSCH on the PO, to reduce power consumption.

To ensure that the UE in the idle or inactive state can successfully receive the PI, before receiving the PI, the UE usually needs to perform time frequency tracking (time frequency tracking) by using the SSB, to correct a time and frequency domain deviation between the UE and the base station, so that a residual time frequency deviation of the UE does not affect receiving of a paging PDCCH and a paging PDSCH by the UE. In addition, the UE may further perform automatic gain control (automatic gain control, AGC) estimation by receiving the SSB, to adjust a gain parameter of a UE receiver.

In NR, the PEI may implement a function of the PI, and the PEI may be sent by using DCI, an SSS, or a channel state information reference signal (channel state information reference signal, CSI-RS). Using the DCI means that a paging indication message is carried in the DCI for sending, and using the SSS or the CSI-RS means that a paging indication message is carried in the SSS or the SSS for sending, or a physical layer signal carrying a paging indication is sent in a manner similar to the SSS or the CSI-RS, for example, a time-frequency pattern (pattern) of a signal carrying a paging indication, a sequence generation manner, or resource configuration signaling that is the same as or similar to the SSS or the CSI-RS.

9. Generation of a pseudo-random sequence

A manner of generating a pseudo-random sequence $c(n)$ commonly used in a communication system is determined based on first 31 values of $x_1(n)$ and $x_2(n)$:

$$c(n) = (x_1(n+N_c) + x_2(n+N_c)) \bmod 2 \quad (3)$$

$$x_1(n+31) = (x_1(n+3) + x_1(n)) \bmod 2 \quad (4)$$

$$x_2(n+31) = (x_2(n+3) + x_2(n+2) + x_2(n+1) + x_2(n)) \bmod 2 \quad (5)$$

Values of the first 31 values of $x_1(n)$ are $x_1(0) = 1$, $x_1(n) = 0$, $n = 1, 2, ..., 30$, and values of the first 31 values of $x_2(n)$ are determined based on values of 0 to 31 bits of the value $c_{init}$. $c_{init} = \sum_{i=0}^{30} x_2(i) \cdot 2^i$, where $c_{init}$ is usually determined by using a formula. For example, for a CSI-RS, the value of $c_{init}$ may be determined by using Formula (6):

$$c_{init} = (2^{10}(N_{symb}^{slot} n_{s,f}^{\mu} + l + 1)(2n_{ID} + 1) + n_{ID}) \bmod 2^{31} \quad (6)$$

Herein, $N_{symb}^{slot}$ represents an index of a symbol in which a sequence is located in each slot, $n_{s,f}^{\mu}$ is a slot index of the slot in which the sequence is located in a radio frame (radio frame, RF), $n_{ID}$ is a specific parameter configured by a higher layer for the CSI-RS, and if the specific parameter is not configured, the UE uses a cell identity for replacement. It can be learned that for the pseudo-random sequence for generating the CSI-RS, only $n_{ID}$ needs to be provided for the UE.

10. Time window

The time window represents a time length after a fixed time point, is a network configuration value, and indicates a time period in which a PEI functions. For example, a length of the time window may be set to an SSB periodicity, and a start point of the time window may be a time point after sending of the PEI corresponding to the time window ends, or a time point existing after an offset (offset) passes after sending of the PEI ends, or a time point existing after an offset (offset) passes after sending of the PEI starts.

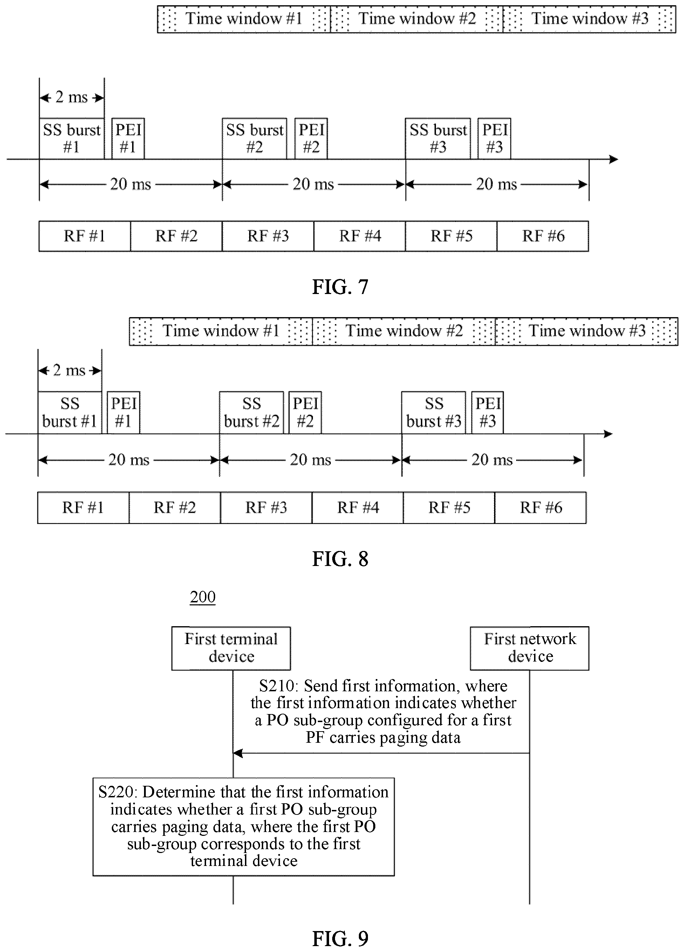

FIG. 7 is a schematic diagram of an example of a time window according to this application. For example, in FIG. 7, one SSB periodicity is 20 ms, and one RF is 10 ms. Therefore, one SSB periodicity includes two RFs. It is assumed that a PEI #1 indicates a PO in a PF in a time window #1 (which briefly means that the PEI #1 corresponds to the time window #1), and the time window #1 includes a complete RF #3, a part of an RF #2, and a part of an RF #4. Any one of the RF #2, the RF #3, and the RF #4 may be a PF. Similarly, a PEI #2 corresponds to a time window #2, and a PEI #3 corresponds to a time window #3.

In actual configuration, a location relationship between the time window and the SSB periodicity may be aligned (or a difference of 10 ms), that is, one time window includes two complete RFs. Both the two RFs may be configured as PFs. FIG. 8 is a schematic diagram of an example of a correspondence between a PEI and a time window according to this application. For example, in FIG. 8, it is assumed that a PEI #1 indicates a PO in a PF in a time window #1 (which briefly means that the PEI #1 corresponds to the time window #1), and the time window #1 includes one complete RF #2 and one complete RF #3. Either the RF#2 or the RF#3 may be a PF. Similarly, a PEI #2 corresponds to a time window #2, and a PEI #3 corresponds to a time window #3.

For ease of understanding of embodiments of this application, the following descriptions are provided.

First, in this application, for ease of description, when numbering is involved, numbering may be performed consecutively starting from 0, or may be performed consecutively starting from 1, or may be performed starting from any parameter. It should be understood that the foregoing descriptions are all provided to help describe the technical solutions provided in embodiments of this application, but are not intended to limit the scope of this application.

Second, the terms "first", "second", and various numbers in the following embodiments are merely used for differentiation for ease of description, and are not intended to limit the scope of embodiments of this application. For example, the terms are used to differentiate between different indication information.

Third, in embodiments shown below, "being preconfigured" may include being indicated by the network device by using signaling or being predefined, for example, defined in a protocol. "Being predefined" may be implemented by prestoring corresponding code or a corresponding table in a device (for example, including a terminal device and a network device) or in another manner that may indicate related information. A specific implementation of "being predefined" is not limited in this application.

Fourth, "being stored" in embodiments of this application may be "being stored in one or more memories". The one or more memories may be separately disposed, or may be integrated into an encoder or a decoder, a processor, or a communication apparatus. Alternatively, some of the one or more memories may be separately disposed, and some of the one or more memories are integrated into a translator, a processor, or a communication apparatus. A type of the memory may be a storage medium in any form. This is not limited in this application.

Fifth, a "protocol" in embodiments of this application may be a standard protocol in the communication field, for example, may include an LTE protocol, an NR protocol, and a related protocol applied to a future communication system. This is not limited in this application.

Sixth, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one of a, b, and c may represent a, b, or c, a and b, a and c, b and c, or a, b, and c, where a, b, and c each may be singular or plural.

Seventh, in embodiments of this application, "indicate" may include "directly indicate" and "indirectly indicate". For example, when a piece of indication information is described to indicate information I, the indication information may directly indicate I or indirectly indicate I, but it does not necessarily indicate that the indication information carries I.

Information indicated by indication information is referred to as to-be-indicated information. In a specific implementation process, there are a plurality of manners of indicating the to-be-indicated information, for example, but not limited to, the following manners: The to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of all pieces of information that is pre-agreed on (for example, stipulated in a protocol), to reduce indication overheads to some extent. In addition, a common part of all pieces of information may be further identified and indicated in a unified manner, to reduce indication overheads caused by separately indicating same information.

Furthermore, specific indication manners may alternatively be various existing indication manners, for example, but not limited to, the foregoing indication manners and various combinations thereof. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manners in embodiments of this application should be understood as covering various methods that enable a to-be-indicated party to learn of the to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device. The configuration information may include, for example, but is not limited to, one or a combination of at least two of radio resource control signaling, for example, radio resource control (radio resource control, RRC) signaling, medium access control (medium access control, MAC) layer signaling, for example, a MAC-control element (control element, CE), and physical layer signaling, for example, downlink control information (downlink control information, DCI).

It can be learned from the descriptions of the foregoing system scenario and technical concepts that, when the PEI indicates, by using the bits carried in the DCI, whether the PO needs to be woken up, because the DCI includes at least 12 bits, a plurality of POs or a plurality of groups (which may be referred to as sub-groups (sub-group)) in one PO may be indicated. However, how bits in a PEI indicate a plurality of POs or a plurality of sub-groups in one PO is not provided in a current solution (the sub-group in the PO may be understood as grouping UEs that monitor a paging PDCCH on the PO, each group may be referred to as a PO sub-group, and when the PO carries paging data, the PO sub-group in the PO may or may not carry paging data). When the PEI is sent to the UE by using an SSS or a CSI-RS and a known sequence, when receiving the PEI, the UE performs, by using the known sequence, correlation detection in a time and frequency domain area in which the SSS or the CSI-RS is sent. Once a large correlation value is detected, it may be considered that paging exists on the PO. However, how a plurality of sequences in the PEI indicate a plurality of POs or a plurality of sub-groups in one PO is not provided in the current solution. To resolve the foregoing problem, this application provides the following solutions.

FIG. 9 is a schematic flowchart of an example according to an embodiment of this application. In this embodiment of this application, a network device may send paging-related information to a terminal device or a terminal device group, where terminal devices in a terminal device group monitor a same PO (or a same PO sub-group). For brevity, descriptions are provided below only by using an example in which paging-related information is sent to a terminal device. It should be understood that this embodiment of this application is also applicable to a solution in which the network device sends paging to the terminal device group.

As shown in a method 200 in FIG. 9, the following steps are as follows: S210: A first network device sends first information, and a first terminal device UE receives the first information.

The first information indicates whether a paging occasion PO sub-group configured for a first paging frame PF carries paging data, the first PF is located in a first time window, the first UE corresponds to a first PO sub-group, and the first PO sub-group belongs to one of PO sub-groups configured for the first PF.

For example, the first information indicates whether a PO sub-group configured for one or more PFs in the first time window carries paging data. The PO sub-group configured for the one or more PFs may or may not be located in the first time window.

For example, the first information may indicate whether PO sub-groups configured for all PFs in the first time window carry paging data.

It should be understood that the PO sub-group configured for the PF may also be referred to as a PO sub-group defined for the PF, and is all PO sub-groups defined or configured for the PF.

It should be noted that a sub-group on the PO may be understood as grouping UEs that monitor a paging PDCCH on the PO, and each group may be referred to as a PO sub-group. When paging UE in an idle state or an inactive state exists on the PO, paging may or may not exist in the PO sub-group on the PO. The PO sub-group in the solution of this application may be replaced with the PO. To be specific, when a PO to which the PO sub-group belongs is not divided, the PO sub-group is the PO. In other words, a solution related to the PO sub-group is also applicable to the PO.

In a possible implementation, a part of the PO sub-groups configured for the first PF are included in a second time window, and the second time window is different from the first time window.

In this manner, when a large quantity of POs or PO sub-groups are configured for the first PF or a large quantity of monitoring occasions are included in each PO or PO sub-group, the PO or the PO sub-group configured for the first PF may cross a plurality of time windows. In this case, the PO or the PO sub-group indicated by the first information crosses a plurality of time windows. In this manner, a manner of configuring the PO or the PO sub-group for the first PF is extended.

S220: The first UE determines that the first information indicates whether the first PO sub-group carries paging data.

Specifically, the first UE determines, based on the first PO sub-group and a first association relationship, that the first information indicates whether the first PO sub-group carries the paging data, where the first association relationship indicates a correspondence between the first information and the PO sub-group configured for the first PF.

In a possible implementation, a type of the first information is downlink control information DCI, and that the first association relationship indicates a correspondence between the first information and the PO sub-group configured for the first PF includes: The first association relationship indicates a correspondence between a bit index of the first information and a number of the PO sub-group configured for the first PF.

It should be noted that the number of the PO sub-group may be an index of a PO sub-group calculated by using a formula, or may be a number corresponding to a PO sub-group obtained by further sorting the index in a specific order. This is not limited in this application.

In a possible implementation, a quantity of bits of the first information is greater than or equal to a quantity of PO sub-groups configured for the first PF, and the bits of the first information is in a one-to-one correspondence with the PO sub-groups configured for the first PF; or a quantity of bits of the first information is less than a quantity of PO sub-groups configured for the first PF, and each of at least one bit of the first information corresponds to a plurality of PO sub-groups in the PO sub-groups configured for the first PF.

For example, when the quantity of bits of the first information is greater than or equal to the quantity of PO sub-groups configured for the first PF, numbers of PO sub-groups configured for the first PF may be in a one-to-one correspondence with bit indexes of the first information in ascending or descending order of the numbers of the PO sub-groups configured for the first PF.

For example, when the quantity of bits of the first information is less than the quantity of PO sub-groups configured for the first PF, the number of the PO sub-group configured for the first PF may correspond to the bit index of the first information in a cyclic remainder mapping manner. For example, if a remainder obtained by dividing the number of the first PO sub-group by the quantity of bits of the first information is m (m is an integer, and m is greater than or equal to 0), the first PO sub-group corresponds to an $m^{th}$ bit of the first information, and the first UE determines, based on the $m^{th}$ bit, whether the corresponding PO or PO sub-group carries paging data. It can be learned that in this solution, one bit of the first information corresponds to a plurality of PO sub-groups. The cycle means that, assuming that the quantity of bits of the first information is n, a remainder obtained by dividing a number of an $(n+1)^{th}$ PO sub-group by the quantity of bits of the first information is 1. This means that in this case, a first bit corresponding to the first information is the same as a bit of the first information corresponding to a number of a $1^{st}$ PO sub-group, that is, one cycle.

In the foregoing manner, when the first information is sent by using DCI, a mapping relationship may be formed by associating a bit index (or numbering the bit of the first information, which is not limited in this application) of the first information with a number (or an index, and a manner of numbering the PO sub-group or designing an index of the PO sub-group is not limited in this application) of the PO sub-group configured for the first PF. In the foregoing manner, a problem of how to perform mapping between a plurality of bits of the first information and a PO or a PO sub-group configured for the first PF can be resolved.

In a possible implementation, a type of the first information is a secondary synchronization signal SSS, a tracking reference signal TRS, or a channel state information reference signal CSI-RS, and that the first association relationship indicates a correspondence between the first information and the PO sub-group configured for the first PF includes: The first association relationship indicates a correspondence between a sequence index of the first information and a number of the PO sub-group configured for the first PF.

In a possible implementation, a quantity of sequences configured for the first information is greater than or equal to a quantity of PO sub-groups configured for the first PF, and the sequences of the first information are in a one-to-one correspondence with the PO sub-groups configured for the first PF; or a quantity of sequences configured for the first information is less than a quantity of PO sub-groups configured for the first PF, and each of at least one sequence of the first information corresponds to a plurality of PO sub-groups in the PO sub-groups configured for the first PF.

It should be understood that the sequence configured for the first information means that a network side configures one or more sequences for sending the first information, and selects one or more sequences from the sequences to send the first information.

For example, when the quantity of sequences configured for the first information is greater than or equal to the quantity of PO sub-groups configured for the first PF, numbers of PO sub-groups configured for the first PF may be in a one-to-one correspondence with bit indexes of the first information in ascending or descending order of the numbers of the PO sub-groups configured for the first PF.

For example, when the quantity of sequences configured for the first information is less than the quantity of PO sub-groups configured for the first PF, the number of the PO sub-group configured for the first PF may correspond to the bit index of the first information in a cyclic remainder mapping manner. For example, if a remainder obtained by dividing the number of the first PO sub-group by the quantity of sequences configured for the first information is m (m is an integer, and m is greater than or equal to 0), the first PO sub-group corresponds to an $m^{th}$ sequence in the sequences configured for the first information, and the first UE determines, based on the $m^{th}$ sequence of the first information, whether the corresponding PO or PO sub-group carries paging data.

In the foregoing manner, when the first information is sent in a sequence manner, a mapping relationship may be formed by associating a sequence index (or numbering the sequence configured for the first information, or indexing or numbering a parameter used for generating the sequence, which is not limited in this application) of the first information with a number (or an index, and a manner of numbering the PO sub-group or designing an index of the PO sub-group is not limited in this application) of the PO sub-group configured for the first PF. In the foregoing manner, a problem of how to perform mapping between a plurality of sequences configured for the first information and a PO or a PO sub-group configured for the first PF can be resolved.

In a possible implementation, a type of the first information is a secondary synchronization signal SSS, a tracking reference signal TRS, or a channel state information reference signal CSI-RS, and that the first association relationship indicates a correspondence between the first information and the PO sub-group configured for the first PF includes: The first association relationship indicates a correspondence between a location of a resource configured for the first information and a number of the PO sub-group configured for the first PF.

In a possible implementation, a quantity of locations of resources configured for the first information is greater than or equal to a quantity of PO sub-groups configured for the first PF, and the locations of the resources configured for the first information are in a one-to-one correspondence with the PO sub-groups configured for the first PF; or a quantity of locations of resources configured for the first information is less than a quantity of PO sub-groups configured for the first PF, and each of at least one location of at least one resource configured for the first information corresponds to a plurality of PO sub-groups in the PO sub-groups configured for the first PF.

For example, when the quantity of locations of the resources configured for the first information is greater than or equal to the quantity of PO sub-groups configured for the first PF, numbers of PO sub-groups configured for the first PF may be in a one-to-one correspondence with bit indexes of the first information in ascending or descending order of the numbers of the PO sub-groups configured for the first PF.

For example, when the quantity of locations of the resources configured for the first information is less than the quantity of PO sub-groups configured for the first PF, the number of the PO sub-group configured for the first PF may correspond to the bit index of the first information in a cyclic remainder mapping manner. For specific content, refer to the foregoing description. Details are not described herein again.

It should be understood that, the location of the resource configured for the first information means that a network side configures one or more resources for sending the first information, where each resource corresponds to one time-frequency location, and the network side selects one or more resources from the resources to send the first information.

In the foregoing manner, when the first information is sent in a sequence manner, a mapping relationship may be formed by associating a location of a resource configured for the first information with a number (or an index, and a manner of numbering the PO sub-group or designing an index of the PO sub-group is not limited in this application) of the PO sub-group configured for the first PF. In the foregoing manner, a problem of how to perform mapping between a plurality of resources configured for the first information and a PO or a PO sub-group configured for the first PF can be resolved. Therefore, the UE can determine, based on a resource location at which a PO or a PO sub-group corresponding to the UE is located and the first association relationship, whether paging exists in the PO or the PO sub-group.

In a possible implementation, a type of the first information is a secondary synchronization signal SSS, a tracking reference signal TRS, or a channel state information reference signal CSI-RS, and that the first association relationship indicates a correspondence between the first information and the PO sub-group configured for the first PF includes: The first association relationship indicates a correspondence between a number of the PO sub-group configured for the first PF and a combination of a sequence index of the first information and a location of a resource configured for the first information.

In a possible implementation, a product of a quantity of sequences configured for the first information and a quantity of locations of resources configured for the first information is greater than or equal to a quantity of PO sub-groups configured for the first PF, and the sequences of the first information are in a one-to-one correspondence with the PO sub-groups configured for the first PF; or a product of a quantity of sequences configured for the first information and a quantity of locations of resources configured for the first information is less than a quantity of PO sub-groups configured for the first PF, and each of at least one sequence of the first information corresponds to a plurality of PO sub-groups in the PO sub-groups configured for the first PF.

For example, when the product of the quantity of sequences configured for the first information and the quantity of locations of the resources configured for the first information is greater than or equal to the quantity of PO sub-groups configured for the first PF, numbers of PO sub-groups configured for the first PF may be in a one-to-one correspondence with different sequences of different resource locations configured for the first information in an ascending or descending order of the numbers of the PO sub-groups configured for the first PF.

For example, when the product of the quantity of sequences configured for the first information and the quantity of locations of the resources configured for the first information is less than the quantity of PO sub-groups configured for the first PF, the number of the PO sub-group configured for the first PF may correspond, in a cyclic remainder mapping manner, to different sequences of different resource locations configured for the first information. For specific content, refer to the foregoing description. Details are not described herein again.

In the foregoing manner, when a plurality of sequences may be sent on each resource, a mapping relationship between the first information and the PO sub-group configured for the first PF is determined based on the product of the quantity of sequences configured for the first information and the quantity of locations of the resources configured for the first information and the quantity of PO sub-groups configured for the first PF. In the foregoing manner, a problem of how to perform mapping between the first information and a PO or a PO sub-group configured for the first PF can be resolved when each of a plurality of resources configured for the first information is configured to send a plurality of sequences.

In the method 200, content indicated by the first information is defined, so that the UE can obtain, based on the first association relationship, the correspondence between the first information and the PO sub-group configured for the first PF, and further, the UE can learn whether the PO or the PO sub-group corresponding to the UE indicated by the first information carries paging data (or referred to as whether paging exists). According to the foregoing solution, a problem of how to perform mapping when the first information indicates a plurality of POs or PO sub-groups can be resolved.

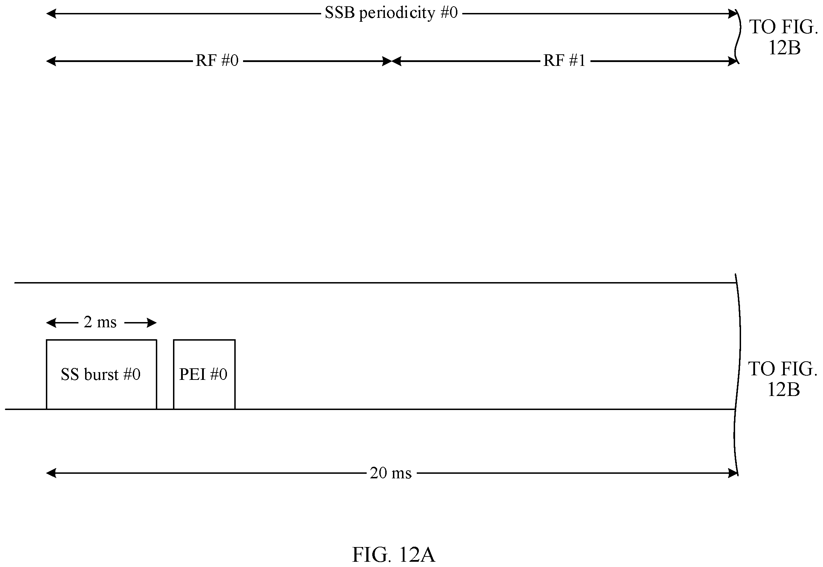

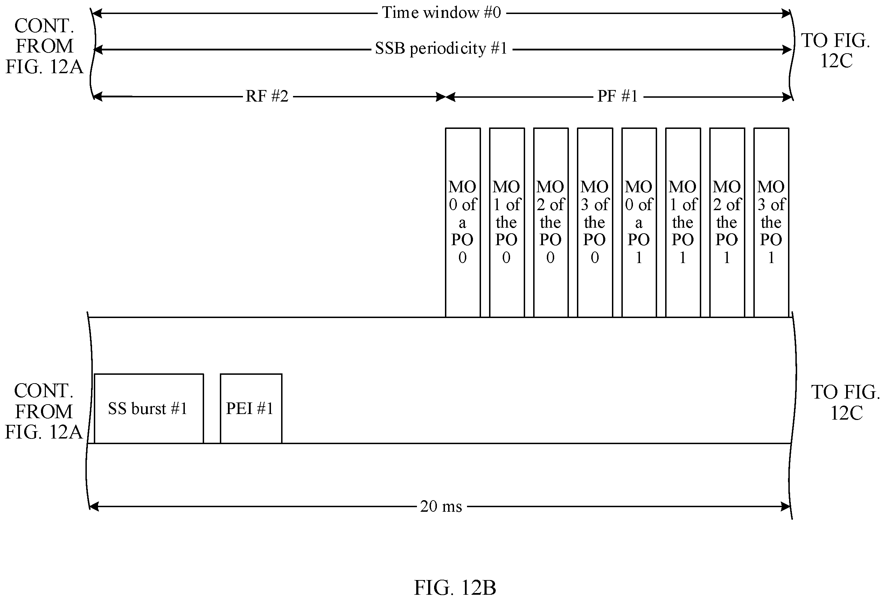

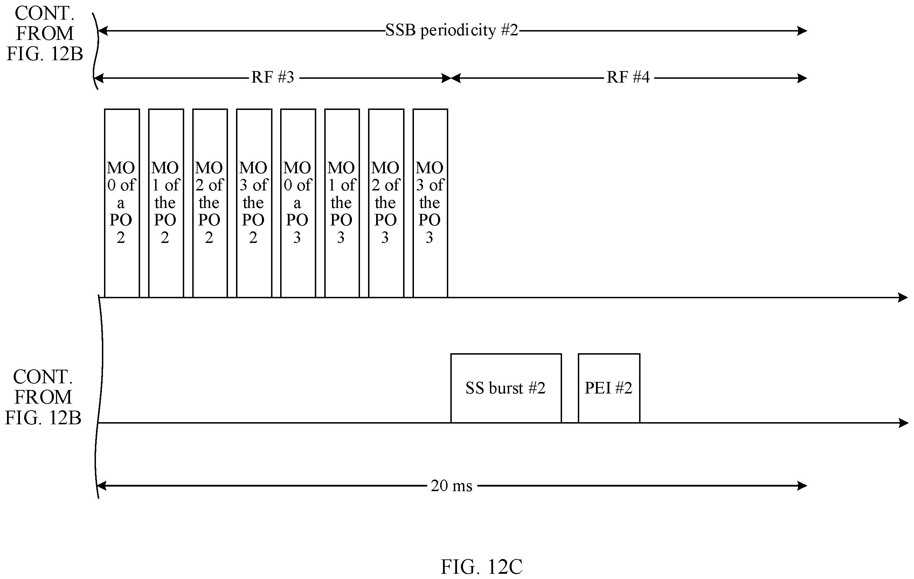

In a current solution in which a PEI indicates a PO, there is a case in which the PO indicated by the PEI occupies a long time in time domain. For example, in FIG. 12A, FIG. 12B, and FIG. 12C, a PEI #0 indicates a PO 0, a PO 1, a PO 2, and a PO 3. These POs occupy a plurality of RFs. There is a delay of at least 30 ms from an MO 0 of the PO 0 to an MO 0 of the PO 3, and there is a long distance between the PO 3 and the PEI #0. Consequently, two problems are caused. Problem 1: After monitoring the PEI, the UE needs to switch to a sleep state, and switches back to a normal working mode when the PO arrives. When there is a large quantity of POs defined by a PF, the UE needs to perform state switching back and forth, which increases power consumed by the UE. Problem 2: When a time interval between a PO #3 and a corresponding PEI #0 is large, if no paging arrives at a base station before the PEI #0, the PEI #0 indicates that no paging exists on the PO #3. If paging suddenly arrives at the base station between the PEI #0 and the PO #3, regardless of whether the PO #3 carries paging data, the UE usually does not receive the PO #3 based on an indication of the PEI #0. The UE does not receive the paging until waits for a PO in a next discontinuous reception (discontinuous reception, DRX) cycle. It can be learned that a specific paging delay is caused if a distance between the PO and the PEI is too long.

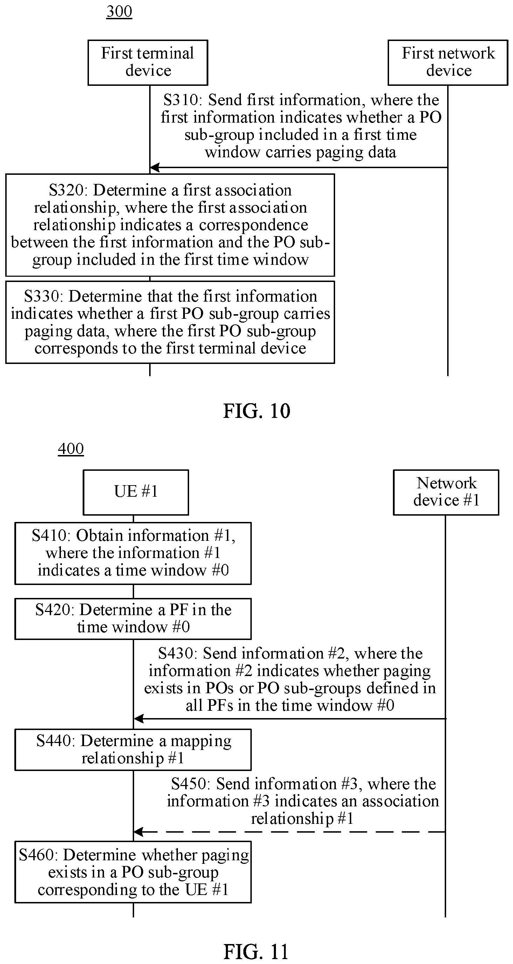

To resolve the foregoing problem, this application further provides a method for indicating a plurality of POs or a plurality of PO sub-groups by a PEI. As shown in a method 300 in FIG. 10, FIG. 10 is a schematic flowchart of another example according to an embodiment of this application.

S310: A first network device sends first information, and a first terminal device UE receives the first information.

The first information indicates whether a paging occasion PO sub-group included in a first time window carries paging data, the first UE corresponds to a first PO sub-group, and the first PO sub-group belongs to one of PO sub-groups included in the first time window.

It should be understood that the PO sub-group included in the first time window is all PO sub-groups included in the first time window, that is, all PO sub-groups in the first time window in time domain.

It should be noted that in the foregoing manner, the PO sub-groups included in the first time window may be PO sub-groups configured for different PFs.

It should be noted that, in the foregoing manner, quantities of PO sub-groups included in different time windows may be different, that is, quantities of PO sub-groups indicated by different first information may be different. Therefore, the UE needs to obtain a quantity of PO sub-groups included in each time window, which may be calculated by the UE, or the network side may send indication information to indicate a quantity of PO sub-groups included in the time window, to determine a mapping relationship between the first information and the PO sub-group included in the time window.

It should be noted that a sub-group on the PO may be understood as grouping UEs that monitor a paging PDCCH on the PO, and each group may be referred to as a PO sub-group. When paging UE in an idle state or an inactive state exists on the PO, paging may or may not exist in the PO sub-group on the PO. The PO sub-group in the solution of this application may be replaced with the PO. To be specific, when a PO to which the PO sub-group belongs is not divided, the PO sub-group is the PO. In other words, a solution related to the PO sub-group is also applicable to the PO.

S320: The first UE determines a first association relationship.

Specifically, the first UE determines the first association relationship based on a quantity of PO sub-groups included in the first time window, where the first association relationship indicates a correspondence between the first information and the PO sub-group included in the first time window.

S330: The first UE determines that the first information indicates whether the first PO sub-group carries paging data.

Specifically, the first UE determines, based on the first PO sub-group and the first association relationship, that the first information indicates whether the first PO sub-group carries the paging data.

In a possible implementation, a first monitoring occasion MO corresponding to each of the PO sub-groups included in the first time window is included in the first time window.

In this solution, when MOs corresponding to POs or PO sub-groups included in the first time window are located in a plurality of time windows, and the plurality of time windows correspond to a plurality of pieces of first information, it may be specified that the PO or the PO sub-group is indicated by specific first information. As shown in the foregoing solution, the PO or the PO sub-group is indicated by first information corresponding to a time window in which a first MO corresponding to the PO or the PO sub-group is located. According to this solution, content indicated by the first information can be more accurate.

In a possible implementation, a type of the first information is downlink control information DCI, and that the first association relationship indicates a correspondence between the first information and the PO sub-group included in the first time window includes: The first association relationship indicates a correspondence between a bit index of the first information and a number of the PO sub-group included in the first time window.

It should be noted that the number of the PO sub-group may be an index of a PO sub-group calculated by using a formula, or may be a number corresponding to a PO sub-group obtained by further sorting the index in a specific order. This is not limited in this application.

In a possible implementation, a quantity of bits of the first information is greater than or equal to a quantity of PO sub-groups included in the first time window, and the bits of the first information are in a one-to-one correspondence with the PO sub-groups included in the first time window; or a quantity of bits of the first information is less than a quantity of PO sub-groups included in the first time window, and each of at least one bit of the first information corresponds to a plurality of PO sub-groups in the PO sub-groups included in the first time window.

For example, when the quantity of bits of the first information is greater than or equal to the quantity of PO sub-groups included in the first time window, numbers of PO sub-groups included in the first time window may be in a one-to-one correspondence with bit indexes of the first information in ascending or descending order of the numbers of the PO sub-groups included in the first time window.

For example, when the quantity of bits of the first information is less than the quantity of PO sub-groups included in the first time window, the number of the PO sub-group included in the first time window may correspond to the bit index of the first information in a cyclic remainder mapping manner. For example, if a remainder obtained by dividing the number of the first PO sub-group by the quantity of bits of the first information is m (m is an integer, and m is greater than or equal to 0), the first PO sub-group corresponds to an $m^{th}$ bit of the first information, and the first UE determines, based on the $m^{th}$ bit, whether the corresponding PO or PO sub-group carries paging data.

In the foregoing manner, when the first information is sent by using DCI, a mapping relationship may be formed by associating a bit index (or numbering the bit of the first information, which is not limited in this application) of the first information with a number (or an index, and a manner of numbering the PO sub-group or designing an index of the PO sub-group is not limited in this application) of the PO sub-group included in the first time window. In the foregoing manner, a problem of how to perform mapping between a plurality of bits of the first information and a PO or a PO sub-group included in the first time window can be resolved.

In a possible implementation, a type of the first information is a secondary synchronization signal SSS, a tracking reference signal TRS, or a channel state information reference signal CSI-RS, and that the first association relationship indicates a correspondence between the first information and the PO sub-group included in the first time window includes: The first association relationship indicates a correspondence between a sequence index of the first information and a number of the PO sub-group included in the first time window.

In a possible implementation, a quantity of sequences configured for the first information is greater than or equal to a quantity of PO sub-groups included in the first time window, and the sequences of the first information are in a one-to-one correspondence with the PO sub-groups included in the first time window; or a quantity of sequences configured for the first information is less than a quantity of PO sub-groups included in the first time window, and each of at least one sequence of the first information corresponds to a plurality of PO sub-groups in the PO sub-groups included in the first time window.

It should be understood that the sequence configured for the first information means that a network side configures one or more sequences for sending the first information, and selects one or more sequences from the sequences to send the first information.

For example, when the quantity of sequences configured for the first information is greater than or equal to the quantity of PO sub-groups included in the first time window, numbers of PO sub-groups included in the first time window may be in a one-to-one correspondence with bit indexes of the first information in ascending or descending order of the numbers of the PO sub-groups included in the first time window.

For example, when the quantity of sequences configured for the first information is less than the quantity of PO sub-groups included in the first time window, the number of the PO sub-group included in the first time window may correspond to the bit index of the first information in a cyclic remainder mapping manner. For example, if a remainder obtained by dividing the number of the first PO sub-group by the quantity of sequences configured for the first information is m (m is an integer, and m is greater than or equal to 0), the first PO sub-group corresponds to an $m^{th}$ sequence in the sequences configured for the first information, and the first UE determines, based on the $m^{th}$ sequence of the first information, whether the corresponding PO or PO sub-group carries paging data.

In the foregoing manner, when the first information is sent in a sequence manner, a mapping relationship may be formed by associating a sequence index (or numbering the sequence configured for the first information, which is not limited in this application) of the first information with a number (or an index, and a manner of numbering the PO sub-group or designing an index of the PO sub-group is not limited in this application) of the PO sub-group included in the first time window. In the foregoing manner, a problem of how to perform mapping between a plurality of sequences configured for the first information and a PO or a PO sub-group included in the first time window can be resolved.

In a possible implementation, a type of the first information is a secondary synchronization signal SSS, a tracking reference signal TRS, or a channel state information reference signal CSI-RS, and that the first association relationship indicates a correspondence between the first information and the PO sub-group included in the first time window includes: The first association relationship indicates a correspondence between a location of a resource configured for the first information and a number of the PO sub-group included in the first time window.

In a possible implementation, a quantity of locations of resources configured for the first information is greater than or equal to a quantity of PO sub-groups included in the first time window, and the locations of the resources configured for the first information are in a one-to-one correspondence with the PO sub-groups included in the first time window; or a quantity of locations of resources configured for the first information is less than a quantity of PO sub-groups included in the first time window, and each of at least one location of at least one resource configured for the first information corresponds to a plurality of PO sub-groups in the PO sub-groups included in the first time window.

It should be understood that, the location of the resource configured for the first information means that a network side configures one or more resources for sending the first information, where each resource corresponds to one time-frequency location, and the network side selects one or more resources from the resources to send the first information.

For example, when the quantity of locations of the resources configured for the first information is greater than or equal to the quantity of PO sub-groups included in the first time window, numbers of PO sub-groups included in the first time window may be in a one-to-one correspondence with bit indexes of the first information in ascending or descending order of the numbers of the PO sub-groups included in the first time window.

For example, when the quantity of locations of the resources configured for the first information is less than the quantity of PO sub-groups included in the first time window, the number of the PO sub-group included in the first time window may correspond to the bit index of the first information in a cyclic remainder mapping manner. For specific content, refer to the foregoing description. Details are not described herein again.

In the foregoing manner, when the first information is sent in a sequence manner, a mapping relationship may be formed by associating a location of a resource configured for the first information with a number (or an index, and a manner of numbering the PO sub-group or designing an index of the PO sub-group is not limited in this application) of the PO sub-group included in the first time window. In the foregoing manner, a problem of how to perform mapping between a plurality of resources configured for the first information and a PO or a PO sub-group included in the first time window can be resolved. Therefore, the UE can determine, based on a resource location at which a PO or a PO sub-group corresponding to the UE is located and the first association relationship, whether paging exists in the PO or the PO sub-group.

In a possible implementation, a type of the first information is a secondary synchronization signal SSS, a tracking reference signal TRS, or a channel state information reference signal CSI-RS, and that the first association relationship indicates a correspondence between the first information and the PO sub-group included in the first time window includes: The first association relationship indicates a correspondence between a number of the PO sub-group included in the first time window and a combination of a sequence index of the first information and a location of a resource configured for the first information.

In a possible implementation, a product of a quantity of sequences configured for the first information and a quantity of locations of resources configured for the first information is greater than or equal to a quantity of PO sub-groups included in the first time window, and the sequences of the first information are in a one-to-one correspondence with the PO sub-groups configured for the first PF; or a product of a quantity of sequences configured for the first information and a quantity of locations of resources configured for the first information is less than a quantity of PO sub-groups included in the first time window, and each of at least one sequence of the first information corresponds to a plurality of PO sub-groups in the PO sub-groups included in the first time window.

For example, when the product of the quantity of sequences configured for the first information and the quantity of locations of the resources configured for the first information is greater than or equal to the quantity of PO sub-groups included in the first time window, numbers of PO sub-groups included in the first time window may be in a one-to-one correspondence with different sequences of different resource locations configured for the first information in ascending or descending order of the numbers of the PO sub-groups included in the first time window.

For example, when the product of the quantity of sequences configured for the first information and the quantity of locations of the resources configured for the first information is less than the quantity of PO sub-groups included in the first time window, the number of the PO sub-group included in the first time window may correspond, in a cyclic remainder mapping manner, to different sequences of different resource locations configured for the first information. For specific content, refer to the foregoing description. Details are not described herein again.

In the foregoing manner, when a plurality of sequences may be sent on each resource, a mapping relationship between the first information and the PO sub-group included in the first time window is determined based on the product of the quantity of sequences configured for the first information and the quantity of locations of the resources configured for the first information and the quantity of PO sub-groups included in the first time window. In the foregoing manner, a problem of how to perform mapping between the first information and a PO or a PO sub-group included in the first time window can be resolved when each of a plurality of resources configured for the first information is configured to send a plurality of sequences.

In the method 300, content indicated by the first information is defined, so that the UE can obtain, based on the first association relationship, the correspondence between the first information and the PO sub-group (or the PO) included in the first time window, and further, the UE can learn whether the PO or the PO sub-group corresponding to the UE indicated by the first information carries paging data (or referred to as whether paging exists). According to the foregoing solution, a problem of how to perform mapping when the first information indicates a plurality of POs or PO sub-groups can be resolved. In addition, when an excessive quantity of POs are configured for a PF in the first time window or an excessive quantity of MOs are included in a PO configured for a PF, a paging delay may be caused when the PO configured for the PF spans a long time. According to the foregoing solution, the PO or the PO sub-group indicated by the first information is at a granularity of a time window, so that impact caused by the paging delay can be reduced.

The following describes the method 200 and the method 300 in detail with reference to specific embodiments.

As shown in a method 400 in FIG. 11, FIG. 11 is a schematic flowchart of an example according to an embodiment of this application.

S410: UE #1 obtains information #1.

The information #1 indicates a time window #0, and the information #1 includes one or more of the following information:

a start time point of the time window and a length of the time window.

In a possible implementation, the information #1 includes a start time point of the time window, and a length of the time window may be predefined or preconfigured. For example, the length of the time window is preconfigured as 20 ms. The UE #1 may master a location of the time window based on a fixed configuration length 20 ms of the time window.

In a possible implementation, the information #1 includes a start time point of the time window and a length of the time window. The UE #1 may master a location of the time window based on the information #1.

For example, the start time point of the time window may be a moment at which sending of information #2 ends, or may be a moment existing after an offset (offset) passes after a sending end moment of the information #2.

In a possible implementation, the information #1 is included in higher layer signaling, and the higher layer signaling may be a system message or radio resource control (radio resource control, RRC) signaling.

S420: The UE #1 determines a PF in a time window corresponding to the information #1.

Specifically, the UE #1 determines, based on whether an SFN of an RF in the time window #0 satisfies Formula (1), whether the RF is a PF, and if the SFN satisfies Formula (1), the RF is considered as the PF.

S430: A network device #1 sends information #2, and the UE #1 receives the information #2.

Specifically, the information #2 indicates whether paging exists (which may also be referred to as whether paging data is carried) in a PO or a PO sub-group defined in a PF (or referred to as a PO or a PO sub-group configured in a PF) in the time window #0.

The PO or the PO sub-group defined in the PF (or referred to as the PO or the PO sub-group configured in the PF) means that the PO or the PO sub-group is determined based on a search space set corresponding to the PF and by using Formula (2).

It should be noted that a relationship between a PO sub-group defined in a PF and a time domain location of the PF is not limited in this application. This means that all PO sub-groups in the defined PO sub-group may be included in the time window, or a part of PO sub-groups in the defined PO sub-group may be included in the time window, and other PO sub-groups are not included in the time window.

In a possible implementation, the information #2 indicates a PO or a PO sub-group defined in one or more PFs in the time window #0.

When there is only one PF in the time window #0, the information #2 indicates a PO or a PO sub-group defined in the PF in the time window #0.

When there are a plurality of PFs in the time window #0, the information #2 may indicate a PO or a PO sub-group defined in one of the plurality of PFs in the time window #0, or may indicate a PO or a PO sub-group defined in some of the plurality of PFs. In this case, remaining PFs in the plurality of PFs need to be indicated by other information, that is, in this case, the time window #0 corresponds to a plurality of pieces of information, each piece of information indicates a PO or a PO sub-group defined in one or more PFs in the time window #0.

When there are a plurality of PFs in the time window #0, the information #2 may also indicate POs or PO sub-groups defined in all PFs in the time window #0.

It should be noted that all the PFs in the time window are all PFs included in the time window at a time domain location.

Descriptions are provided below by using an example in which the information #2 indicates whether the PO sub-groups defined in all the PFs in the time window #0 carry paging data.

It should be noted that when the PO is not divided, the PO sub-group may be considered as the PO.

For example, the information #2 may be a PEI, a PI, or other information having the foregoing function. In this embodiment of this application, the following solution is described by using an example in which the information #2 is a PEI.

In a possible implementation, the UE #1 determines a to-be-received PEI based on a detected PO sub-group (or PO).

The time window, the time window and the PFs, and the PFs and all the POs defined in the PFs are described by using an example in which it is assumed that there is only one PF in one time window, and a time location of the time window is aligned with a time location of the SSB periodicity (that is, a start moment of the time window is a start moment of the SSB periodicity, an end moment of the time window is an end moment of the SSB periodicity, and a length of the time window is equal to a length of the SSB periodicity). FIG. 12A, FIG. 12B, and FIG. 12C are a schematic diagram of an example of configuration of a PEI, a PF, and a PO according to this application.

In FIG. 12A, FIG. 12B, and FIG. 12C, a length of a time window in which a PEI functions is one SSB periodicity, and a start moment of the time window is a start moment of a first SS burst after the PEI. Four POs are configured for one PF, and each PO includes four MOs.

For example, an SSB periodicity #1 includes an RF #2 and a PF #1, the SSB periodicity #1 is 20 ms, time lengths of the RF #2 and the PF #1 each are 10 ms, a start moment of the RF #2 is aligned with a start moment of the SSB periodicity #1, an end moment of the RF #2 is aligned with a start moment of the PF #1, an end moment of the PF #1 is aligned with an end moment of the SSB periodicity #1, and a time location of a time window #0 is aligned with a time location of the SSB periodicity #1. Therefore, the time window #0 includes the complete RF #2 and the complete PF #1. A PEI #0 indicates whether POs defined in all PFs in the time window #0 carry paging data. If a PO 0 includes two PO sub-groups, the PEI #0 further indicates whether PO sub-groups defined in all the PFs in the time window #0 carry paging data.

It can be learned that all the PFs in the time window #0 include only the PF #1, POs defined in the PF #1 include a PO 1, a PO 2, a PO 3, and a PO 4, and each PO includes four MOs. It should be noted that although the PO 3 and the PO 4 do not appear in the PF #1 (the PO 3 and the PO 4 appear in an RF #3), the PO 3 and the PO 4 are still the POs defined in the PF #1. Therefore, the PF #1 defines four POs, and each PO includes four MOs. In addition to indicating whether the PO 1 and the PO 2 carry paging data, the PEI #0 further indicates whether the PO 3 and the PO 4 carry paging data. In other words, the PEI #0 indicates whether a PO (or a PO sub-group) defined in the PF #1 carries paging data. It can be learned that the PO (or the PO sub-group) defined in the PF does not necessarily appear in a time window corresponding to the PO (or the PO sub-group), and does not necessarily appear in a PF corresponding to the PO (or the PO sub-group).

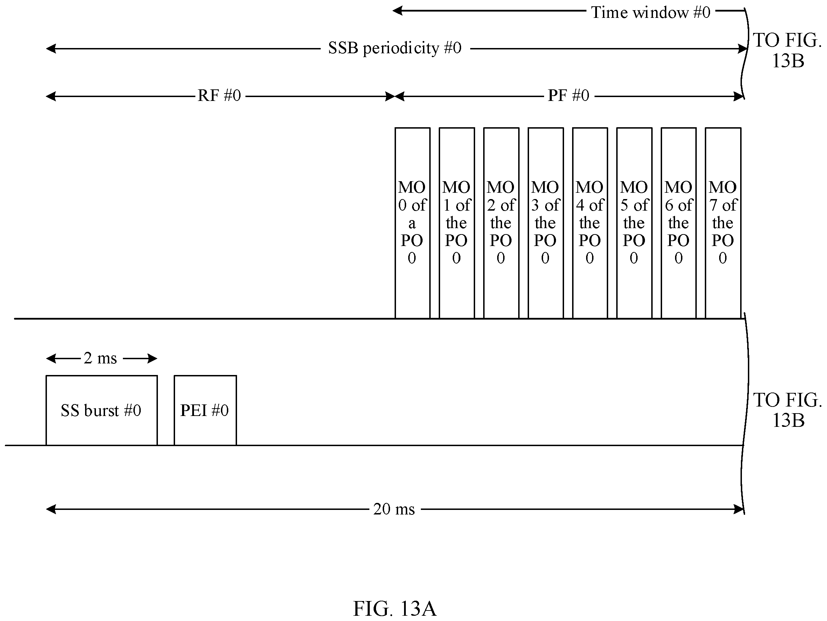

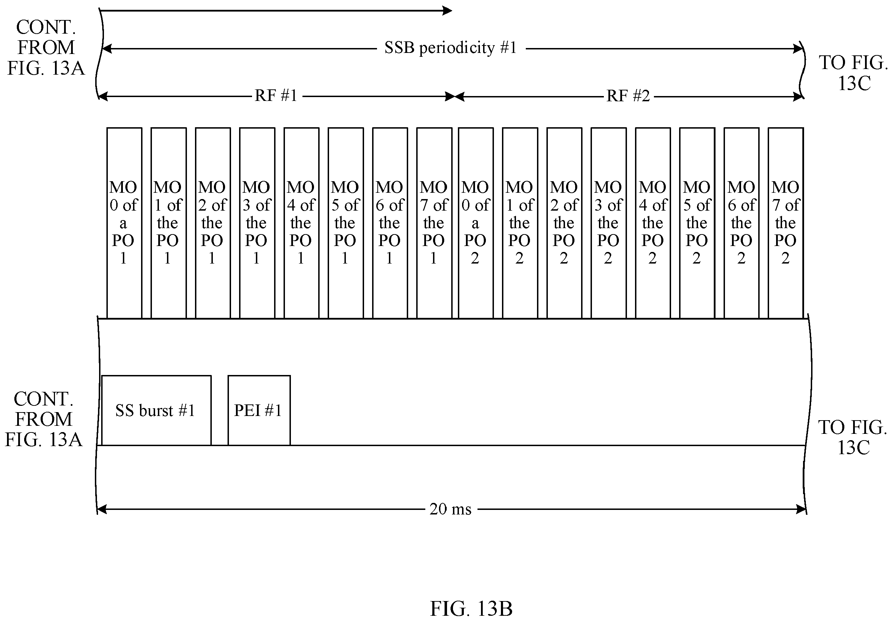

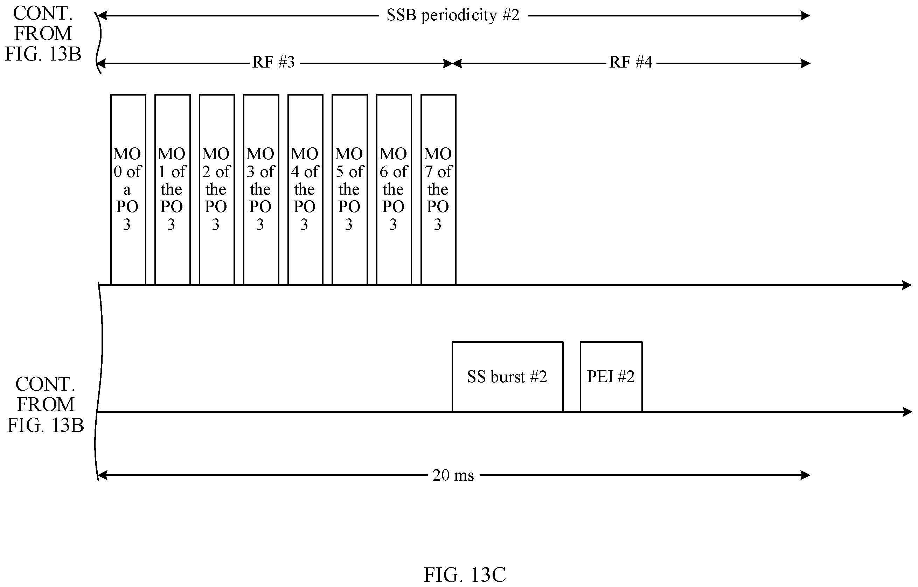

For another example, FIG. 13A, FIG. 13B, and FIG. 13C are a schematic diagram of another example of configuration of a PEI, a PF, and a PO according to this application.

In FIG. 13A, FIG. 13B, and FIG. 13C, a length of a time window in which a PEI functions is one SSB periodicity, and a start moment of the time window is a start moment of a 1st PF after the PEI. Four POs are configured for one PF, and each PO includes eight MOs.

In FIG. 13A, FIG. 13B, and FIG. 13C, an SSB periodicity #0 includes an RF #0 and a PF #0, the SSB periodicity #0 is 20 ms, time lengths of the RF #0 and the RF #0 each are 10 ms, a start moment of the RF #0 is aligned with a start moment of the SSB periodicity #0, an end moment of the RF #0 is aligned with a start moment of the PF #0, an end moment of the PF #0 is aligned with an end moment of the SSB periodicity #0, and a start moment of a time window #0 is aligned with a start moment of the PF #0. Therefore, a length of the time window #0 is 20 ms, and the time window #0 includes the PF #0 and an RF #1. The PEI #0 indicates whether POs defined in all PFs in the time window #0 carry paging data.

It can be learned that POs defined by PF#0 include a PO 1, a PO 2, a PO 3, and a PO 4, and each PO includes eight MOs. It should be noted that although the PO 2, the PO 3, and the PO 4 do not appear in the PF#0 (the PO 2 appears in an RF #1, the PO 3 appears in an RF #2, and the PO 4 appears in an RF #3), the PO 2, the PO 3, and the PO 4 are still the POs defined in the PF#0. Therefore, the PF#0 defines four POs, and each PO includes eight MOs. The PEI #0 indicates whether the PO 1, the PO 2, the PO 3, and the PO 4 defined in the PF #0 carry paging data.

S440: The UE #1 determines a mapping relationship #1.

Specifically, the UE #1 determines the mapping relationship #1, where the mapping relationship #1 indicates a mapping relationship between a PO or a PO sub-group corresponding to a PEI #0 and the PEI #0.

It should be noted that the mapping relationship #1 may be predefined or preconfigured, and the UE #1 directly uses the predefined or preconfigured mapping relationship to perform the following operation. For example, which manner in a rule #1 is used as the mapping relationship #1 may be predefined or preconfigured in the UE #1.

The rule #1 includes the following manners:

Manner 1

When the PEI is sent in a form of a PDCCH/DCI, a mapping relationship between the PEI and a PO (or a PO sub-group) is determined based on a quantity of PEI bits and a quantity of POs (or PO sub-groups) defined in all PFs in the time window #0 (when there is only one PO sub-group in the PO, the quantity of PO sub-groups is the quantity of POs).

Assuming that there are K PFs in a time window corresponding to the PEI, N POs are configured for each PF, and each PO may be divided into M sub-groups, where K ≥ 1, N ≥ 1, and M ≥ 1, a total of KMN PO sub-groups are configured for the PFs in the time window corresponding to the PEI (when M=1, one PO is equivalent to one PO sub-group).

The following describes the solution by using a manner of mapping between a PEI and a PO sub-group as an example. The manner of mapping between the PEI and the PO may be deduced based on the foregoing description of the relationship between the PO and the PO sub-group. Details are not described again in this application. In addition, when the PO is not divided, the following solution related to the PO sub-group is applicable to the PO. Details are not described in this application. For example, a PO 1 is divided into two PO sub-groups: a PO 1 sub-group #1 and a PO 1 sub-group #2. The PO 1 carries paging data. A bit corresponding to the PO 1 sub-group #1 in the PEI indicates that paging exists, and a bit corresponding to the PO 1 sub-group #2 in the PEI indicates that no paging exists. In this case, UE corresponding to the PO 1 sub-group #1 monitors the PO 1, and UE corresponding to the PO 1 sub-group #2 does not monitor the PO 1.

(a) If the PEI includes L bits, when L ≥ KMN, numbers of PO sub-groups are mapped to bits (bit indexes) of the PEI in a specific order.

For example, if an index of a PF to which a PO sub-group belongs, an index of a PO included in the PF, and an index of a sub-group in the PO are respectively k, n, and m, a number (index) of the PO sub-group may be calculated by using Formula (7):

$$index = k * MN + n * M + m \quad (7)$$

The PF index may be represented by using an SFN of an RF in which the PF is located, and the PO index may be represented by using i_s. A specific index value of a PO sub-group index (group_index) may be determined by using a sub-group obtaining method, for example, *group_index* = *UE_ID* mod*M*. UE_ID is an identifier value of the UE, and M is a quantity of sub-groups configured in the PO.

In a possible implementation, numbers of the PO sub-groups are mapped to bits (bit indexes) of the PEI in ascending or descending order.

In a possible implementation, numbers of the PO sub-groups are mapped to bits (bit indexes) of the PEI in a combination of an ascending order and a descending order.

The following uses an example to describe how to map the numbers of the PO sub-groups to the bits (bit indexes) of the PEI in ascending or descending order.

It is assumed that numbers of PO sub-groups are 0 to 7, PEI bit indexes are 0 to 11, and the numbers of the PO sub-groups are mapped to the PEI bits (bit indexes) in ascending order, that is, a bit corresponding to a sub-group is determined separately in ascending order of PF indexes, in ascending order of indexes of POs in each PF, and in ascending order of indexes of PO sub-groups in each PO, as shown in Table 1.

**Table 1**

| PO sub-group number | PEI bit index |
|---|---|
| 0 | 0 |
| 1 | 1 |
| 2 | 2 |
| 3 | 3 |
| 4 | 4 |
| 5 | 5 |
| 6 | 6 |
| 7 | 7 |
|  | 8 |
|  | 9 |
|  | 10 |
|  | 11 |

It can be learned from Table 1 that, the PO sub-group numbers are first arranged in ascending order, the PEI bit indexes are also arranged in ascending order, and then the PO sub-group numbers sequentially correspond to the PEI bit indexes, that is, a smallest PO sub-group number corresponds to a smallest PEI bit index. For example, a PO sub-group number '0' corresponds to a PEI bit index '0', and a PO sub-group number '7' corresponds to a PEI bit index '7'. Because a quantity of PEI bits is greater than a quantity of PO sub-groups, PEI bit indexes '8' to '11' do not have corresponding PO sub-group numbers.

It is assumed that numbers of PO sub-groups are 0 to 7, PEI bit indexes are 0 to 11, and the numbers of the PO sub-groups are mapped to the PEI bits (bit indexes) in descending order, that is, a bit corresponding to a sub-group is determined separately in descending order of PF indexes, in descending order of indexes of POs in each PF, and in descending order of indexes of PO sub-groups in each PO, as shown in Table 2.

**Table 2**

| PO sub-group number | PEI bit index |
|---|---|
| 7 | 0 |
| 6 | 1 |
| 5 | 2 |
| 4 | 3 |
| 3 | 4 |
| 2 | 5 |
| 1 | 6 |
| 0 | 7 |
|  | 8 |
|  | 9 |
|  | 10 |
|  | 11 |

It can be learned from Table 2 that, the PO sub-group numbers are first arranged in descending order, the PEI bit indexes are arranged in ascending order, and then the PO sub-group numbers sequentially correspond to the PEI bit indexes, that is, a largest PO sub-group number corresponds to a smallest PEI bit index. For example, a PO sub-group number '7' corresponds to a PEI bit index '0', and a PO sub-group number '0' corresponds to a PEI bit index '7'. Because a quantity of PEI bits is greater than a quantity of PO sub-groups, PEI bit indexes '8' to '11' do not have corresponding PO sub-group numbers.

The following uses an example to describe how to map the numbers of the PO sub-groups to the bits (bit indexes) of the PEI in the combination of an ascending order and a descending order.

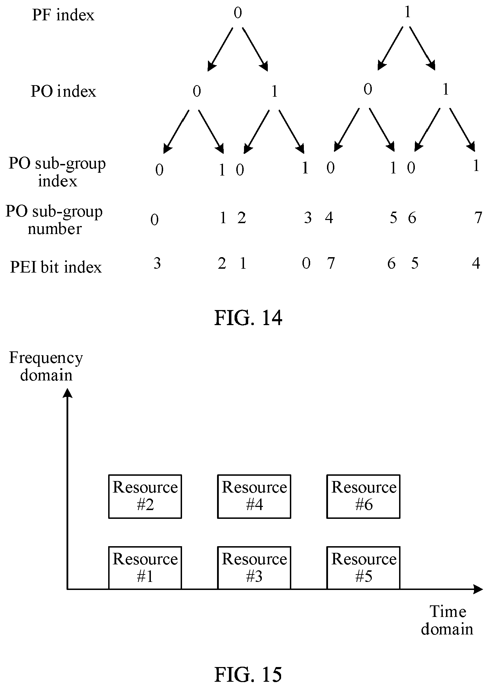

FIG. 14 is a schematic diagram of an example of a mapping relationship between a number of a PO sub-group and a PEI bit index according to this application. It is assumed that a time window includes two PFs whose indexes are respectively '0' and '1', each PF includes two POs whose indexes are respectively '0' and '1', and each PO includes two PO sub-groups whose indexes are respectively '0' and '1'. It can be learned from Formula (6) that numbers of PO sub-groups are sequentially '0', '1', '2', '3', '4', '5', '6', and '7'. For the numbers of the PO sub-groups, the indexes of the PO sub-groups, the indexes of the POs to which the PO sub-groups belong, and the indexes of the PFs to which the PO sub-groups belong, refer to FIG. 14. The PO sub-group numbers are mapped to the PEI bits in ascending order of the PF indexes, in descending order of the PO indexes, and in descending order of the PO sub-group indexes. To be specific, PO sub-group numbers corresponding to a PF index '0' are first mapped to PEI bit indexes '0 to 3', and PO sub-group numbers corresponding to a PF index '1' are mapped to PEI bit indexes '4 to 7'; and then PO sub-group numbers corresponding to the PF index '0' and a PO index '1' are mapped to PEI bit indexes '0 and 1', PO sub-group numbers corresponding to the PF index '0' and a PO index '0' are mapped to PEI bit indexes '2 and 3', PO sub-group numbers corresponding to the PF index '1' and the PO index '1' are mapped to PEI bit indexes '4 and 5', and PO sub-group numbers corresponding to the PF index '1' and the PO index '0' are mapped to PEI bit indexes '6 and 7'; and finally, a PO sub-group number corresponding to the PF index '0', the PO index '1', and a PO sub-group index '1' is mapped to a PEI bit index '0'. For other details, refer to the foregoing description. Details are not described herein again. PEI bit indexes '8' to '11' are remaining bit indexes, and do not have corresponding PO sub-group numbers. Table 3 shows a result of mapping the PO sub-group numbers to the PEI bit indexes in the foregoing manner.

**Table 3**

| PO sub-group number | PEI bit index |
|---|---|
| 3 | 0 |
| 2 | 1 |
| 1 | 2 |
| 0 | 3 |
| 7 | 4 |
| 6 | 5 |
| 5 | 6 |
| 4 | 7 |

(b) If the PEI includes L bits, when L < KMN, numbers of PO sub-groups are mapped to bits (bit indexes) of the PEI in a many-to-one manner.

In a possible implementation, the numbers of the PO sub-groups are mapped to the bits (bit indexes) of the PEI in a many-to-one manner through remainder mapping.

Specifically, a remainder y is obtained by performing a modulo operation of a number of a PO sub-group mod L, that is, y = index mod L, where y = 0, 1, ..., L-1. In this case, L - 1 ≥ y. For a manner of mapping between the remainder y and the L bits, refer to the description of the manner of mapping between the number of the PO sub-group and the L bits in Manner (a). Details are not described herein again.

The following describes the foregoing manner by using an example in which the PO sub-group numbers are '0' to '7' and the PEI bit indexes are '0' to '3', as shown in Table 4.

**Table 4**

| PO sub-group number | Remainder y | PEI bit index |
|---|---|---|
| 0 | 0 | 0 |
| 1 | 1 | 1 |
| 2 | 2 | 2 |

(continued)

| PO sub-group number | Remainder y | PEI bit index |
|---|---|---|
| 3 | 3 | 3 |
| 4 | 0 | 0 |
| 5 | 1 | 1 |
| 6 | 2 | 2 |
| 7 | 3 | 3 |

It can be learned from Table 4 that, PO sub-group numbers '0' and '4' are indicated by a bit corresponding to a PEI bit index '0', PO sub-group numbers '1' and '5' are indicated by a bit corresponding to a PEI bit index '1', PO sub-group numbers '2' and '6' are indicated by a bit corresponding to a PEI bit index '2', and PO sub-group numbers '3' and '7' are indicated by a bit corresponding to a PEI bit index '3'.

In a possible implementation, numbers of the PO sub-groups are mapped to bits (bit indexes) of the PEI in a many-to-one manner through group mapping.

Specifically, the PO sub-groups are grouped based on numbers, and are grouped into L groups, where each group is indicated by a PEI bit corresponding to the group.

For example, if PO sub-group numbers are '0' to '7', and PEI bit indexes are '0' to '2' (L is 3), PO sub-groups whose numbers are '0' to '2' are grouped into an '0th' group, and are indicated by a bit corresponding to a PEI bit index '0', PO sub-groups whose numbers are '3' to '5' are grouped into a '1st' group, and are indicated by a bit corresponding to a PEI bit index '1', and PO sub-groups whose numbers are '6' and '7' are grouped into a '2nd' group, and are indicated by a bit corresponding to a PEI bit index '2'.

A grouping manner is not limited in this application.

It should be noted that the foregoing manner of calculating the number of the PO sub-group is merely an example for description. This is not limited in this application. The number of the PO sub-group may alternatively be agreed on by the UE #1 and the network device #1 or indicated by the network device #1.

Manner 2

When the PEI is sent in an SSS, a TRS, or a CSI-RS manner, the mapping relationship between the PEI and the PO sub-group is determined based on a quantity of sequences configured for the PEI and a quantity of PO sub-groups defined in all PFs in the time window #0.

For a manner of mapping between the sequence index of the PEI and the PO sub-group number, refer to Manner 1. Details are not described herein again.

| PO sub-group number | Generation sequence used by a PEI |
|---|---|
| 0 | Sequence #0 |
| 1 | Sequence #1 |
| 2 | Sequence #2 |
| 3 | Sequence #3 |
| 4 | Sequence #4 |
| 5 | Sequence #5 |
| 6 | Sequence #6 |
| 7 | Sequence #7 |
|  | Sequence #8 |
|  | Sequence #9 |

In a possible implementation, the UE determines the sequence index of the PEI based on a generation parameter of a sequence broadcast by the network device #1.

Manner 3

When the PEI is sent in an SSS, a TRS, or a CSI-RS manner, the mapping relationship between the PEI and the PO sub-group is determined based on a quantity of locations of resources configured for the PEI and a quantity of PO sub-groups defined in all PFs in the time window #0.

The resource includes a time domain resource and/or a frequency domain resource.

(a) The mapping relationship between the PEI and the PO sub-group is determined based on a time domain resource (a time domain location) configured for the PEI and a quantity of PO sub-groups defined in all PFs in the time window #0.

Specifically, a number corresponding to each resource configured for the PEI is determined based on a time domain location of the resource, and a mapping relationship between the PEI and a PO (or a PO sub-group) is determined based on the number. For a manner of determining the mapping relationship between the PEI and the PO sub-group based on the number, refer to the description of determining the mapping relationship between the PEI and the PO sub-group based on the bit index of the PEI in Manner 1. Details are not described herein again.

For example, time domain locations of all resources configured for the PEI are numbered in sequence. For example, FIG. 15 is a schematic diagram of an example of resource configuration according to this application. Time domain locations of a resource #5 and a resource #6 are prior to time domain locations of a resource #3 and a resource #4, and the time domain locations of the resource #3 and the resource #4 are prior to time domain locations of a resource #1 and a resource #2. In other words, a time point at which a network device sends the resource #5 and the resource #6 is earlier than a time point at which the network device sends the resource #3 and the resource #4, and the time point at which the network device sends the resource #3 and the resource #4 is earlier than a time point at which the network device sends the resource #1 and the resource #2. Therefore, numbers of the resource #5 and the resource #6 may be set to 0, numbers of the resource #3 and the resource #4 may be set to 1, and numbers of the resource #1 and the resource #2 may be set to 2, or numbers of the resource #5 and the resource #6 may be set to 2, numbers of the resource #3 and the resource #4 may be set to 1, and numbers of the resource 1 and the resource #2 may be set to 0. In this manner, a plurality of configured resources may indicate a same PO sub-group.

(b) The mapping relationship between the PEI and the PO sub-group is determined based on a frequency domain resource (a frequency domain location) configured for the PEI and a quantity of PO sub-groups defined in all PFs in the time window #0.

Specifically, a number corresponding to each resource configured for the PEI is determined based on a frequency domain location of the resource, and a mapping relationship between the PEI and a PO sub-group is determined based on the number. For a manner of determining the mapping relationship between the PEI and the PO sub-group based on the number, refer to the description of determining the mapping relationship between the PEI and the PO sub-group based on the bit index of the PEI in Manner 1. Details are not described herein again.

For example, frequency domain locations of all resources are numbered in an order of sizes. For example, as shown in FIG. 15, frequencies of the resource #2, the resource #4, and the resource #6 are higher than frequencies of the resource #1, the resource #3, and the resource #5. Therefore, numbers of the resource #2, the resource #4, and the resource #6 may be set to 2, and numbers of the resource #1, the resource #3, and the resource #5 may be set to 1, or numbers of the resource #2, the resource #4, and the resource #6 may be set to 1, and numbers of the resource #1, the resource #3, and the resource #5 may be set to 2. In this manner, a plurality of configured resources may indicate a same PO sub-group.

(c) The mapping relationship between the PEI and the PO sub-group is determined based on a time domain resource (a time domain location) and a frequency domain resource (a frequency domain location) that are configured for the PEI and a quantity of PO sub-groups defined in all PFs in the time window #0.

Specifically, a number corresponding to each configured resource is determined based on a time domain location and a frequency domain location of the resource, and a mapping relationship between a PEI and a PO sub-group is determined based on the number. For a manner of determining the mapping relationship between the PEI and the PO sub-group based on the number, refer to the description of determining the mapping relationship between the PEI and the PO sub-group based on the bit index of the PEI in Manner 1. Details are not described herein again.

In a possible implementation, numbering may be performed in a manner of time domain first and then frequency domain. For example, as shown in FIG. 15, there are the following manners:

Manner a

A number of a resource with a higher frequency at a same time domain location is larger, and a number of a resource at a same frequency domain location corresponding to an earlier time (an earlier time domain location) is smaller. For example, a number of the resource #5 may be set to 1, a number of the resource #6 may be set to 2, a number of the resource #3 may be set to 3, a number of the resource #4 may be set to 4, a number of the resource #1 may be set to 5, and a number of the resource #2 may be set to 6.

Manner b

A number of a resource with a higher frequency at a same time domain location is smaller, and a number of a resource at a same frequency domain location corresponding to an earlier time (an earlier time domain location) is smaller. For example, a number of the resource #5 may be set to 2, a number of the resource #6 may be set to 1, a number of the resource #3 may be set to 4, a number of the resource #4 may be set to 3, a number of the resource #1 may be set to 6, and a number of the resource #2 may be set to 5.

Manner c

A number of a resource with a higher frequency at a same time domain location is smaller, and a number of a resource at a same frequency domain location corresponding to an earlier time (an earlier time domain location) is larger. For example, a number of the resource #5 may be set to 6, a number of the resource #6 may be set to 5, a number of the resource #3 may be set to 4, a number of the resource #4 may be set to 3, a number of the resource #1 may be set to 2, and a number of the resource #2 may be set to 1.

Manner d

A number of a resource with a higher frequency at a same time domain location is larger, and a number of a resource at a same frequency domain location corresponding to an earlier time (an earlier time domain location) is larger. For example, a number of the resource #5 may be set to 5, a number of the resource #6 may be set to 6, a number of the resource #3 may be set to 3, a number of the resource #4 may be set to 4, a number of the resource #1 may be set to 1, and a number of the resource #2 may be set to 2.

It should be noted that the foregoing quantity of resources is merely an example for description. This is not limited in this application.

In a possible implementation, numbering is performed in a manner of frequency domain first and then time domain. For specific content, refer to the foregoing method for numbering in a manner of time domain first and then frequency domain. Details are not described herein again.

Further, when one time-frequency area location (resource) is configured to send a plurality of sequences, the mapping relationship between the PEI and the PO sub-group may be further determined based on a sequence domain of the PEI.

Specifically, a number corresponding to a location of a resource configured for each sequence is determined based on a time domain location and/or a frequency domain location and/or a sequence index that are/is configured for the PEI, and the mapping relationship between the PEI and the PO sub-group is determined based on the number. For a manner of determining the mapping relationship between the PEI and the PO sub-group based on the number, refer to the description of determining the mapping relationship between the PEI and the PO sub-group based on the bit index of the PEI in Manner 1. Details are not described herein again.

For a manner of determining, based on a time domain location and/or a frequency domain location that are/is configured for each sequence, a number corresponding to each sequence, refer to Manners a, b, c, and d. Details are not described herein again. In this case, a plurality of sequences in one resource indicate one PO sub-group.

For a manner of determining, based on a sequence index of each sequence, a number corresponding to the sequence, refer to Manner 2. Details are not described herein again.

The following uses an example to describe the manner of determining, based on the time domain position, the frequency domain position, and the sequence index of each sequence, the number corresponding to the sequence.

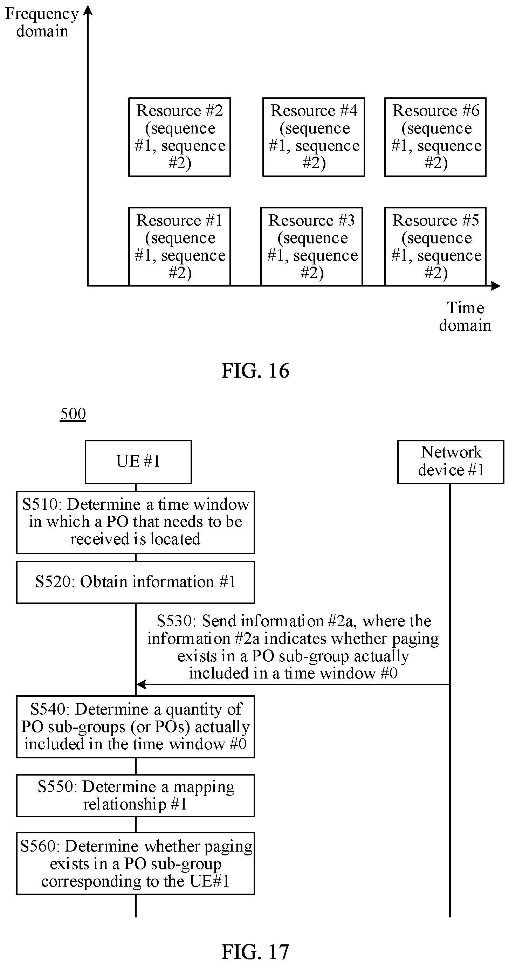

For example, FIG. 16 is a schematic diagram of another example of resource configuration according to this application. Each resource is configured to send two sequences, and indexes of the sequences are respectively a sequence #1 and a sequence #2.

For example, the sequence is numbered in an order of a sequence domain, a time domain, and a frequency domain. With reference to Manner a, numbers specified for all sequence based on different configured resource locations are shown in Table 5. In other words, a quantity of sequence numbers configured for the UE #1 is a product of a quantity of configured sequences and a quantity of configured resources (or referred to as a quantity of locations of resources).

**Table 5**

| Sequence index | | Sequence number |
|---|---|---|
| Resource #1 | Sequence #1 | 9 |
| | Sequence #2 | 10 |
| Resource #2 | Sequence #1 | 11 |
| | Sequence #2 | 12 |
| Resource #3 | Sequence #1 | 5 |
| | Sequence #2 | 6 |
| Resource #4 | Sequence #1 | 7 |
| | Sequence #2 | 8 |
| Resource #5 | Sequence #1 | 1 |
| | Sequence #2 | 2 |
| Resource #6 | Sequence #1 | 3 |
| | Sequence #2 | 4 |

For example, the sequence is numbered in an order of a sequence domain, a time domain, and a frequency domain, and in any one of Manners b, c, and d. For specific content, refer to the foregoing description. Details are not described herein again.

For example, the sequence is numbered in an order of a time domain, a frequency domain, and a sequence domain, and in any one of Manners a, b, c, and d. For specific content, refer to the foregoing description. Details are not described herein again.

It should be noted that the sequence may alternatively be numbered in an order of a frequency domain, a time domain, and a sequence domain or the like, and in any one of Manners a, b, c, and d. For specific content, refer to the foregoing description. Details are not described herein again.

The UE #1 determines, based on the mapping relationship #1, whether paging exists in a PO sub-group that corresponds to the UE #1 and that is indicated by the information #2. The mapping relationship #1 is any manner in the rule #1, and the mapping relationship #1 may be preconfigured in the UE #1.

Optionally, in S450, the network device #1 may send information #3, where the information #3 indicates a manner in the rule #1 that is used to determine the mapping relationship #1, and the UE #1 determines the mapping relationship #1 based on the information #3 and the rule #1.

S460: The UE #1 determines whether paging exists in a corresponding PO sub-group.

The UE #1 determines, based on the mapping relationship #1, a bit or a sequence of a PEI #0 corresponding to the corresponding PO sub-group, and determines, based on an indication of the bit or the sequence, whether paging exists in the PO sub-group.

For example, if a bit of the PEI #0 is '0', it indicates that no paging exists in the corresponding PO sub-group, or if a bit of the PEI #0 is '1', it indicates that paging exists in the corresponding PO sub-group.

If paging exists in the corresponding PO sub-group, a paging PDCCH is monitored on a PO corresponding to the PO sub-group; or if no paging exists in the corresponding PO sub-group, a paging PDCCH is not monitored on a PO corresponding to the PO sub-group.

The configuration shown in FIG. 12A, FIG. 12B, and FIG. 12C is used as an example. It is assumed that a PO to be detected by the UE #1 is a PO 2 defined in the PF #1, and a PEI corresponding to the PF #1 is a PEI #0. The PEI #0 is sent in a DCI manner, and has 10 bits whose bit indexes are '0' to '9'. The UE #1 performs mapping between the PEI #0 and the PO sub-group based on configuration or an agreement with the network device #1 and in a mapping manner in Manner 1 in the rule #1. The UE #1 determines a PO sub-group number based on a PO sub-group index corresponding to the UE #1. Assuming that a PO sub-group number corresponding to the UE #1 is '2', based on Table 1, a bit index of the PEI #0 corresponding to the PO sub-group is '2', and a bit corresponding to the bit index '2' of the PEI #0 is '1'. In this case, the UE #1 monitors a PO 2.

According to the method 400, when the PEI indicates a plurality of POs (PO sub-groups), it is specified that the PEI indicates a PO (or a PO sub-group) defined in the PF, so that the UE can determine, based on one of the foregoing mapping manners, a manner of mapping between the PEI and the PO (or the PO sub-group) corresponding to the PEI, to accurately determine whether a to-be-detected PO (or PO sub-group) carries paging data. In addition, when the PEI indicates a plurality of PO sub-groups, because UEs that need to monitor a PO may be grouped into one group, and UEs that do not need to monitor a PO may be grouped into one group, a quantity of UEs that do not need to monitor a PO is reduced as much as possible.

In a current solution in which a PEI indicates a PO, there is a case in which the PO indicated by the PEI occupies a long time in time domain. For example, in FIG. 13A, FIG. 13B, and FIG. 13C, a PEI #0 indicates a PO 0, a PO 1, a PO 2, and a PO 3. These POs occupy a plurality of RFs. There is a delay of at least 30 ms from an MO 0 of the PO 0 to an MO 0 of the PO 3, and there is a long distance between the PO 3 and the PEI #0. Consequently, two problems are caused. Problem 1: After monitoring the PEI, the UE needs to switch to a sleep state, and switches back to a normal working mode when the PO arrives. When there is a large quantity of POs defined by a PF, the UE needs to perform state switching back and forth, which increases power consumed by the UE. Problem 2: When a time interval between a PO #3 and a corresponding PEI #0 is large, if no paging arrives at a base station before the PEI #0, the PEI #0 indicates that no paging exists on the PO #3. If paging suddenly arrives at the base station between the PEI #0 and the PO #3, regardless of whether the PO #3 carries paging data, the UE usually does not receive the PO #3 based on an indication of the PEI #0. The UE does not receive the paging until waits for a PO in a next discontinuous reception (discontinuous reception, DRX) cycle. It can be learned that a specific paging delay is caused if a distance between the PO and the PEI is too long.

To resolve the foregoing problem, this application further provides a method for indicating a plurality of POs or a plurality of PO sub-groups by a PEI. As shown in a method 500 in FIG. 17, FIG. 17 is a schematic flowchart of another example according to an embodiment of this application.

S510: UE #1 determines a time window in which a PO that needs to be received is located.

Specifically, the UE #1 determines, based on a parameter #A, a PF that needs to be received, then determines, based on the PF, the PO that needs to be received, and finally determines, based on the PO that needs to be received, a time window in which the PO is located.

For example, a protocol related to 5G NR paging in 3GPP is used as an example. The parameter #A may be the following parameters of signaling in a system message:

nAndPagingFrameOffset: indicates a quantity of PFs in one DRX cycle and a frame offset of the PF;
tdd-UL-DL-ConfigurationCommon: indicates a configuration manner of an uplink/downlink slot or a frame structure; and when a slot is an uplink slot, the slot cannot be used for an MO of a PO; and
firstPDCCH-MonitoringOccasionOfPO: indicates a number of a first MO corresponding to the UE in a PO.

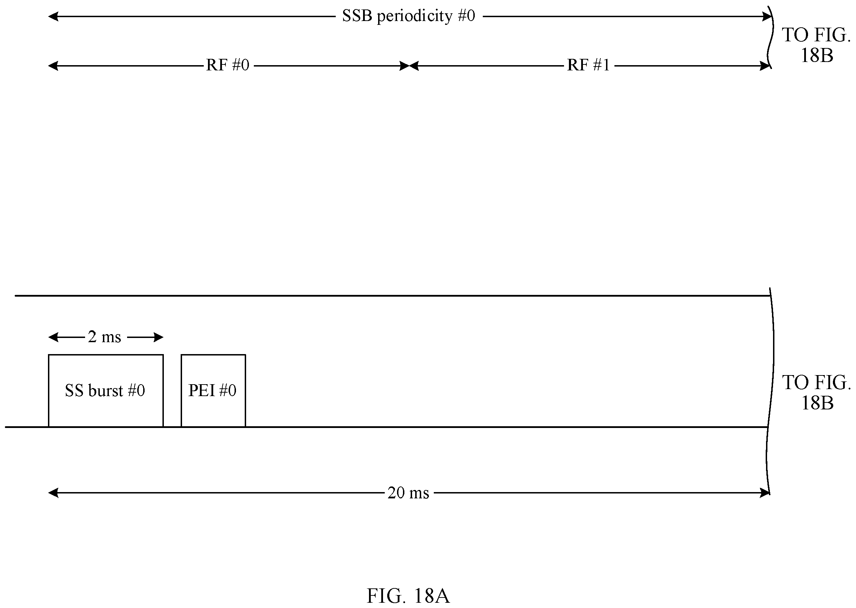

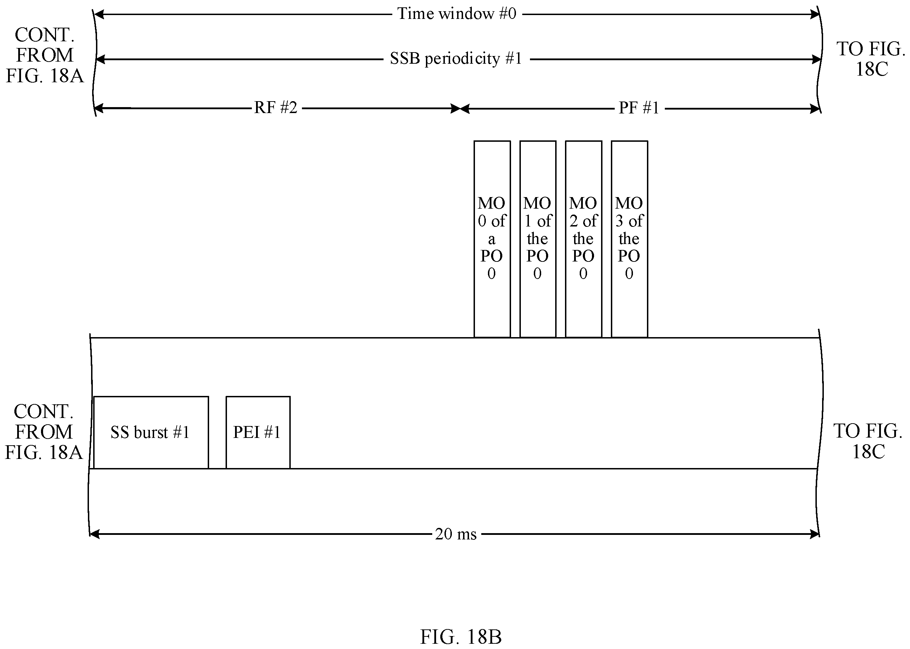

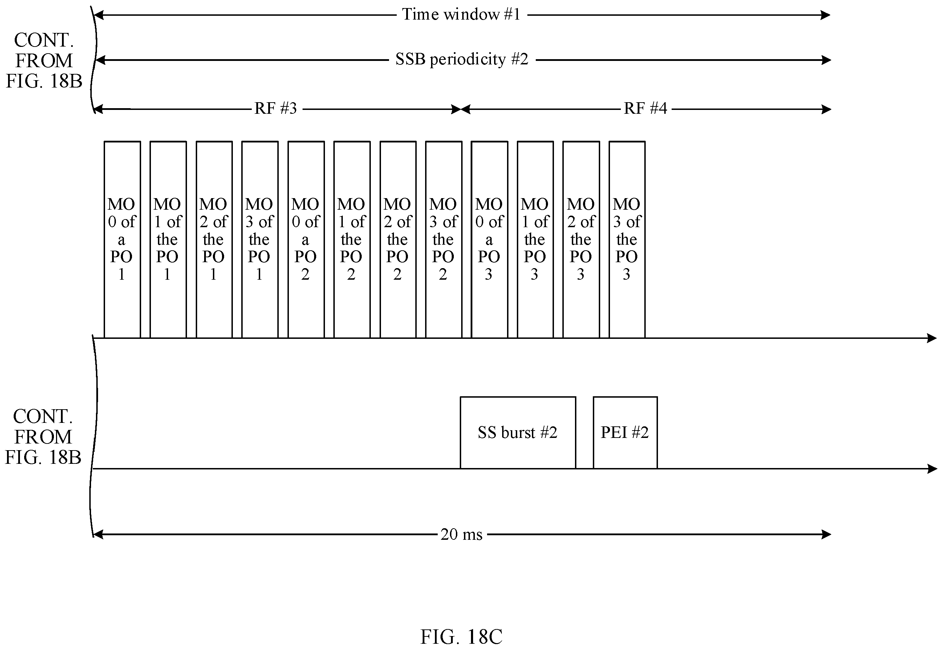

With reference to FIG. 18A, FIG. 18B, and FIG. 18C, the following uses an example to describe how the UE #1 determines, based on the parameter #A, the PO that needs to be received. FIG. 18A, FIG. 18B, and FIG. 18C are a schematic diagram of an example of configuration of a PEI, a PF, and a PO according to this application. In FIG. 18A, FIG. 18B, and FIG. 18C, a length of a time window in which a PEI functions is one SSB periodicity, and a start moment of the time window is a start moment of a first SS burst after the PEI. A density of a PF is 1/4, that is, a fourth frame of every four RFs is the PF, four POs are configured for each PF, and each PO includes four MOs.

Step a: The UE #1 determines, based on the parameter nAndPagingFrameOffset in the parameter #A, that a quantity of PFs that need to be received is 1, and a frame offset of the PF (PF#1) is 1.

Step b: The UE #1 determines, based on the parameter tdd-UL-DL-ConfigurationCommon, a slot configuration manner of an SSB periodicity #1 corresponding to the PF #1, and determines whether an MO configured for a search space set in the PF #1 is occupied by an uplink slot and whether the MO can be used for a PO (the following uses an example in which the MO configured for the search space set in the PF #1 can be used for the PO).

Step c: The UE #1 determines a sending time of the first MO of the PO based on the parameter firstPDCCH-MonitoringOccasionOfPO.

S520: UE #1 obtains information #1.

The information #1 indicates a time window. For specific content, refer to the description in S410 in the method. Details are not described herein again.

The UE #1 determines, based on the information #1 and the sending time of the first MO in step c in S510, a time window in which the MO/PO is located. The following uses an example in which it is determined that the first MO of the PO is in a time window #0 for description.

S530: A network device #1 sends information #2a, and the UE #1 receives the information #2a.

The information #2a indicates whether paging exists in a PO (or a PO sub-group) actually included in the time window #0.

It should be noted that when the PO is not divided, the PO sub-group may be considered as the PO.

For example, the information #2a may be a PEI, a PI, or other information having the foregoing function. In this embodiment of this application, the following solution is described by using an example in which the information #2a is a PEI.

In a possible implementation, the UE #1 determines the to-be-received information #2a based on the time window #0.

S540: The UE #1 determines a quantity of PO sub-groups (or POs) actually included in the time window #0.

The PO sub-group (or the PO) actually included in the time window #0 is a PO sub-group (or a PO) that appears in a time period corresponding to the time window #0.

It should be noted that when the PO includes only one PO sub-group, the quantity of POs is equal to the quantity of PO sub-groups. Therefore, determining the quantity of POs in the time window by the UE #1 is applicable to this embodiment of this application. The following describes a solution by using an example in which the quantity of PO sub-groups in the time window #0 is determined. For other descriptions about the PO and the PO sub-group, refer to the method 400. Details are not described herein again.

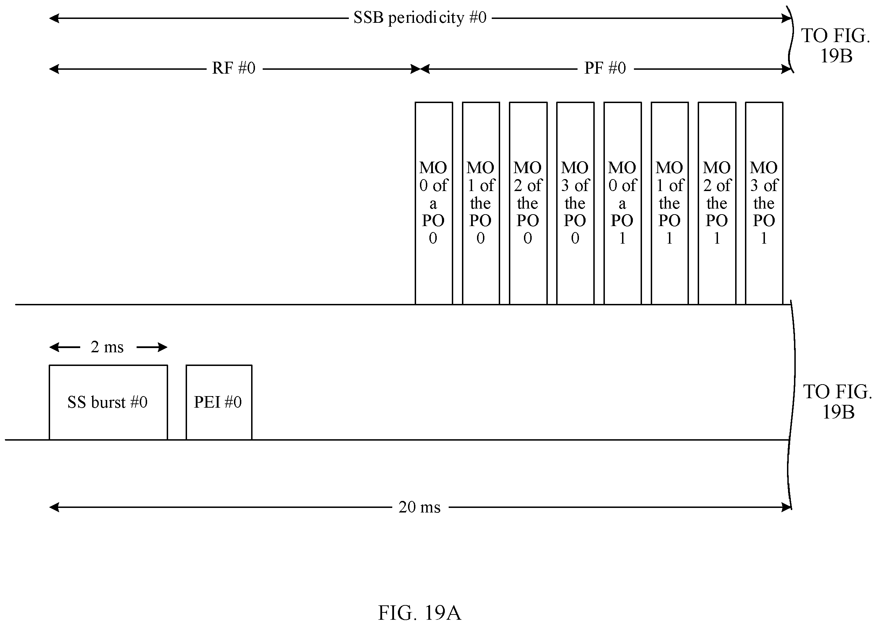

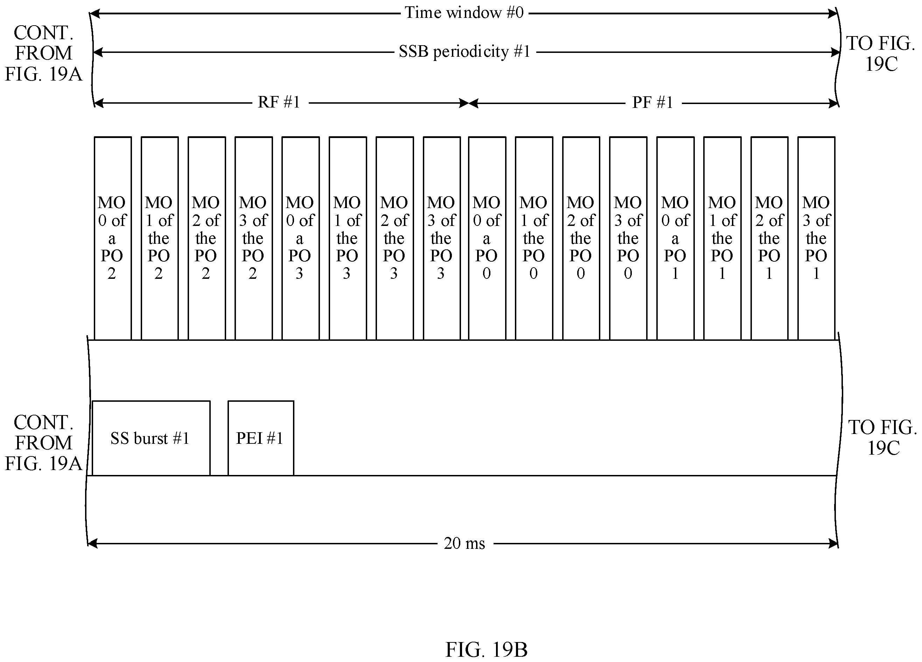

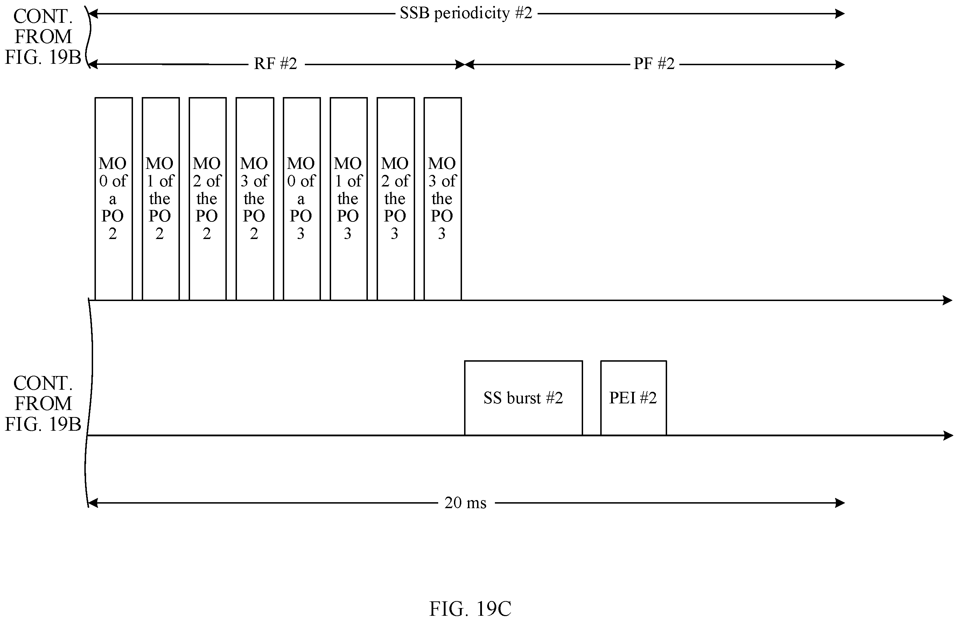

The following uses an example to describe the PO sub-group actually included in the time window #0. FIG. 19A, FIG. 19B, and FIG. 19C are a schematic diagram of another example of configuration of a PEI, a PF, and a PO according to this application.

In FIG. 19A, FIG. 19B, and FIG. 19C, a length of a time window in which a PEI functions is one SSB periodicity, and a start moment of the time window is a start moment of a first SS burst after the PEI. A density of a PF is 1/2, that is, a second frame of every two RFs is the PF, four POs are configured for each PF, and each PO includes four MOs.

For example, a PEI #0 corresponds to a time window #0, a start moment of the time window #0 is aligned with a start moment of an SSB periodicity #1 (a start moment of an SS burst #1), an end moment of the time window #0 is aligned with an end moment of the SSB periodicity #1, the SSB periodicity #1 includes an RF #1 and a PF #1, the SSB periodicity #1 is 20 ms, and time lengths of the RF #1 and the PF #1 each are 10 ms. In addition, a start moment of the RF #1 is aligned with the start moment of the SSB periodicity #1, an end moment of the RF #1 is aligned with a start moment of the PF #1, and an end moment of the PF #1 is aligned with the end moment of the SSB periodicity #1. Therefore, the time window #0 includes the PF #1 and the RF #1. POs appearing in a time period corresponding to the time window #0 are a PO 2 and a PO 3 defined in the PF #0 and a PO 0 and a PO 1 defined in the PF #1. PO sub-groups actually included in the time window are a PO sub-group in the PO 2 defined in the PF #0, a PO sub-group in the PO 3 defined in the PF #0, a PO sub-group in the PO 0 defined in the PF #1, and a PO sub-group in the PO 1 defined in the PF #1.

Therefore, the POs actually included in the time window may be all or a part of POs defined in one PF.

Alternatively, the POs actually included in the time window may be all POs defined in a plurality of PFs.

Alternatively, the POs actually included in the time window may be a part of POs defined in a plurality of PFs. When the POs actually included in the time window include a PO sub-group, the PO sub-group is a PO sub-group actually included in the time window.

It should be noted that different time windows may actually include different quantities of POs, that is, different PEIs may indicate different quantities of POs.

For example, in FIG. 18A, FIG. 18B, and FIG. 18C, a PEI #0 corresponds to a time window #0, a start moment of the time window #0 is aligned with a start moment of an SSB periodicity #1 (a start moment of an SS burst #1), an end moment of the time window #0 is aligned with an end moment of the SSB periodicity #1, the SSB periodicity #1 includes an RF #2 and a PF #1, the SSB periodicity #1 is 20 ms, and time lengths of the RF #2 and the PF #1 each are 10 ms. In addition, a start moment of the RF#2 is aligned with the start moment of the SSB periodicity #1, an end moment of the RF#2 is aligned with a start moment of the PF#1, and an end moment of the PF#1 is aligned with the end moment of the SSB periodicity #1. Therefore, the time window #0 includes the RF#2 and the PF#1. Because the network device #1 uses special configuration (for example, avoiding uplink transmission or avoiding scheduled downlink data scheduling) for the PF #1, a PO 1, a PO 2, and a PO 3 defined in the PF #1 all appear in an SSB periodicity #2 (a time window #1). Therefore, the time window #0 actually includes the PO 0 defined in the PF #1, and the time window #1 actually includes the PO 1, the PO 2, and the PO 3 defined in the PF #1. Therefore, the PEI #0 indicates one PO, and the PEI #1 corresponding to the time window #1 indicates three POs.

In a possible implementation, the UE #1 determines, based on the parameter #A, a quantity of POs actually included in the time window #0, and further determines a quantity of actually included PO sub-groups based on the quantity of actually included POs.

With reference to FIG. 18A, FIG. 18B, and FIG. 18C, the following uses an example to describe how the UE #1 determines, based on the parameter #A, the quantity of POs actually included in the time window #0.

The UE #1 determines, based on the parameter tdd-UL-DL-ConfigurationCommon, a slot configuration manner of the SSB periodicity #1 corresponding to the time window #0, to determine whether an MO configured for a search space set in the PF #1 is occupied by an uplink slot and whether the MO can be used for a PO. Every four MOs that can be used for the PO are grouped into one PO in a time sequence, to determine a quantity of POs. If UEs are grouped in a PO, the UE #1 may determine a quantity of PO sub-groups in the PO based on related configuration.

For example, a quantity of PO sub-groups included in one PO may be agreed on by the UE #1 and the network device #1, or may be indicated by the network device #1, or may be configured in the UE #1.

S550: The UE #1 determines a mapping relationship #1.

For content of the mapping relationship #1, refer to S440. Details are not described herein again.

Specifically, the UE #1 numbers the PO sub-group based on a quantity of PO sub-groups (a quantity of POs), and determines, based on a mapping manner in the rule #1, a bit or a sequence of the PEI #0 that indicates the PO sub-group corresponding to the UE #1. The used mapping manner may be agreed on by the UE #1 and the network device #1, or may be indicated by the network device #1. This is not limited in this application.

For a manner of numbering the PO or the PO sub-group, refer to the method 400. Details are not described herein again.

S560: The UE #1 determines whether paging exists in a corresponding PO sub-group.

For specific content, refer to S450. Details are not described herein again.

According to the method 500, when the PEI indicates a plurality of POs (PO sub-groups), it is specified that the PEI indicates a PO (or a PO sub-group) actually included in a time window corresponding to the PEI, so that the UE can determine, based on one of the foregoing mapping manners, a manner of mapping between the PEI and the PO (or the PO sub-group) corresponding to the PEI, to accurately determine whether a to-be-detected PO (or PO sub-group) carries paging data. In addition, time offsets between different POs and PEIs are even, to avoid a problem that different UEs can obtain uneven power consumption gains due to a large time interval between the PEI and the PO, and reduce a network paging delay.

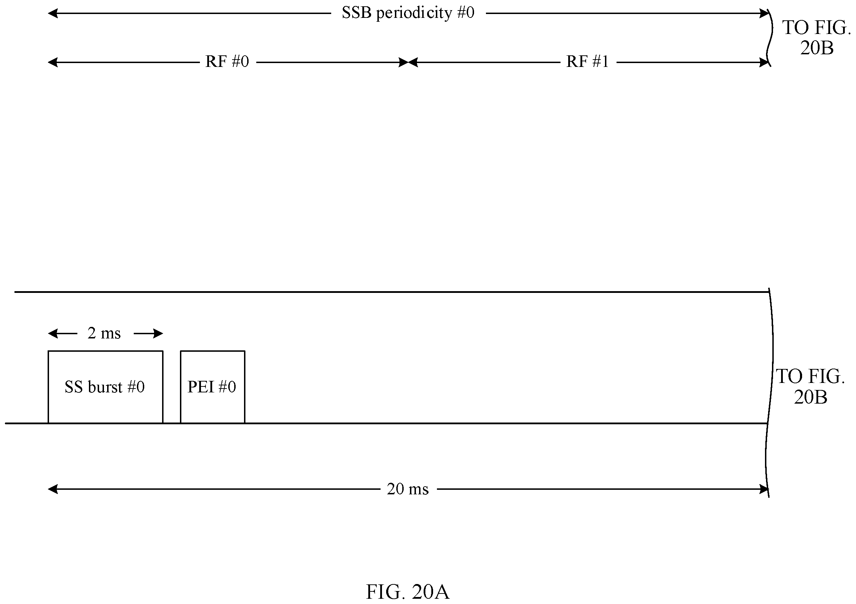

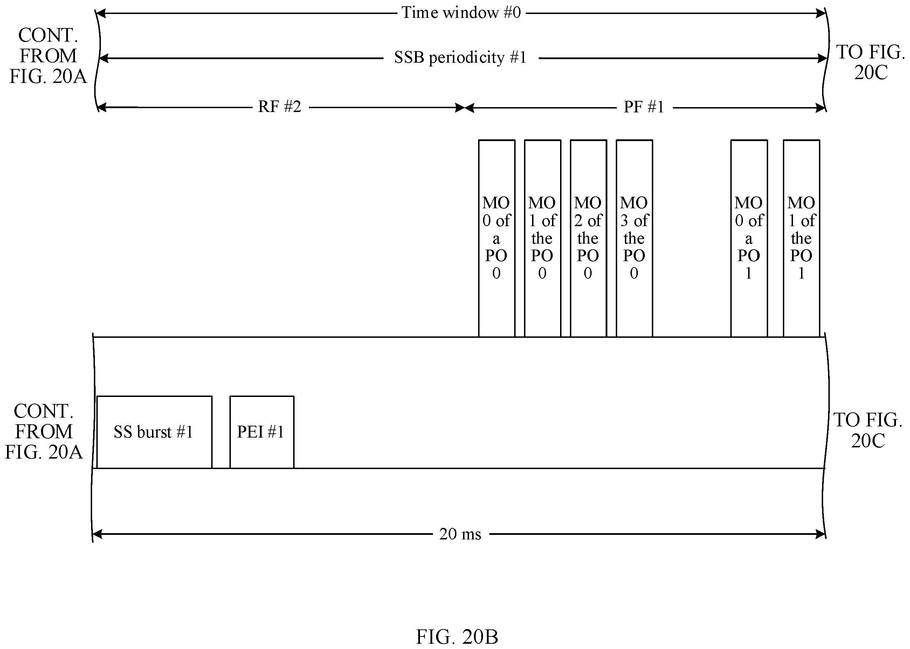

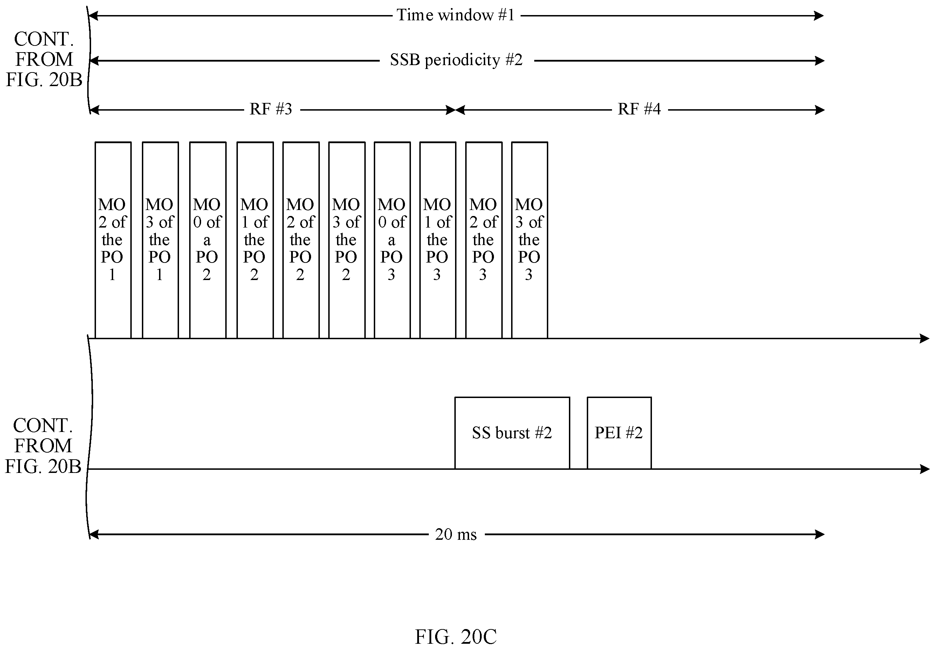

Based on the scenario corresponding to the method 500, there is another case in which a same PO does not appear in a same time window. For example, FIG. 20A, FIG. 20B, and FIG. 20C are a schematic diagram of still another example of configuration of a PEI, a PF, and a PO according to this application.

In FIG. 20A, FIG. 20B, and FIG. 20C, a length of a time window in which a PEI functions is one SSB periodicity, and a start moment of the time window is a start moment of a first SS burst after the PEI. A density of a PF is 1/4, that is, a fourth frame of every four RFs is the PF, four POs are configured for each PF, and each PO includes four MOs.

For example, a PEI #0 corresponds to a time window #0, a start moment of a time window #0 is aligned with a start moment of an SSB periodicity #1 (a start moment of an SS burst #1), an end moment of the time window #0 is aligned with an end moment of the SSB periodicity #1, the SSB periodicity #1 includes an RF #2 and a PF #1, the SSB periodicity #1 is 20 ms, and time lengths of the RF #2 and the PF #1 each are 10 ms. In addition, a start moment of the RF #2 is aligned with the start moment of the SSB periodicity #1, an end moment of the RF #2 is aligned with a start moment of the PF #1, and an end moment of the PF #1 is aligned with the end moment of the SSB periodicity #1. Therefore, the time window #0 includes the RF #2 and the PF #1. Because the network device #1 uses special configuration (for example, avoiding uplink transmission or avoiding scheduled downlink data scheduling) for the PF #1, some POs 1 (an MO 2 of a PO 1 and an MO 3 of the PO 1), a PO 2, and a PO 3 defined in the PF #1 all appear in an SSB periodicity #2 (a time window #1). Therefore, the time window #0 actually includes the PO 0 defined in the PF #1 and some POs 1 (an MO 0 of the PO1 and an MO 1 of the PO 1) defined in the PF #1, and the time window #1 actually includes some POs 1 (an MO 2 of the PO1 and an MO 3 of the PO 1), a PO 2, and a PO 3 defined in the PF #1.

For this scenario, this application further provides a method 600 for indicating a plurality of POs or a plurality of PO sub-groups by a PEI. For a schematic flowchart of the method 600, refer to FIG. 17.

S610: UE #1 determines a time window in which a PO that needs to be received is located.

For specific content, refer to S510 in the method. Details are not described herein again.

S620: The UE #1 obtains information #1.

The information #1 indicates a time window #0. For specific content, refer to the description in S410 in the method. Details are not described herein again.

S630: A network device #1 sends information #2a, and the UE #1 receives the information #2a.

For specific content, refer to S530 in the method. Details are not described herein again.

In this embodiment of this application, the following solution is described by using an example in which the information #2a is a PEI.

S640: The UE #1 determines a quantity of PO sub-groups actually included in the time window #0.

The PO sub-groups actually included in the time window may be explained in the following two manners:

Manner 1

First, the PO actually included in the time window is a PO that appears in a time period corresponding to the time window.

In this case, different time windows may include different MOs of a same PO.

For example, in FIG. 20A, FIG. 20B, and FIG. 20C, a time window #0 includes a PO 0 and an MO 0 and an MO 1 of a PO 1, and a time window #1 includes an MO 2 and an MO 3 of the PO 1, a PO 2, and a PO 3. Therefore, the time window #0 includes two POs (the PO 0 and the PO 1), and the time window #1 includes three POs (the PO 1, the PO 2, and the PO 3).

In this manner, the PO sub-group actually included in the time window is a PO sub-group that appears in a time period corresponding to the time window.

Manner 2

First, the PO actually included in the time window is a PO that appears in a time period corresponding to the time window, and an MO that first appears in the PO also appears in the time window.

For example, in FIG. 20A, FIG. 20B, and FIG. 20C, a time window #0 includes a PO 0 and a PO 1 (because an MO 0 of the PO 1 appears in the time window #0, the time window #0 includes the PO 1), and a time window #1 includes a PO 2 and a PO 3 (although an MO 2 and an MO 3 of the PO 1 also appear in the time window #1, the MO 2 is not an MO that first appears in the PO 1, and therefore the time window #1 does not include the PO 1). Therefore, the time window #0 includes two POs, and the time window #1 includes two POs.

In this manner, the PO sub-group actually included in the time window is a PO sub-group that appears in a time period corresponding to the time window, and an MO that first appears in the PO sub-group also appears in the time window.

The UE #1 determines, based on either of the foregoing two definition manners, the PO actually included in the time window #0, to determine a quantity of POs actually included in the time window #0, and further, determines a quantity of PO sub-groups actually included in the time window #0. For related content of determining the quantity of POs or the quantity of PO sub-groups, refer to S540 in the method. Details are not described herein again.

S650: The UE #1 determines a mapping relationship #1.

For specific content, refer to S550 in the method. Details are not described herein again.

S660: The UE #1 determines whether paging exists in a PO sub-group corresponding to the UE #1.

For specific content, refer to S560. Details are not described herein again.

It should be noted that when the "PO actually included in the time window" is defined in Manner 1 in S640, a same PO (PO sub-group) can be indicated by a plurality of PEIs, that is, one PO may be associated with a plurality of PEIs. For example, in FIG. 20A, FIG. 20B, and FIG. 20C, for a PO 2 (a PO 2 sub-group), whether paging exists may be indicated by a PEI #0, and whether paging exists may also be indicated by a PEI #1. In this case, the UE #1 may determine, based on the PEI #0 and the mapping relationship #1, whether paging exists in the PO sub-group corresponding to the UE #1, and may also determine, based on the PEI #1 and the mapping relationship #1, whether paging exists in the PO sub-group corresponding to the UE #1.

When the "PO actually included in the time window" is defined in Manner 2 in S620, one PO is indicated by only one PEI. For example, in FIG. 20A, FIG. 20B, and FIG. 20C, although a PO 2 appears in a time window #0 and a time window #1, only a PEI #0 indicates whether paging exists, and a PEI #1 does not indicate whether paging exists. In this case, the UE #1 determines, based on only the PEI #0 and the mapping relationship #1, whether paging exists in the PO sub-group corresponding to the UE #1.

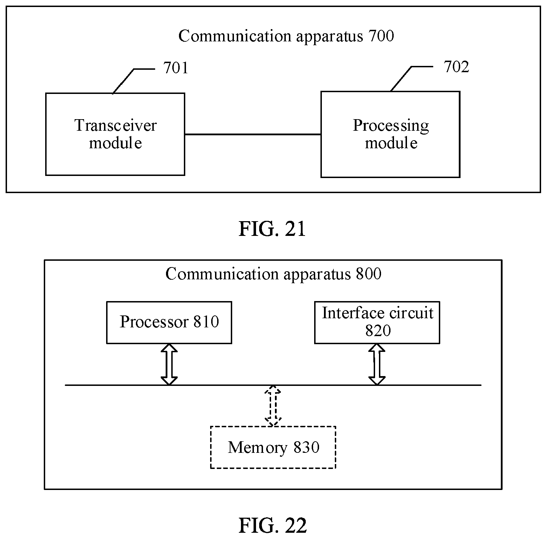

The foregoing describes, in detail with reference to FIG. 1 to FIG. 20A, FIG. 20B, and FIG. 20C, the technical solutions provided in the communication methods in embodiments of this application. The following describes, with reference to FIG. 21 and FIG. 22, communication apparatuses provided in embodiments of this application.

FIG. 21 and FIG. 22 each are a schematic diagram of a structure of a possible communication apparatus according to an embodiment of this application. The communication apparatus may implement the functions of the terminal device or the network device in the foregoing method embodiments. Therefore, beneficial effects of the foregoing method embodiments can also be implemented. In this embodiment of this application, the communication apparatus may be the first communication apparatus (the first terminal device) in the method 200 or the method 300, or may be a module (for example, a chip) applied to the first communication apparatus.

As shown in FIG. 21, the communication apparatus 700 includes a transceiver module 701 and a processing module 702. The communication apparatus 700 may be configured to implement the functions of the first communication apparatus in the method embodiment shown in FIG. 9 or the functions of the first communication apparatus in the method embodiment shown in FIG. 10.

When the communication apparatus 700 is configured to implement the functions of the first communication apparatus in the method embodiment in FIG. 9, the transceiver module 701 is configured to receive first information, where the first information indicates whether a paging occasion PO sub-group configured for a first paging frame PF carries paging data, the first PF is located in a first time window, the first UE corresponds to a first PO sub-group, and the first PO sub-group belongs to one of PO sub-groups configured for the first PF; and the processing module 702 is configured to determine, based on the first PO sub-group and a first association relationship, that the first information indicates whether the first PO sub-group carries paging data, where the first association relationship indicates a correspondence between the first information and the PO sub-group configured for the first PF.

When the communication apparatus 700 is configured to implement the functions of the first communication apparatus in the method embodiment in FIG. 10, the transceiver module 701 is configured to receive first information, where the first information indicates whether a paging occasion PO sub-group included in a first time window carries paging data, the first UE corresponds to a first PO sub-group, and the first PO sub-group belongs to one of PO sub-groups included in the first time window; and the processing module 702 is configured to determine a first association relationship based on a quantity of PO sub-groups included in the first time window, where the first association relationship indicates a correspondence between the first information and the PO sub-group included in the first time window, and the processing module 702 is further configured to determine, based on the first PO sub-group and the first association relationship, that the first information indicates whether the first PO sub-group carries paging data.

For more detailed descriptions of the transceiver module 701 and the processing module 702, refer to related descriptions in the foregoing method embodiments. Details are not described herein again.

As shown in FIG. 22, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions to be executed by the processor 810, store input data required for running the instructions by the processor 810, or store data generated after the processor 810 runs the instructions.

For example, the memory 830 and the processor 810 may be integrated together, or may be independent components.

When the communication apparatus 800 is configured to implement the method in the foregoing method embodiment, the processor 810 is configured to perform functions of the processing module 702, and the interface circuit 820 is configured to perform functions of the transceiver module 701.

When the communication apparatus is a chip applied to a first communication apparatus, the chip of the first communication apparatus implements functions of the first communication apparatus in the foregoing method embodiment. The chip of the first communication apparatus receives information from another module (for example, a radio frequency module or an antenna) in the first communication apparatus; or the chip of the first communication apparatus sends information to another module (for example, a radio frequency module or an antenna) in the first communication apparatus.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any conventional processor, or the like.

It should be noted that embodiments in this specification are all described in a progressive manner, for same or similar parts in embodiments, reference may be made to these embodiments, and each embodiment focuses on a difference from other embodiments. Especially, system or system embodiments are basically similar to method embodiments, and therefore are described briefly. For related parts, refer to partial descriptions in the method embodiments. The described system and system embodiments are merely examples. The units described as separate parts may or may not be physically separate, and parts displayed as units may or may not be physical units, and may be located in one position, or may be distributed on a plurality of network units. Some or all of the modules may be selected based on actual requirements to achieve the objectives of the solutions of embodiments. A person of ordinary skill in the art may understand and implement embodiments of the present invention without creative efforts.

It should be further noted that in this specification, relational terms such as "first", "second", "#1", and "#2" are merely used to distinguish one entity or operation from another entity or operation, and do not necessarily require or imply that any actual relationship or sequence exists between these entities or operations. In addition, the terms "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the presence of additional identical elements in the process, method, article, or device that includes the element.

The method steps in embodiments of this application may be implemented by using hardware, or may be implemented by executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When the software is used to implement embodiments, all or some of the embodiments may be implemented in a form of a computer program product. The computer program product includes one or more computer programs and instructions. When the computer programs or instructions are loaded and executed on a computer, the procedures or functions in embodiments of this application are completely or partially executed. The computer may be a general-purpose computer, a dedicated computer, a computer network, or other programmable apparatuses. The computer programs or the instructions may be stored in a computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk, or a magnetic tape; or may be an optical medium, for example, a DVD; or may be a semiconductor medium, for example, a solid-state drive (solid-state drive, SSD).

In this application, "at least one" means one or more, and "a plurality of" means two or more. A term "and/or" describes an association relationship between associated objects and represents that three relationships may exist. For example, A and/or B may represent the following cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes. It should be noted that not all steps in embodiments of this application need to be performed, some steps may be omitted, and a similar effect can also be achieved.

**Claims**

1. A paging method, comprising:

   receiving, by a first terminal device UE, first information, wherein the first information indicates whether a paging occasion PO sub-group configured for a first paging frame PF carries paging data, the first PF is located in a first time window, the first UE corresponds to a first PO sub-group, and the first PO sub-group belongs to one of PO sub-groups configured for the first PF; and
   determining, by the first UE based on the first PO sub-group and a first association relationship, that the first information indicates whether the first PO sub-group carries paging data, wherein the first association relationship indicates a correspondence between the first information and the PO sub-group configured for the first PF.

2. The method according to claim 1, wherein a part of the PO sub-groups configured for the first PF are comprised in a second time window, and the second time window is different from the first time window.

3. The method according to claim 1 or 2, wherein a type of the first information is downlink control information DCI, and that the first association relationship indicates a correspondence between the first information and the PO sub-group configured for the first PF comprises:
   the first association relationship indicates a correspondence between a bit index of the first information and a number of the PO sub-group configured for the first PF.

4. The method according to claim 3, wherein a quantity of bits of the first information is greater than or equal to a quantity of PO sub-groups configured for the first PF, and the bits of the first information are in a one-to-one correspondence with the PO sub-groups configured for the first PF; or
   a quantity of bits of the first information is less than a quantity of PO sub-groups configured for the first PF, and each of at least one bit of the first information corresponds to a plurality of PO sub-groups in the PO sub-groups configured for the first PF.

5. The method according to claim 1 or 2, wherein a type of the first information is a secondary synchronization signal SSS, a tracking reference signal TRS, or a channel state information reference signal CSI-RS, and that the first association relationship indicates a correspondence between the first information and the PO sub-group configured for the first PF comprises:

the first association relationship indicates a correspondence between a sequence index of the first information and a number of the PO sub-group configured for the first PF.

6. The method according to claim 5, wherein a quantity of sequences configured for the first information is greater than or equal to a quantity of PO sub-groups configured for the first PF, and the sequences configured for the first information are in a one-to-one correspondence with the PO sub-groups configured for the first PF; or
a quantity of sequences configured for the first information is less than a quantity of PO sub-groups configured for the first PF, and each of at least one sequence of the first information corresponds to a plurality of PO sub-groups in the PO sub-groups configured for the first PF.

7. The method according to claim 1 or 2, wherein a type of the first information is a secondary synchronization signal SSS, a tracking reference signal TRS, or a channel state information reference signal CSI-RS, and that the first association relationship indicates a correspondence between the first information and the PO sub-group configured for the first PF comprises:
the first association relationship indicates a correspondence between a location of a resource configured for the first information and a number of the PO sub-group configured for the first PF.

8. The method according to claim 7, wherein a quantity of locations of resources configured for the first information is greater than or equal to a quantity of PO sub-groups configured for the first PF, and the locations of the resources configured for the first information are in a one-to-one correspondence with the PO sub-groups configured for the first PF; or
a quantity of locations of resources configured for the first information is less than a quantity of PO sub-groups configured for the first PF, and each of at least one location of at least one resource configured for the first information corresponds to a plurality of PO sub-groups in the PO sub-groups configured for the first PF.

9. The method according to claim 1 or 2, wherein a type of the first information is a secondary synchronization signal SSS, a tracking reference signal TRS, or a channel state information reference signal CSI-RS, and that the first association relationship indicates a correspondence between the first information and the PO sub-group configured for the first PF comprises:
the first association relationship indicates a correspondence between a number of the PO sub-group configured for the first PF and a combination of a sequence index of the first information and a location of a resource configured for the first information.

10. The method according to claim 9, wherein a product of a quantity of sequences configured for the first information and a quantity of locations of resources configured for the first information is greater than or equal to a quantity of PO sub-groups configured for the first PF, and the sequences of the first information are in a one-to-one correspondence with the PO sub-groups configured for the first PF; or
a product of a quantity of sequences configured for the first information and a quantity of locations of resources configured for the first information is less than a quantity of PO sub-groups configured for the first PF, and each of at least one sequence of the first information corresponds to a plurality of PO sub-groups in the PO sub-groups configured for the first PF.

11. A paging method, comprising:

determining, by a first network device, first information based on a first association relationship, wherein the first association relationship indicates a correspondence between the first information and a paging occasion PO sub-group configured for a first paging frame PF, the first PF is located in a first time window, and the first information indicates whether the PO sub-group configured for the first PF carries paging data; and
sending, by the first network device, the first information.

12. The method according to claim 11, wherein a part of PO sub-groups configured for the first PF are comprised in a second time window, and the second time window is different from the first time window.

13. The method according to claim 11 or 12, wherein a type of the first information is downlink control information DCI, and that the first association relationship indicates a correspondence between the first information and a PO sub-group configured for a first PF comprises:
the first association relationship indicates a correspondence between a bit index of the first information and a number of the PO sub-group configured for the first PF.

14. The method according to claim 13, wherein a quantity of bits of the first information is greater than or equal to a quantity of PO sub-groups configured for the first PF, and the bits of the first information are in a one-to-one correspondence with the PO sub-groups configured for the first PF; or
a quantity of bits of the first information is less than a quantity of PO sub-groups configured for the first PF, and each of at least one bit of the first information corresponds to a plurality of PO sub-groups in the PO sub-groups configured for the first PF.

15. The method according to claim 11 or 12, wherein a type of the first information is a secondary synchronization signal SSS, a tracking reference signal TRS, or a channel state information reference signal CSI-RS, and that the first association relationship indicates a correspondence between the first information and a paging occasion PO sub-group configured for a first paging frame PF comprises:
the first association relationship indicates a correspondence between a sequence index of the first information and a number of the PO sub-group configured for the first PF.

16. The method according to claim 15, wherein a quantity of sequences configured for the first information is greater than or equal to a quantity of PO sub-groups configured for the first PF, and the sequences of the first information are in a one-to-one correspondence with the PO sub-groups configured for the first PF; or
a quantity of sequences configured for the first information is less than a quantity of PO sub-groups configured for the first PF, and each of at least one sequence of the first information corresponds to a plurality of PO sub-groups in the PO sub-groups configured for the first PF.

17. The method according to claim 11 or 12, wherein a type of the first information is a secondary synchronization signal SSS, a tracking reference signal TRS, or a channel state information reference signal CSI-RS, and that the first association relationship indicates a correspondence between the first information and a paging occasion PO sub-group configured for a first paging frame PF comprises:
the first association relationship indicates a correspondence between a location of a resource configured for the first information and a number of the PO sub-group configured for the first PF.

18. The method according to claim 17, wherein a quantity of locations of resources configured for the first information is greater than or equal to a quantity of PO sub-groups configured for the first PF, and the locations of the resources configured for the first information are in a one-to-one correspondence with the PO sub-groups configured for the first PF; or
a quantity of locations of resources configured for the first information is less than a quantity of PO sub-groups configured for the first PF, and each of at least one location of at least one resource configured for the first information corresponds to a plurality of PO sub-groups in the PO sub-groups configured for the first PF.

19. The method according to claim 11 or 12, wherein a type of the first information is a secondary synchronization signal SSS, a tracking reference signal TRS, or a channel state information reference signal CSI-RS, and that the first association relationship indicates a correspondence between the first information and a paging occasion PO sub-group configured for a first paging frame PF comprises:
the first association relationship indicates a correspondence between a number of the PO sub-group configured for the first PF and a combination of a sequence index of the first information and a location of a resource configured for the first information.

20. The method according to claim 19, wherein a product of a quantity of sequences configured for the first information and a quantity of locations of resources configured for the first information is greater than or equal to a quantity of PO sub-groups configured for the first PF, and the sequences of the first information are in a one-to-one correspondence with the PO sub-groups configured for the first PF; or
a product of a quantity of sequences configured for the first information and a quantity of locations of resources configured for the first information is less than a quantity of PO sub-groups configured for the first PF, and each of at least one sequence of the first information corresponds to a plurality of PO sub-groups in the PO sub-groups configured for the first PF.

21. A paging method, comprising:

receiving, by a first terminal device UE, first information, wherein the first information indicates whether a paging occasion PO sub-group comprised in a first time window carries paging data, the first UE corresponds to a first PO sub-group, and the first PO sub-group belongs to one of PO sub-groups comprised in the first time window;

determining, by the first UE, a first association relationship based on a quantity of PO sub-groups comprised in the first time window, wherein the first association relationship indicates a correspondence between the first information and the PO sub-group comprised in the first time window; and

determining, by the first UE based on the first PO sub-group and the first association relationship, that the first information indicates whether the first PO sub-group carries paging data.

22. The method according to claim 21, wherein a first monitoring occasion MO corresponding to each of the PO sub-groups comprised in the first time window is comprised in the first time window.

23. A paging method, comprising:

determining, by a first network device, a first association relationship based on a quantity of paging occasion PO sub-groups comprised in a first time window, wherein the first association relationship indicates a correspondence between first information and the PO sub-group comprised in the first time window;

determining, by the first network device, the first information based on the first association relationship, wherein the first information indicates whether the PO sub-group comprised in the first time window carries paging data; and

sending, by the first network device, the first information.

24. The method according to claim 23, wherein a first monitoring occasion MO corresponding to each of the PO sub-groups comprised in the first time window is comprised in the first time window.

25. A communication apparatus for paging, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 10 or the method according to claim 21 or 22 by using a logic circuit or executing code instructions.

26. A communication apparatus for paging, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to implement the method according to any one of claims 11 to 20 or the method according to claim 23 or 24 by using a logic circuit or executing code instructions.

27. A computer-readable storage medium, wherein the computer-readable storage medium stores a computer program, and when the computer program is run, a communication apparatus is enabled to perform the method according to any one of claims 1 to 10, or perform the method according to claim 21 or 22.

28. A computer-readable storage medium, wherein the computer-readable storage medium stores a computer program, and when the computer program is run, a communication apparatus is enabled to perform the method according to any one of claims 11 to 20, or perform the method according to claim 23 or 24.

29. A computer program product, wherein the computer program product comprises a computer program, and when the computer program is run by a computer, the computer is enabled to perform the method according to any one of claims 1 to 10 or the method according to 21 or 22, or perform the method according to any one of claims 11 to 20 or the method according to 23 or 24.

30. A chip system, comprising a processor, configured to: invoke a computer program from a memory and run the computer program,

to enable a communication apparatus on which the chip system is installed to perform the method according to any one of claims 1 to 10 or the method according to claim 21 or 22; or

to enable a communication apparatus on which the chip system is installed to perform the method according to any one of claims 11 to 20 or the method according to claim 23 or 24.

FIG. 1

FIG. 2

FIG. 3

EP 4 380 265 A1

FIG. 4

FIG. 5

EP 4 380 265 A1

PF 0 ◄─────────────────────► RF 0 ─────────────────────► TO FIG. 6B

| MO 0 of a PO 0 | MO 1 of the PO 0 | MO 2 of the PO 0 | MO 3 of the PO 0 | MO 4 of the PO 0 | MO 5 of the PO 0 | MO 6 of the PO 0 | MO 7 of the PO 0 | MO 0 of a PO 1 | MO 1 of the PO 1 | MO 2 of the PO 1 | MO 3 of the PO 1 | MO 4 of the PO 1 | MO 5 of the PO 1 | MO 6 of the PO 1 | MO 7 of the PO 1 |

TO FIG. 6B

FIG. 6A

CONT.
FROM
FIG. 6A

|←————————————— RF 1 —————————————→|←————————————— RF 2 —————————————→|

| MO 0 of a PO 2 | MO 1 of the PO 2 | MO 2 of the PO 2 | MO 3 of the PO 2 | MO 4 of the PO 2 | MO 5 of the PO 2 | MO 6 of the PO 2 | MO 7 of the PO 2 | MO 0 of a PO 3 | MO 1 of the PO 3 | MO 2 of the PO 3 | MO 3 of the PO 3 | MO 4 of the PO 3 | MO 5 of the PO 3 | MO 6 of the PO 3 | MO 7 of the PO 3 |

CONT.
FROM
FIG. 6A

FIG. 6B

| Time window #1 | Time window #2 | Time window #3 |

| SS burst #1 | PEI #1 | | SS burst #2 | PEI #2 | | SS burst #3 | PEI #3 |

|← 2 ms →|

|←——— 20 ms ———→|←——— 20 ms ———→|←——— 20 ms ———→|

| RF #1 | RF #2 | RF #3 | RF #4 | RF #5 | RF #6 |

**FIG. 7**

| Time window #1 | Time window #2 | Time window #3 |

| SS burst #1 | PEI #1 | | SS burst #2 | PEI #2 | | SS burst #3 | PEI #3 |

|← 2 ms →|

|←——— 20 ms ———→|←——— 20 ms ———→|←——— 20 ms ———→|

| RF #1 | RF #2 | RF #3 | RF #4 | RF #5 | RF #6 |

**FIG. 8**

200

| First terminal device |   | First network device |

S210: Send first information, where the first information indicates whether a PO sub-group configured for a first PF carries paging data

S220: Determine that the first information indicates whether a first PO sub-group carries paging data, where the first PO sub-group corresponds to the first terminal device

**FIG. 9**

300

```
┌──────────────┐                                    ┌──────────────┐
│ First terminal│                                    │ First network│
│    device     │                                    │    device    │
└──────────────┘                                    └──────────────┘
```

S310: Send first information, where the first information indicates whether a PO sub-group included in a first time window carries paging data

S320: Determine a first association relationship, where the first association relationship indicates a correspondence between the first information and the PO sub-group included in the first time window

S330: Determine that the first information indicates whether a first PO sub-group carries paging data, where the first PO sub-group corresponds to the first terminal device

## FIG. 10

400

```
┌──────────┐                                         ┌──────────┐
│  UE #1   │                                         │ Network  │
│          │                                         │ device #1│
└──────────┘                                         └──────────┘
```

S410: Obtain information #1, where the information #1 indicates a time window #0

S420: Determine a PF in the time window #0

S430: Send information #2, where the information #2 indicates whether paging exists in POs or PO sub-groups defined in all PFs in the time window #0

S440: Determine a mapping relationship #1

S450: Send information #3, where the information #3 indicates an association relationship #1

S460: Determine whether paging exists in a PO sub-group corresponding to the UE #1

## FIG. 11

EP 4 380 265 A1

FIG. 12A

EP 4 380 265 A1

CONT.
FROM
FIG. 12A

TO FIG.
12C

Time window #0

SSB periodicity #1

RF #2 — PF #1

| MO 0 of a PO 0 | MO 1 of the PO 0 | MO 2 of the PO 0 | MO 3 of the PO 0 | MO 0 of a PO 1 | MO 1 of the PO 1 | MO 2 of the PO 1 | MO 3 of the PO 1 |

CONT.
FROM
FIG. 12A

| SS burst #1 | PEI #1 |

TO FIG.
12C

20 ms

FIG. 12B

←————————————————————— SSB periodicity #2 ——————————————————————→

←——————————————— RF #3 ———————————————→←——————————————— RF #4 ———————————————→

| MO 0 of a PO 2 | MO 1 of the PO 2 | MO 2 of the PO 2 | MO 3 of the PO 2 | MO 0 of a PO 3 | MO 1 of the PO 3 | MO 2 of the PO 3 | MO 3 of the PO 3 |

| SS burst #2 | PEI #2 |

←——————————————————————— 20 ms ———————————————————————→

FIG. 12C

Time window #0

SSB periodicity #0 — TO FIG. 13B

RF #0 — PF #0

| MO 0 of a PO 0 | MO 1 of the PO 0 | MO 2 of the PO 0 | MO 3 of the PO 0 | MO 4 of the PO 0 | MO 5 of the PO 0 | MO 6 of the PO 0 | MO 7 of the PO 0 |

2 ms

| SS burst #0 | PEI #0 |

TO FIG. 13B

20 ms

FIG. 13A

SSB periodicity #1

RF #1 ──────────── RF #2

| MO 0 of a PO 1 | MO 1 of the PO 1 | MO 2 of the PO 1 | MO 3 of the PO 1 | MO 4 of the PO 1 | MO 5 of the PO 1 | MO 6 of the PO 1 | MO 7 of the PO 1 | MO 0 of a PO 2 | MO 1 of the PO 2 | MO 2 of the PO 2 | MO 3 of the PO 2 | MO 4 of the PO 2 | MO 5 of the PO 2 | MO 6 of the PO 2 | MO 7 of the PO 2 |

SS burst #1      PEI #1

20 ms

FIG. 13B

CONT.
FROM
FIG. 13B

SSB periodicity #2

RF #3

RF #4

| MO 0 of a PO 3 | MO 1 of the PO 3 | MO 2 of the PO 3 | MO 3 of the PO 3 | MO 4 of the PO 3 | MO 5 of the PO 3 | MO 6 of the PO 3 | MO 7 of the PO 3 |

CONT.
FROM
FIG. 13B

SS burst #2

PEI #2

20 ms

FIG. 13C

| PF index | 0 | | | 1 | |
| PO index | 0 | 1 | 0 | 1 | |
| PO sub-group index | 0 | 1 0 | 1 0 | 1 0 | 1 |
| PO sub-group number | 0 | 1 2 | 3 4 | 5 6 | 7 |
| PEI bit index | 3 | 2 1 | 0 7 | 6 5 | 4 |

FIG. 14

Frequency
domain

| Resource #2 | Resource #4 | Resource #6 |
| Resource #1 | Resource #3 | Resource #5 |

Time
domain

FIG. 15

Frequency
domain

| Resource #2 (sequence #1, sequence #2) | Resource #4 (sequence #1, sequence #2) | Resource #6 (sequence #1, sequence #2) |
|---|---|---|
| Resource #1 (sequence #1, sequence #2) | Resource #3 (sequence #1, sequence #2) | Resource #5 (sequence #1, sequence #2) |

Time
domain

FIG. 16

500

| UE #1 | | Network device #1 |
|---|---|---|

S510: Determine a time window in which a PO that needs to be received is located

S520: Obtain information #1

S530: Send information #2a, where the information #2a indicates whether paging exists in a PO sub-group actually included in a time window #0

S540: Determine a quantity of PO sub-groups (or POs) actually included in the time window #0

S550: Determine a mapping relationship #1

S560: Determine whether paging exists in a PO sub-group corresponding to the UE#1

FIG. 17

EP 4 380 265 A1

FIG. 18A

CONT.
FROM
FIG. 18A

Time window #0

SSB periodicity #1

RF #2

PF #1

TO FIG.
18C

MO 0 of a PO 0

MO 1 of the PO 0

MO 2 of the PO 0

MO 3 of the PO 0

CONT.
FROM
FIG. 18A

SS burst #1

PEI #1

TO FIG.
18C

20 ms

FIG. 18B

CONT.
FROM
FIG. 18B

Time window #1

SSB periodicity #2

RF #3 ── RF #4

| MO 0 of a PO 1 | MO 1 of the PO 1 | MO 2 of the PO 1 | MO 3 of the PO 1 | MO 0 of a PO 2 | MO 1 of the PO 2 | MO 2 of the PO 2 | MO 3 of the PO 2 | MO 0 of a PO 3 | MO 1 of the PO 3 | MO 2 of the PO 3 | MO 3 of the PO 3 |

CONT.
FROM
FIG. 18B

SS burst #2    PEI #2

20 ms

FIG. 18C

FIG. 19A

Time window #0

SSB periodicity #1

RF #1

PF #1

| MO 0 of a PO 2 | MO 1 of the PO 2 | MO 2 of the PO 2 | MO 3 of the PO 2 | MO 0 of a PO 3 | MO 1 of the PO 3 | MO 2 of the PO 3 | MO 3 of the PO 3 | MO 0 of a PO 0 | MO 1 of the PO 0 | MO 2 of the PO 0 | MO 3 of the PO 0 | MO 0 of a PO 1 | MO 1 of the PO 1 | MO 2 of the PO 1 | MO 3 of the PO 1 |

| SS burst #1 | PEI #1 |

20 ms

FIG. 19B

FIG. 19C

FIG. 20A

Time window #0

CONT.
FROM
FIG. 20A

SSB periodicity #1

TO FIG.
20C

RF #2

PF #1

| MO 0 of a PO 0 | MO 1 of the PO 0 | MO 2 of the PO 0 | MO 3 of the PO 0 | MO 0 of a PO 1 | MO 1 of the PO 1 |

CONT.
FROM
FIG. 20A

SS burst #1

PEI #1

TO FIG.
20C

20 ms

FIG. 20B

EP 4 380 265 A1

FIG. 20C

Communication apparatus 700

701

702

Transceiver module

Processing module

FIG. 21

Communication apparatus 800

Processor 810

Interface circuit 820

Memory 830

FIG. 22

## INTERNATIONAL SEARCH REPORT

| | International application No. |
|---|---|
| | **PCT/CN2022/106353** |

**A. CLASSIFICATION OF SUBJECT MATTER**

H04W 68/02(2009.01)i

According to International Patent Classification (IPC) or to both national classification and IPC

**B. FIELDS SEARCHED**

Minimum documentation searched (classification system followed by classification symbols)

H04W68/-

Documentation searched other than minimum documentation to the extent that such documents are included in the fields searched

Electronic data base consulted during the international search (name of data base and, where practicable, search terms used)

CNABS; CNTXT; VEN; DWPI; EPTXT; USTXT; WOTXT; 3GPP; CNKI; IEEE: 寻呼, 时机, 机会, 子组, 分组, 关联, 关系, 对应, 指示, 唤醒, 窗, 时间, 间隔, 是否, 多个, 数目, 个数, 编号, 索引, 序号, 比特, 帧, 用户设备, 终端, 假, 错误, UE, paging, occasion, PO, PF, sub+, group, relation+, inciden+, indication, PI, PEI, WUS, time, interval, window, frame, false, index, number

**C. DOCUMENTS CONSIDERED TO BE RELEVANT**

| Category* | Citation of document, with indication, where appropriate, of the relevant passages | Relevant to claim No. |
|---|---|---|
| X | CN 109474998 A (HUAWEI TECHNOLOGIES CO., LTD.) 15 March 2019 (2019-03-15) description, paragraphs 0293-0308, 0351-0356, and 0419-0437 | 1-30 |
| X | CN 111200870 A (SPREADTRUM COMMUNICATIONS SHANGHAI INC.) 26 May 2020 (2020-05-26) description, paragraphs 0146-0148 and 0168-0188 | 1-30 |
| X | CN 110139361 A (HUAWEI TECHNOLOGIES CO., LTD.) 16 August 2019 (2019-08-16) description, paragraphs 0067-0070 and 0141-0146 | 1-30 |
| A | CN 113170413 A (ALCATEL-LUCENT SHANGHAI BELL CO., LTD. et al.) 23 July 2021 (2021-07-23) entire document | 1-30 |
| A | CN 112118615 A (HUAWEI TECHNOLOGIES CO., LTD.) 22 December 2020 (2020-12-22) entire document | 1-30 |
| A | US 2019261310 A1 (SONY CORP.) 22 August 2019 (2019-08-22) entire document | 1-30 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 October 2022** | **19 October 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2022/106353** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2021018531 A1 (TELEFONAKTIEBOLAGET LM ERICSSON (PUBL)) 04 February 2021 (2021-02-04)<br>      entire document | 1-30 |

Form PCT/ISA/210 (second sheet) (January 2015)

**INTERNATIONAL SEARCH REPORT**
**Information on patent family members**

International application No.
**PCT/CN2022/106353**

| Patent document cited in search report | | | Publication date (day/month/year) | Patent family member(s) | | | Publication date (day/month/year) |
|---|---|---|---|---|---|---|---|
| CN | 109474998 | A | 15 March 2019 | WO | 2019047770 | A1 | 14 March 2019 |
| CN | 111200870 | A | 26 May 2020 | WO | 2021139829 | A1 | 15 July 2021 |
| CN | 110139361 | A | 16 August 2019 | EP | 3739980 | A1 | 18 November 2020 |
| | | | | US | 2020374835 | A1 | 26 November 2020 |
| | | | | WO | 2019154090 | A1 | 15 August 2019 |
| | | | | EP | 3739980 | A4 | 17 March 2021 |
| | | | | US | 11310766 | B2 | 19 April 2022 |
| CN | 113170413 | A | 23 July 2021 | WO | 2020061933 | A1 | 02 April 2020 |
| | | | | IN | 202147018716 | A | 30 April 2021 |
| | | | | EP | 3858007 | A1 | 04 August 2021 |
| | | | | US | 2021337507 | A1 | 28 October 2021 |
| | | | | EP | 3858007 | A4 | 08 June 2022 |
| CN | 112118615 | A | 22 December 2020 | WO | 2020253581 | A1 | 24 December 2020 |
| | | | | CN | 112118615 | B | 25 February 2022 |
| | | | | EP | 3975635 | A1 | 30 March 2022 |
| | | | | US | 2022110090 | A1 | 07 April 2022 |
| US | 2019261310 | A1 | 22 August 2019 | WO | 2017076624 | A1 | 11 May 2017 |
| | | | | EP | 3360379 | A1 | 15 August 2018 |
| | | | | US | 10813077 | B2 | 20 October 2020 |
| WO | 2021018531 | A1 | 04 February 2021 | EP | 4008140 | A1 | 08 June 2022 |
| | | | | US | 2022279479 | A1 | 01 September 2022 |
| | | | | CN | 114128367 | A | 01 March 2022 |

Form PCT/ISA/210 (patent family annex) (January 2015)

**REFERENCES CITED IN THE DESCRIPTION**

**Patent documents cited in the description**

- CN 202110876785